# EUROPÄISCHE PATENTSCHRIFT

(11) **EP 1 651 746 B1**
(45) Veröffentlichungstag und Bekanntmachung des Hinweises auf die Patenterteilung: **22.11.2006**
(21) Anmeldenummer: 04763580.0
(22) Anmeldetag: 29.07.2004
(51) Int. Cl.: C11D 17/00, C11D 17/04, C11D 3/37

(54) **WASCH- ODER REINIGUNGSMITTEL**
DETERGENTS OR CLEANING AGENTS
DETERGENT

(30) Priorität: 08.08.2003 DE 10336796
(43) Veröffentlichungstag der Anmeldung: 03.05.2006
(73) Patentinhaber: Henkel Kommanditgesellschaft auf Aktien, 40589 Düsseldorf (DE)
(72) Erfinder: BARTHEL, Wolfgang, 40764 Langenfeld (DE); BURG, Birgit, 46519 Alpen (DE); FILECCIA, Salvatore, 46040 Oberhausen (DE); DÜFFELS, Arno, 40479 Düsseldorf (DE); JEKEL, Maren, E-0803 Barcelona (ES); TIMMANN, Ulf, Arno, 50825 Köln (DE); NITSCH, Christian, 40591 Düsseldorf (DE)
(86) Internationale Anmeldenummer: PCT/EP2004/008472
(87) Internationale Veröffentlichungsnummer: WO 2005/017088

(56) Entgegenhaltungen:
- WO-A-01/60965
- WO-A-03/010256
- US-A- 4 320 211
- US-A- 4 745 021
- US-A- 5 866 656

## Beschreibung

Gegenstand der vorliegenden Anmeldung sind Wasch- oder Reinigungsmittel. Die vorliegenden Anmeldung betrifft insbesondere Wasch- oder Reinigungsmittel, welche Klebungen aufweisen.

Wasch- oder Reinigungsmittel sind heute für den Verbraucher in vielfältigen Angebotsformen erhältlich. Neben Waschpulvern und -granulaten umfaßt dieses Angebot beispielsweise auch Reinigungsmittelkonzentrate in Form extrudierter oder tablettierter Zusammensetzungen. Diese festen, konzentrierten bzw. verdichteten Angebotsformen zeichnen sich durch ein verringertes Volumen pro Dosiereinheit aus und senken damit die Kosten für Verpackung und Transport. Insbesondere die Wasch- oder Reinigungsmitteltabletten erfüllen dabei zusätzlich den Wunsch des Verbrauchers nach einfacher Dosierung.

Als Alternative zu den zuvor beschriebenen partikulären oder kompaktierten Wasch- oder Reinigungsmitteln werden in den letzten Jahren zunehmend feste oder flüssige Wasch- oder Reinigungsmittel beschrieben, welche eine wasserlösliche oder wasserdispergierbare Verpackung aufweisen. Diese Mittel zeichnen sich wie die Tabletten durch eine vereinfachte Dosierung aus, da sie zusammen mit der Umverpackung in die Waschmaschine oder die Geschirrspülmaschine dosiert werden können, andererseits ermöglichen sie aber gleichzeitig auch die Konfektionierung flüssiger oder pulverförmiger Wasch- oder Reinigungsmittel, welche sich gegenüber den Kompaktaten durch eine bessere Auflösung und schnellere Wirksamkeit auszeichnen.

Sowohl bei der Herstellung der beschriebenen Kompaktate als auch bei der Herstellung der in wasserlöslichen Verpackungen konfektionierten Reinigungsmittel werden Haft- oder Klebemittel eingesetzt. Derartige Klebemittel dienen beispielsweise der Verklebung von Kernen in Muldentabletten oder der Versiegelung wasserlöslicher oder wasserdispergierbarer Verpackungen.

Insbesondere im Bereich der Versiegelung wasserlöslicher Verpackungen offenbart die Patentliteratur in jüngster Zeit eine Reihe unterschiedlicher Lösungen. So beschreibt die internationale Anmeldung **WO 03/08486 A2** (Procter&Gamble) einen Siegelprozeß für wasserlösliche Filme unter Einsatz eines Lösungsmittels mit einer Viskosität zwischen 1,5 und 15000 mPas. Den Zusatz von Weichmachern bei der Versiegelung wasserlöslicher Filme mit Hilfe von Lösungsmittel offenbart die internationale Anmeldung **WO 03/08513 A2** (Procter&Gamble).

Aufgabe der vorliegenden Anmeldung war es, Wasch- oder Reinigungsmittel mit Klebungen bereitzustellen, deren Klebungen unter den üblichen Bedingungen der Herstellung, Verpackung Lagerung und des Transportes stabil sind, sich jedoch in wässriger Umgebung zuverlässig in kurzer Zeit auflösen. Weiterhin sollten die Wasch- oder Reinigungsmittel mit Klebungen durch schnelllaufende Verarbeitungsprozesse herstellbar sein. Der Einsatz organischer Lösungsmittel sollte insbesondere aus sicherheitstechnischen Gründen vermieden werden.

Es wurde nun gefunden, daß sich bestimmte wasserlösliche Schmelzklebstoffe in hervorragender Weise zur Lösung dieser Aufgaben eignen.

Ein erster Gegenstand der vorliegenden Anmeldung sind daher Wasch- oder Reinigungsmittelportionen, umfassend einen wasserlöslichen Schmelzklebstoff, welcher
a) 40 bis 70 Gew.-% mindestens eines Homo- oder Copolymeren mit freien Carbonsäuregruppen auf Basis ethylenisch ungesättigter Monomere (Komponente A),
b) 15 bis 45 Gew.-% mindestens eines wasserlöslichen oder wasserdispergierbaren Polyurethans (Komponente B) und
c) 10 bis 45 Gew.-% mindestens einer anorganischen oder organischen Base (Komponente C),
d) sowie 0 bis 20 Gew.-% weiterer Zusatzstoffe enthält.

Als Wasch- oder Reinigungsmittelportionen gelten im Rahmen der vorliegenden Anmeldung Zusammensetzungen, beispielsweise in Form vorkonfektionierter Dosiereinheiten wie Tabletten oder Beuteln, welche zur Reinigung von Textilien, Geschirr oder harten Oberflächen geeignet sind. Der Begriff "Wasch- oder Reinigungsmittel" umfaßt auch die wasserlöslichen oder wasserdispergierbaren Verpackungen oder Verpackungsbestandteile dieser Wasch- oder Reinigungsmittel. Wasserunlösliche Umverpackungen sind von dem Begriff "Wasch- oder Reinigungsmittel" nicht umfaßt.

Schmelzklebstoffe sind bei Raumtemperatur fest sowie wenigstens weitgehend wasser- und lösemittelfrei, d.h. die Menge Wasser/Lösemittel liegt unter 5 Gew.%. Schmelzklebstoffe werden aus der Schmelze auf die zu verbindenden Substrate aufgetragen und binden beim Abkühlen durch Verfestigung ab.

Schmelzklebstoffe finden eine breite industrielle Anwendung in der Verpackungs- und Papierindustrie zum Versiegeln und Verschließen von Kartons. Die Anforderungen, welche die Schmelzklebstoffe in diesem Industriezweig erfüllen müssen, sind vielfältig: So müssen die Schmelzklebstoffe eine mittlere bis lange offene Zeit (definiert als Zeitspanne zwischen Klebstoffauftrag und dem Fixieren der Fügeteile) besitzen, aber nach Fixierung der Fügeteile schnell genug abbinden, um eine qualitätsgerechte Klebung, insbesondere auf schnell laufenden Verpackungs-, Papierverarbeitungs- oder Etikettiermaschinen zu gewährleisten. Neben der Abbindegeschwindigkeit ist die Viskosität ein weiteres wichtiges Kriterium für die Auswahl des Schmelzklebstoffes. Für die maschinelle Verarbeitung, speziell für einen gleichmäßigen Schmelzklebstoff-Auftrag, soll die Viskosität bei entsprechender Applikationstemperatur ausreichend niedrig sein. Für Verklebungen von Verpackungen im Tiefkühlbereich, wo das verpackte Gut bei Temperaturen bis - 35°C gelagert wird, soll eine entsprechende Kälteflexibilität vorhanden sein. Das heißt, in der Kälte soll eine hohe Festigkeit der Klebe-Bindung bestehen und der Klebstoff soll nicht verspröden oder brechen. Andererseits werden häufig warm oder heiß abgefertigte Lebensmittel oder Getränke verpackt, so das hier eine entsprechend hohe Standfestigkeit des Klebstoffes gefordert ist. Unter ausreichend hoher Standfestigkeit ist zu verstehen, daß der Klebstoff unter Einwirkung erhöhter Temperatur nicht erweicht oder fließt und sich dadurch die Verklebung löst und/oder die verklebten Teile sich gegeneinander verschieben. Weiterhin ist insbesondere für die Lebensmittelindustrie gefordert, möglichst geruchsfreie oder geruchsarme Schmelzklebstoffe bereit zu stellen. Komponenten, die in entsprechenden Schmelzklebstoffen eingesetzt werden, müssen über eine Lebensmittelzulassung verfügen. Zu berücksichtigen ist femer, daß die unterschiedlichsten Werkstoffe miteinander verklebt werden, wie Glas, Kunststoffe, Faserstoffe (Papier, Pappe, polyolefinbeschichtete Kartons) oder Metalle und vieles mehr. Zu diesen unterschiedlichen Werkstoffen muß eine ausreichende Adhäsion des Schmelzklebstoffes vorhanden sein.

Basispolymere bestimmen im wesentlichen die für die Schmelzklebstoffe wichtigen Eigenschaften wie Haftung, Festigkeit und Temperaturverhalten.

Als Basispolymere werden in Schmelzklebstoffen üblicherweise folgende Polymere eingesetzt:
Thermoplastische Polymere wie Block-Copolymere, z.B. Styrol-Butadien, Styrol-Butadien-Styrol, Styrol-Isopren-Styrol, Styrol-Ethylen-Butylen-Styrol, Styrol-Ethylen-Propylen-Styrol; EthylenVinylacetat-Polymere, andere Ethylen-Ester und Copolymere, z.B. Ethylen- mit Acrylat, Ethylen-n-Butyl-Acrylat und Ethylen-Acrylsäure; Polyolefine wie Polyethylen und Polypropylen, beispielsweise amorphe Propylen-α-Olefine (APAO); Polyvinylacetat (PVAc) und PVAc-Copolymere, Polyacrylate, Polyamide, Polyester, Polyvinylalkohole (PVA) und PVA-Copolymere, Polyurethane, Polystyrole, Polyepoxide, Copolymere von Vinyl-Monomeren und Polyalkylenoxid-Polymere, Aldehyde, die Harze enthalten wie Phenol-Aldehyd, Harnstoff-Aldehyd, Melanin-Aldehyd und dergleichen.

Die erfindungsgemäßen Schmelzklebstoffe enthalten als Bestandteile
a) 40 bis 70 Gew.-% mindestens eines Homo- oder Copolymeren mit freien Carbonsäuregruppen auf Basis ethylenisch ungesättigter Monomere (Komponente A),
b) 15 bis 45 Gew.-% mindestens eines wasserlöslichen oder wasserdispergierbaren Polyurethans (Komponente B) und
c) 10 bis 45 Gew.-% mindestens einer anorganischen oder organischen Base (Komponente C),
d) sowie 0 bis 20 Gew.-% weiterer Zusatzstoffe.

In einer bevorzugten Ausführungsform werden die Gewichtsanteile der Komponenten A, B und C sowie der weiterer Zusatzstoffe so gewählt, dass die Summe dieser vier Komponenten 100 Gew.-% ergibt. Diese bevorzugte Ausführungsform, nach der die Summe der Gewichtsanteile der Komponenten A, B und C sowie der weiteren Zusatzstoffe 100 Gew.-% ergibt, gilt dabei nicht nur für die erfindungsgemäßen Mittel sondern zusätzlich auf für die nachfolgend beschriebenen Verfahren und Verwendungen.

Die im Rahmen der Erfindung einzusetzenden Homo- oder Copolymeren mit freien Carbonsäuregruppen auf Basis ethylenisch ungesättigter Monomere (Komponente A) sind erhältlich durch Homo- oder Copolymerisation von ethylenisch ungesättigten Monomeren oder Oligomeren, die mindestens eine Carboxylgruppe pro Molekül aufweisen, wie sie beispielsweise zur Synthese von Basispolymeren eingesetzt werden. Bevorzugt werden als Komponente A Polymere eingesetzt, die durch Copolymerisation von ethylenisch ungesättigten Monomeren oder Oligomeren, die keine Carboxylgruppe pro Molekül aufweisen, mit ethylenisch ungesättigten aliphatischen Copolymeren, die mindestens eine Carboxylgruppe pro Molekül aufweisen, erhältlich sind. Als ethylenisch ungesättigtes Monomer, welches keine Carboxylgruppe aufweist, wird insbesondere Vinylacetat bevorzugt. Beispiele für copolymerisierbare ethylenisch ungesättigte aliphatische Comonomere mit mindestens einer Carboxylgruppe sind Acrylsäure, Methacrylsäure, Crotonsäure, Isocrotonsäure, Tiglinsäure, Maleinsäure, Fumarsäure, Citaconsäure, Mesaconsäure, Itaconsäure, und Acomitsäure.

Weitere Monomere können in der Copolymerisationsreaktion verwendet werden. Beispiele weiterer Comonomere sind Ethylen, Propylen, Butylen, 1-Hexen sowie Anhydride oder Ester der bereits erwähnten ethylenisch ungesättigten Copolymere mit mindestens einer Carboxylgruppe pro Molekül. Das Copolymere (Komponente A) besitzt bevorzugt eine Säurezahl von 10 bis 200 mg, insbesondere bevorzugt 20 bis 150 mg KOH/g (gemessen nach ASTM D 974). Der erfindungsgemäße wasserlösliche Schmelzklebstoff enthält 40 bis 70 Gew.-%, bevorzugt 45 bis 65 Gew.-% und insbesondere bevorzugt 50 bis 60 Gew.-% von Komponente A.

In einer besonders bevorzugten Ausführungsform der Erfindung enthält der wasserlösliche Schmelzklebstoff als Komponente A ein Vinylacetat-Crotonsäure-Copolymer mit einer Säurezahl von 10 bis 200 mg KOH/g, bevorzugt 20 bis 150 mg und insbesondere bevorzugt 25 bis 100 mg KOH/g (gemessen nach ASTM D 974). Der Erweichungspunkt des Vinylacetat-Crotonsäure-Copolymeren liegt bei 80 bis 130°C, bevorzugt 90 bis 120°C (Ring-Kugel-Methode, DIN 52011). Die Molmasse (Mₙ) liegt zwischen 10.000 bis 60.000, bevorzugt 20.000 bis 50.000.

Auf polymere Verbindungen bezogene Molekulargewichtsangaben beziehen sich, soweit nicht anders angegeben ist, auf das Zahlenmittel des Molekulargewichts (Mₙ). Alle Molekulargewichtsangaben beziehen sich, soweit nicht anders angegeben ist, auf Werte, wie sie durch Gelpermeationschromatographie (GPC) erhältlich sind.

Handelsübliche Vinylacetat-Crotonsäure-Copolymere sind beispielsweise von der Firma Synthomer mit der Bezeichnung Synthomer MCT 5 oder von der Firma Wacker aus der Reihe Vinnapas^{®} erhältlich.

Als Komponente B erhält der erfindungsgemäße wasserlösliche Schmelzklebstoff 15 bis 45 Gew.-%, bevorzugt 20 bis 40 Gew.-% und insbesondere bevorzugt 25 bis 35 Gew.-% mindestens eines wasserlöslichen oder wasserdispergierbaren Polyurethans.

Polyurethane, wie sie im Rahmen der vorliegenden Erfindung als Komponente B einsetzbar sind, werden üblicherweise durch Umsetzung von mindestens einem Polyisocyanat, vorzugsweise einem Diisocyanat, und einer Polyolkomponente, die vorzugsweise überwiegend aus Diolen besteht, hergestellt. Die Polyolkomponente kann dabei nur ein Polyol enthalten, es kann jedoch auch ein Gemisch aus zwei oder mehr verschiedenen Polyolen als Polyolkomponente eingesetzt werden. Als Polyolkomponente oder zumindest als Bestandteil der Polyolkomponente sind beispielsweise Polyalkylenoxide, insbesondere Polyethylenoxid, besonders geeignet.

Der Begriff "ionisch" bedeutet, daß das Polyurethan ionische oder zumindest im Rahmen einer Säure-Base Reaktion ionisierbare Gruppen als Löslichkeitsvermittler aufweist, beispielsweise Carboxylat-, Sulfonat, Phosphonat- oder Ammonium-Gruppen.

Der Begriff "nichtionisch" bedeutet entsprechend, daß das Polyurethan keine ionischen Gruppen als emulgierende Gruppen aufweist, also keine Carboxylat-, Sulfonat, Phosphonat- oder Ammonium-Gruppen. Die Wasserlöslichkeit beruht vielmehr auf den hydrophilen nichtionischen Gruppen des Polyoxyethylens - [CH₂-CH₂-O-]ₙ -. Diese Struktureinheiten leiten sich insbesondere von dem bevorzugt als Polyolkomponente eingesetzten Polyethylenoxid ab. Unter Polyethylenoxid sind aber nicht nur Polyadditionsprodukte von Ethylenoxid an Wasser oder Ethylenglykol als Startmolekül zu verstehen, sondern auch Polyadditionen von Ethylenoxid an andere zweiwertige Alkohole, z. B. Butandiol, Hexandiol oder 4,4'-Dihydroxy-diphenylpropan. Es können auch Gemische aus zwei oder mehr verschiedenen Polyethylenoxiden eingesetzt werden, die sich beispielsweise im mittleren Molekulargewicht M_{w} oder Mₙ oder in beidem unterscheiden. Es können auch Copolymere von Ethylenoxid mit höheren Alkylenoxiden, z. B. mit Propylenoxid, als Polyolkomponente verwendet werden, sofern sie genügend wasserlöslich sind, d. h., mehr als etwa 3 g in etwa 100 g Wasser bei etwa 20°C über etwa 6 Monate gelöst bleiben.

Das Polyethylenoxid in der Polyolkomponente kann bis zu 10, vorzugsweise bis zu höchstens 5, insbesondere bis zu höchstens 2 Gew.-% durch andere Diole ersetzt werden, die einen hydrophoben Rest mit einer Wasserlöslichkeit von höchstens 2 g/100 g Wasser enthalten. Bei dem hydrophoben Rest handelt es sich insbesondere um aliphatische oder alicyclische Strukturen mit 2 bis 44, insbesondere 6 bis 36 C-Atomen. Die Reste können auch aromatische Strukturen enthalten. Bevorzugt sind Diole mit mindestens einer primären OH-Gruppe, insbesondere 1,2- oder α,ω-Diole. Aber auch Diole mit vicinaler Stellung der OH-Gruppen sind geeignet.

Das Polyethylenoxid in der Polyolkomponente weist vorzugsweise ein Molekulargewicht (Mₙ) von etwa 200 bis etwa 20.000 auf, insbesondere etwa 1.000 bis etwa 15.000, beispielsweise etwa 1.550, 3.000, 6.000 oder 12.000.

Ferner können bis 10, vorzugsweise 0,5 bis 5% des Polyethylenglykols durch hydrophobe homopolymere Polyalkylenglykole ersetzt werden, wobei die Alkylengruppe mehr als 2, vorzugsweise 3 oder 4 C-Atome hat. Ihre Molekulargewichte betragen insbesondere 150 bis 10.000 g/mol. Konkrete Beispiele für die hydrophoben Diole mit reinen CH-Resten und mit Ethergruppierungen sind Polypropylenglykol (PPG), Polybutylenglykol, Polytetrahydrofuran, Polybutadiendiol, hydroxylterminierte Ethylen-Butylen-Copolymere (z.B. KRATON LIQUID Polymer L-2203), hydriertes Polybutadiendiol und Alkandiole mit 4 bis 44 C-Atomen. Bevorzugte hydrophobe Diole sind Polypropylenglykol, Polyetrahydrofuran mit einem Molekulargewicht von 150 bis 10.000, insbesondere 200 bis 4.500, besonders bevorzugt 250 bis 1.000, sowie 1,10-Decandiol, 1,12-Dodecandiol, 1,12-Octadecandiol, Dimerfettsäurediol, 1,2-Octandiol, 1,2-Dodecandiol, 1,2-Hexadecandiol, 1,2-Octadecandiol, 1,2-Tetradecandiol, 4,4-Isopropylidendicyclohexanol und deren Isomerengemische, 4,8-Bis(hydroxymethyl)tricyclo[5,2,1,0^{2,6}]decane und deren Isomerengemische, 1,4:3,6-Dianhydro-D-mannitol, 1,4:3,6-Dianhydro-D-sorbitol, 1,16-Hexadecandiol, Bisphenol-A sowie deren Prop- oder Ethoxylierungsprodukte oder deren Gemische, insbesondere mit bis zu 30 EO-Einheiten, und schließlich Monofettsäureester des Glycerins mit bis zu 22 C-Atomen enthaltenden Fettsäuren, z.B. Glycerinmonoester der Behensäure, Ölsäure, Stearinsäure, Myristinsäure. Natürlich können auch Mischungen aus zwei oder mehr der genannten hydrophoben Diole eingesetzt werden.

Das Polyethylenglykol kann ferner in einem Ausmaß von 0 bis 5, insbesondere 0,2 bis 2% durch höherfunktionelle Alkohole, insbesondere durch Triole ersetzt werden, z.B. durch Glycerin, Trimethylolpropan, Triethanolamin oder deren ethoxylierte oder propoxylierte Varianten. Auch Pentaerythrit ist brauchbar. Möglich sind auch ethoxylierte oder propoxylierte Varianten von Aminen oder Aminoalkoholen, z.B. ausgehend von Ethylendiamin, Diethylentriamin, und deren höheren Homologen, beispielsweise Aminophenol, N-2-Aminoethylpiperazin.

Um besonders hochmolekulare Polyurethane zu erhalten, sollten möglichst reine Diole eingesetzt werden. Zu diesem Zweck sollte der Gehalt an Alkali- und Erdalkalimetallionen unter 500 ppm, insbesondere unter 150 ppm und vorzugsweise unter 10 ppm liegen. Außerdem sollte der Wassergehalt unter 0,5, insbesondere unter 0,1, bevorzugt unter 0,05 Gew.-% nach K. Fischer liegen.

Neben den Diolen der Polyolkomponente sind Diisocyanate wesentliche Bausteine des als Komponente B einsetzbaren Polyurethans. Dabei handelt es sich um Verbindungen der allgemeinen Struktur O=C=N-X-N=C=O, wobei X ein alipathischer, alicyclischer oder aromatischer Rest ist, vorzugsweise ein aliphatischer oder alicyclischer Rest mit 4 bis 18 C-Atomen.

Beispielsweise seien als geeignete Isocyanate 1,5-Naphthylendiisocyanat, 4,4'-Diphenylmethandiisocyanat (MDI), hydriertes MDI (H₁₂-MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanatocyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-10-diisocyanat, Hexan-1,6-diisocyanat (HDI), Dicyclohexylmethandiisocyanat, Cyclohexan-1,4-diisocyanat, Ethylen-diisocyanat, Phthalsäure-bisisocyanato-ethylester, ferner Diisocyanate mit reaktionsfähigen Halogenatomen wie 1-Chlormethylphenyl-2,4-diisocyanat, 1-Brommethylphenyl-2,6-diisocyanat oder 3,3-Bis-chlormethylether-4,4'-diphenyldiisocyanat genannt. Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere einsetzbare Diisocyanate sind beispielsweise Trimethylhexamethylendiisocyanat, 1,4-Diisocyanatobutan, 1,12-Diisocyanatododecan und Dimerfettsäurediisocyanat.

Besonders geeignet sind: Tetramethylen-, Hexamethylen-, Undecan-, Dodecamethylen-, 2,2,4-Trimethylhexan-, 1,3-Cyclohexan-, 1,4-Cyclohexan-, 1,3- bzw. 1,4-Tetramethylxylol-, Isophoron-, 4,4-Dicyclohexylmethan- und Lysinester-di-isocyanat. Ganz besonders bevorzugt ist das Tetramethylxylylendiisocyanat (TMXDI), insbesondere das von der Fa. Cyanamid erhältliche m-TMXDI.

Zur weiteren Erhöhung des Molekulargewichts kann beispielsweise auf bekannte Weise eine Kettenverlängerung vorgenommen werden. Hierzu werden zunächst Präpolymere mit überschüssigem Diisocyanat hergestellt, die dann anschließend mit kurzkettigen Aminoalkoholen, Diolen, Diaminen oder mit Wasser unter Erhöhung des Molekulargewichts verlängert werden. Hierzu werden zunächst Präpolymere mit überschüssigem Diisocyanat hergestellt, die dann anschließend mit kurzkettigen Diolen oder Diaminen oder mit Wasser verlängert werden. Als Kettenverlängerer seien konkret genannt:
- gesättigte und ungesättigte Glykole wie Ethylenglykol oder Kondensate des Ethylenglykols, Butandiol-1,3, Butandiol-1,4, 2-Buten-1,4-diol, 2-Butin-1,4-diol, Propandiol-1,2, Propandiol-1,3, Neopentylglykol, Hexandiol, Bis-hydroxymethylcyclohexan, Dioxyethoxyhydrochinon, Terephthalsäurebisglykolester, Bernsteinsäure-di-2-hydroxyethylamid, Bernsteinsäuredi-N-methyl-(2-hydroxyethyl)amid, 1,4-Di(2-hydroxymethylmercapto)-2,3,5,6-tetrachlorbenzol, 2-Methylen-propandiol-(1,3), 2-Methylpropandiol-(1,3), 3-Pyrrolidino-1,2-propandiol, 2-Methylenpentandiol-2,4, 3-Alkoxy-1,2-propandiol, 2-Ethylhexan-1,3-diol, 2,2-Dimethylpropandiol-1,3, 1,5-Pentandiol, 2,5-Dimethyl-2,5-hexandiol, 3-Phenoxy-1,2-propandiol, 3-Benzyloxy-1,2-propandiol, 2,3-Dimethyl-2,3-butandiol, 3-(4-Methoxyphenoxy)-1,2-propandiol und Hydroxymethylbenzylalkohol;
- aliphatische, cycloaliphatische und aromatische Diamine wie Ethylendiamin,
- Hexamethylendiamin, 1,4-Cyclohexylendiamin, Piperazin, N-Methyl-propylendiamin, Diaminodiphenylsulfon, Diaminodiphenylether, Diaminodiphenyldimethylmethan, 2,4-Diamino-6-phenyltriazin, Isophorondiamin, Dimerfettsäurediamin, Diaminodiphenylmethan oder die Isomeren des Phenylendiamins;
- weiterhin auch Carbohydrazide oder Hydrazide von Dicarbonsäuren;
- Aminoalkohole wie Ethanolamin, Propanolamin, Butanolamin, N-Methyl-ethanolamin, N-Methylisopropanolamin, Diethanolamin, Triethanolamin sowie höhere Di- oder Tri(alkanolamine);
- aliphatische, cycloaliphatische, aromatische und heterocyclische Mono- und Diaminocarbonsäuren wie Glycin, 1- und 2-Alanin, 6-Aminocapronsäure, 4-Aminobuttersäure, die isomeren Mono- und Diaminobenzoesäuren sowie die isomeren Mono- und Diaminonaphthoesäuren.

Vorzugsweise wird das Polyurethan jedoch in einem einstufigen Verfahren hergestellt. Dabei werden beispielsweise zunächst alle Ausgangsstoffe in Gegenwart eines organischen Lösemittels bei einem Wassergehalt von weniger als 0,5 Gew.-% gemischt. Die Mischung wird für ca. 1 bis 30 Stunden auf 60 bis 200°C, insbesondere auf 80 bis 180°C und vorzugsweise auf 100 bis 150°C erhitzt.

Die Reaktionszeit kann durch Anwesenheit von Katalysatoren verkürzt werden. Insbesondere sind tertiäre Amine geeignet, z.B. Triethylamin, 1,4-Diazabicyclo[2,2,2]octan (= DABCO) Dimethylbenzylamin, Bis-dimethylaminoethylether und Bis-Methylaminomethylphenol. Besonders geeignet sind 1-Methyl-imidazol, 2-Methyl-1-vinylimidazol, 1-Allylimidazol, 1-Phenylimidazol, 1,2,4,5-Tetramethylimidazol, 1-(3-Aminopropyl)imidazol, Pyrimidazol, 4-Dimethylamino-pyridin, 4-Pyrrolidinopyridin, 4-Morpholino-pyridin, 4-Methylpyridin.

Es können auch zinnorganische Verbindungen als Katalysatoren eingesetzt werden. Darunter werden Verbindungen verstanden, die sowohl Zinn als auch einen organischen Rest enthalten, insbesondere Verbindungen, die eine oder mehrere Sn-C-Bindungen enthalten. Zu den zinnorganischen Verbindungen im weiteren Sinne zählen z.B. Salze wie Zinnoctoat und Zinnstearat. Zu den Zinnverbindungen im engeren Sinne gehören vor allem Verbindungen des vierwertigen Zinns der allgemeinen Formel Rₙ₊₁SnX₃₋ₙ, wobei n für eine Zahl von 0 bis 2 steht, R für eine Alkylgruppe oder eine Arylgruppe oder beides steht und X schließlich für eine Sauerstoff-, Schwefel- oder Stickstoff-Verbindung oder ein Gemisch aus zwei oder mehr davon steht. Zweckmäßigerweise enthält R mindestens 4 C-Atome, insbesondere mindestens 8. Die Obergrenze liegt in der Regel bei 12 C-Atomen. Vorzugsweise ist X eine Sauerstoffverbindung, also ein zinnorganische Oxid, Hydroxid, Carboxylat oder ein Ester einer anorganischen Säure. X kann aber auch eine Schwefelverbindung sein, also ein zinnorganisches Sulfid, Thiolat oder ein Thiosäureester. Bei den Sn-S-Verbindungen sind vor allem Thioglykolsäureester geeignet, z.B. Verbindungen mit folgenden Resten:

-S-CH₂-CH₂-CO-O-(CH₂)₁₀-CH₃ oder

-S-CH₂-CH₂-CO-O-CH₂-CH(C₂H₅)-CH₂-CH₂-CH₂-CH₃.

Derartige Verbindungen erfüllen eine weitere Auswahlregel: Das Molekulargewicht der zinnorganischen Verbindung soll in einer bevorzugten Ausführungsform der Erfindung über 250, insbesondere über 600 liegen.

Eine weitere bevorzugte Verbindungsklasse stellen die Dialkyl-Zinn-(IV)-Carboxylate dar (X=O-CO-R¹). Die Carbonsäuren haben 2, vorzugsweise wenigstens 10, insbesondere 14 bis 32 C-Atome. Es können auch Dicarbonsäuren eingesetzt werden. Als Säuren sind beispielsweise Adipinsäure, Maleinsäure, Fumarsäure, Terephthalsäure, Phenylessigsäure, Benzoesäure, Essigsäure, Propionsäure sowie insbesondere Capryl-, Caprin-, Laurin-, Myristin-, Palmitin- und Stearinsäure geeignet. Besonders geeignet sind beispielsweise Dibutylzinn-diacetat und -dilaurat sowie Dioctylzinn-diacetat und -dilaurat.

Auch Zinnoxide und -sulfide sowie -thiolate sind im Rahmen der vorliegenden Erfindung geeignet. Konkrete Verbindungen sind: Bis(tributylzinn)oxid, Dibutylzinndidodecylthiolat, Dioctylzinndioctylhiolat, Dibutylzinn-bis(thioglykolsäure-2-ethyl-hexylester), Octylzinn-tris-(thioglykolsäure-2-ethyl-hexylester), Dioctylzinn-bis(thioethylenglykol-2-ethylhexoat), Dibutylzinn-bis(thioethylenglykollaurat), Dibutylzinnsulfid, Dioctylzinnsulfid, Bis(tributylzinn)sulfid, Dibutylzinn-bis(thioglykolsäure-2-ethylhexylester), Dioctylzinn-bis(thioethylenglykol-2-ethylhexoat), Trioctylzinnthioethylenglykol-2-ethylhexoat sowie Dioctylzinn-bis(thiolatoessigsäure-2-ethylyhexylester), Bis(S,S-methoxycarbonyl ethyl)zinn-bis(thiolatoessigsäure-2-ethylhexylester), Bis(S,S-acetylethyl)zinn-bis(thiolatoessigsäure-2-ethyl-hexylester), Zinn(II)octylhiolat und Zinn(II)-thioethylenglykol-2-ethylhexoat.

Außerdem seien noch genannt: Dibutylzinndiethylat, Dihexylzinndihexylat, Dibutylzinndiacetylacetonat, Dibutylzinndiethylacetylacetat, Bis(butyldichlorzinn)oxid, Bis(dibutylchlorzinn)sulfid, Zinn(II)phenolat, Zinn(II)-acetylacetonat, sowie weitere α-Dicarbonylverbindungen wie Acetylaceton, Dibenzoylmethan, Benzoylaceton, Acetessigsäureethylester, Acetessigsäure-n-propylester, α,α'-Diphenylacetessigsäureethylester und Dehydroacetessigsäure.

Der Katalysator wird vorzugsweise dem Polyol zugesetzt. Seine Menge richtet sich nach seiner Aktivität und den Reaktionsbedingungen. Sie liegt vorzugsweise im Bereich von 0,001 bis 0,5 Gew.-%, bezogen auf das Polyol.

Vorzugsweise wird jedoch ohne Katalysator gearbeitet. Auch das Lösemittel wird zweckmäßigerweise weggelassen. Unter "Lösemitteln" werden im Rahmen des vorliegenden Textes inerte organische flüssige Stoffe mit einem Siedepunkt von weniger als 200°C bei Normaldruck (1 bar) verstanden.

Die Umsetzung wird vorzugsweise so vorgenommen, daß das Verhältnis von OH-Gruppen in der Polyolkomponente zu NCO-Gruppen im Polyisocyanat etwa 1,0 bis etwa 2,0, insbesondere etwa 1,05 bis 1,8, beispielsweise etwa 1,1 bis 1,7 oder etwa 1,3 bis 1,6 beträgt.

Eine Möglichkeit zur Einführung von ionenbildenden Strukturelementen ist die Reaktion von OHterminierten Polyurethanoligomeren mit Dicarbonsäureanhydriden. Diese können insgesamt 2 bis 44, vorzugsweise 2 bis 12 C-Atome zwischen den Bisacylgruppen wie Alkylen-, Alkenylen- oder Arylen-Gruppierung enthalten. Beispielsweise sind Bernsteinsäureanhydrid, Glutarsäureanhydrid, 1,2,3,6-Tetrahydrophthalsäureanhydrid und dessen Isomere, Phthalsäureanhydrid, Trimellithsäureanhydrid, 7-Oxabicyclo[2,2,1]hept-5-en-2,3-dicarbonsäureanhydrid, 5-Norbornen-2,3-dicarbonsäureanhydrid und deren Isomere, Diglykolsäureanhydrid, Maleinsäureanhydrid, Dimethylmaleinsäureanhydrid, Citraconsäureanhydrid, Itaconsäureanhydrid, Alkenylbernsteinsäureanhydride, vorzugsweise solche deren Alkenylgruppen mehr als 2 C-Atome, insbesondere mehr als 5, besonders bevorzugt mehr als 7 C-Atome besitzen, geeignet. Konkret genannt seien: n-Octenylbernsteinsäureanhydrid, n-Dodecenylbernsteinsäureanhydrid, Tetrapropenylbernsteinsäureanhydrid, n-Hexadecenylbernsteinsäureanhydrid und n-Octadenylbernsteinsäureanhydrid. Der Alkenylrest kann linear oder verzweigt aufgebaut sein. Darüber hinaus können auch Mischungen von Alkenylgruppen mit verschiedener Anzahl von C-Atomen vorkommen. Auch Gemische mehrerer Anhydride sind möglich, bevorzugt sind jedoch cyclische Anhydride.

Es ist jedoch auch möglich, einen molaren Überschuß an Isocyanaten einzusetzen, wobei NCOterminierte Oligomere entstehen.

Im allgemeinen sind zwar NCO-Gruppen im Endprodukt unerwünscht. Sie können jedoch verwendet werden, um z.B. hydrophobe oder ionische Strukturelemente einzuführen.

Hydrophobe Strukturelemente können beispielsweise durch Reaktion von NCO-terminierten Oligomeren mit Monoolen oder monofunktionellen Aminen mit ≥ 2 C-Atomen, insbesondere ≥ 6, ≥ 10 oder ≥ 16 C-Atomen erhalten werden. Konkret seien genannt: Poly-Ethylen/Butylen mit 1 OH-Gruppe, z.B. mit einem OH-Äquivalentgewicht von 3600 (Kraton L 1203) sowie 1-Hexanol, 1-Heptanol, 1-Octanol, 1-Nonanol, 1-Decanol, 1-Undecanol, 10-Undecen-1-ol, 1-Dodecanol, 1-Tridecanol, 1-Tetradecanol, 1-Pentadecanol, 1-Hexadecanol, 1-Heptadecanol, 1-Octadecanol, 9-cis-Octadecen-1-ol, 9-trans-Octadecen-1-ol, 9-cis-Octadecen-1,12-diol, all-cis-9,12-Octadecadien-1-ol, all-cis-9,12,15-Octadecatrien-1-ol, 1-Nonadecanol, 1-Eicosanol, 9-cis-Eicosen-1-ol, 5,8,11,14-Eicosatetraen-1-ol, 1-Heneicosanol, 1-Docosanol, 13-cis-Docosen-1-ol, 13-trans-Docosen-1-ol. Auch die entsprechenden Fettamine sind als hydrophobierende Strukturelemente möglich.

Eine weitere Möglichkeit zur Einführung ionenbildender Strukturen ist schließlich die Reaktion NCOterminierter Oligomerer mit Hydroxycarbonsäuren oder Aminocarbonsäuren mit Alkylen-, Alkenylen-oder Arylen-Gruppierungen wie bei den Dicarbonsäureanhydriden. Als Beispiele seien genannt: Glykolsäure, Milchsäure, Capronsäure und Mandelsäure sowie Aminocapronsäure, Aminododecansäure, Glycin, Alanin und Phenylalanin.

In einer bevorzugten Ausführungsform der Erfindung wird als Komponente B ein nichtionisches Polyurethan mit einem Molekulargewicht (Mₙ) von mindestens etwa 2.000 eingesetzt, insbesondere ein nichtionischen Polyurethan, das durch Umsetzung mindestens eines Polyisocyanats mit mindestens einem Polyalkylenglykol mit einem Molekulargewicht von mindestens 1.000 erhältlich ist. Das als Komponente B eingesetzte nichtionische Polyurethan weist bei 150°C eine Viskosität von 500 bis 80.000 mPas, bevorzugt 1000 bis 60.000 mPas und insbesondere bevorzugt 2000 bis 40.000 mPas auf (gemessen nach Brookfield, Spindel 27, ASTM D 3236-88).

Die Verwendung des nichtionischen Polyurethans führt zu einer besseren Produktstabilität/-Homogenität des Klebstoffes bei der Herstellung und Applikation. Es verbessert insbesondere die rheologischen Eigenschaften der Klebstoff-Zusammensetzung. Dies zeigt sich beispielsweise beim Einsatz auf schnelllaufenden Maschinen (ca. 600 m/min): Mit den erfindungsgemäßen Schmelzklebstoffen werden bei der Applikation mit Spraysystemen gleichmäßige Klebstofffäden - und keine "spots" - erzeugt.

Bevorzugt liegt Komponente A als Salz vor. In dem erfindungsgemäßen wasserlöslichen Schmelzklebstoff dient die als Komponente C eingesetzte anorganische oder organische Base dazu, die Solubilisierung der Komponente A beim Mischen der Klebstoffzusammensetzung mit Wasser herbeizuführen. Als anorganische Basen können hierzu beispielsweise Natronlauge oder Kalilauge eingesetzt werden.

In die Gruppe der organischen Basen fallen beispielsweise aliphatische Aminoalkohle. Im Rahmen der vorliegenden Erfindung ist der Einsatz von Alkanolaminen, insbesondere Trialkanolaminen, mit 2 bis 6 C-Atome im Alkanolrest, bevorzugt, wobei die Länge der C-Kette in den Alkanolresten eines Moleküls gleich oder unterschiedlich sein kann. Insbesondere bei Verwendung von Triethanolamin wird eine klare Lösung des Schmelzklebstoffes in Wasser erhalten.

Ein im Rahmen der vorliegenden Anmeldung besonders bevorzugter Schmelzklebstoff ist dadurch gekennzeichnet, daß der wasserlösliche Schmelzklebstoff als Komponente C ein Alkanolamin, bevorzugt ein Trialkanolamin, insbesondere bevorzugt Triethanolamin, mit 2 bis 6 C-Atomen im Alkanolrest, wobei die Länge der C-Kette in den Alkanolresten eines Moleküls gleich oder unterschiedlich sein kann, enthält.

Die Menge an Komponente C im erfindungsgemäßen wasserlöslichen Schmelzklebstoff beträgt 10 bis 45 Gew.-%, bevorzugt 12 bis 35 Gew.-% und insbesondere bevorzugt 15 bis 25 Gew.-%.

Der Schmelzklebstoff kann 0 bis 20 Gew.-% weitere Zusatzstoffe enthalten, beispielsweise Basispolymere, Weichmacher, rheologische Additive, Antioxidantien, UV-Stabilisatoren, Farbstoffe oder klebrigmachende Harze (Tackifier), sowie Wasser und/oder organische Lösemittel bis maximal 3 Gew-%, sofern diese Zusatzstoffe die Wasserlöslichkeit der Schmelzklebstoffzusammensetzung nicht beeinträchtigen.

Als Tackifier werden beispielsweise Kohlenwasserstoffharze eingesetzt, insbesondere C5- oder C9-Harze oder mit C5-Harzen modifizierte C9-Harze. Weiterhin zum Einsatz als Tackifier geeignet sind Harze auf Basis reiner Kohlenwasserstoffmonomerer, beispielsweise Harze wie sie aus der Polymerisation von Mischungen aus Styrol, α-Methylstyrol und Vinyltoluol erhältlich sind. Die genannten Kohlenwasserstoffharze können teilhydriert oder vollhydriert sein.

Ebenfalls zum Einsatz als Tackifier geeignet sind Naturharze wie Balsamharz wie es beispielsweise aus Bäumen gewonnen wird oder Tallharz, das bei der Papierherstellung anfällt. Die Naturharze können in der oben genannten Form als Tackifier eingesetzt werden, es ist jedoch ebenso möglich, die genannten Harze nach Veresterung mit entsprechenden polyfunktionellen Alkoholen als Pentaerythritester, Glycerinester, Diethylenglykolester, Triethylenglykolester oder Methylester einzusetzen.

Ebenso als Tackifier geeignet sind die Polyterpenharze. Terpene fallen bei der Trennung von Harzsäuren von deren natürlichen Lösemitteln an und lassen sich zu Polyterpenharzen polymerisieren. Ebenfalls zum Einsatz als Tackifier geeignet sind die durch Phenolmodifizierung aus Polyterpenharzen gewinnbaren Terpenphenolharze. Bevorzugt sind wasserlösliche Tackifier.

Als Antioxidantien werden dem Fachmann bekannte Antioxidantien eingesetzt. Es sind Antioxidantien auf Basis von Thioethern, gehinderten und/oder multifunktionellen Phenolen, Hydroxylamin oder organischer Phosphorverbindungen, beispielsweise organischer Diphoshite. Die Antioxidantien werden einzeln oder in Mischung eingesetzt. Bevorzugt werden wasserlösliche Antioxidantien eingesetzt. Typische kommerzielle erhältliche Antioxidantien werden von der Fa. Ciba unter den Handelnamen Irganox 1010 und Irganox 1076 geliefert. Die Menge an Antioxidantien in der Gesamtzusammensetzung beträgt 0,05 bis 2,5 Gew.-%, bevorzugt 0,1 bis 2 Gew.-% und insbesondere bevorzugt 0,25 bis 1,5 Gew.-%.

Die Zusatzstoffe können einzeln oder als Gemisch aus zwei oder mehr der genannten Substanzen im Schmelzklebstoff vorliegen. Die Menge der Zusatzstoffe sollte etwa 20 Gew.-% (bezogen auf den Gesamten Schmelzklebstoff) nicht überschreiten. Geeignet sind beispielsweise Mengen von etwa 0,1 bis etwa 15 Gew.-%, oder etwa 1 bis etwa 10 Gew.-% in einer bevorzugten Ausführungsform der Erfindung werden beispielsweise etwa 2, 3, 4, 5, 7 oder 9 Gew.-% Zusatzstoffe eingesetzt.

Der erfindungsgemäße wasserlösliche Schmelzklebstoff weist eine Viskosität auf, die es erlaubt, den Schmelzklebstoff im Rahmen üblicher Auftragsverfahren einzusetzen. Vorteihafterweise weist der Schmelzklebstoff daher eine Viskosität (Brookfield Thermosell, Spindel 27, ASTM D 3236-88) auf, die in einem Bereich von 1000 mPas bis 20.000 mPas, bevorzugt von 1500 mPas bis 15000 mPas und insbesondere bevorzugt von 2000 bis 8000 mPas bei 120°C liegt.

Erfindungsgemäß bevorzugte Schmelzklebstoffe sind wasserlöslich, d.h. eine Menge von 3 g des Schmelzklebstoffes löst sich vollständig in 600g Wasser bei einem pH-Wert von 5 und 8 und einer Temperatur von 40°C. Unter "vollständigem Lösen" wird verstanden, daß sich in Wasser keine klebrigen dispers verteilten Teilchen bilden, bevorzugt bildet sich eine molekulardisperse Lösung aus.

Die Bestimmung der Wasserlöslichkeit erfindungsgemäß in Wasch- oder Reinigungsmitteln eingesetzten Schmelzklebstoffen erfolgt in Anlehnung an die Europäische Norm EN 1720. Danach werden zwei 800ml-Bechergläser mit jeweils 600g Wasser gefüllt. Das Wasser im ersten Becherglas (BG1) wird mit Phosphorsäurelösung (1 Teil Phosphorsäure auf 100 Teile Wasser) auf pH 5 (± 0,1) eingestellt. Das Wasser im zweiten Becherglas (BG2) wird mit wäßriger Natriumhydroxidlösung (1 Teil NaOH auf 100 Teile Wasser) auf pH 8 (± 0,1) eingestellt. Beide Bechergläser werden auf 40°C temperiert. Zwei Proben von jeweils 3g des Klebstoffes werden vorbereitet, in dem ein getrockneter Klebstofffilm von ca. 200g/m² in 1 cm²-Stücke geschnitten wird. Jeweils 3g der geschnittenen Klebstofffilm-Proben werden unter Rühren in die Bechergläser BG1 und BG2 eingefüllt und 90 min bei 40°C gerührt. Anschließend wird sofort^{*)} der Inhalt von BG1 und BG2 vollständig jeweils durch einen Filter mit einer Porengröße von 100 Mikrometer filtriert, wobei das Gewicht der Filter vor der Filtration bestimmt wurde. Die Filter werden im Trockenschrank bei 60°C für 2 Stunden bis zur Massenkonstanz getrocknet und anschließend gewogen. Eine Menge von 0 bis 0,5 Gew.-% Filterrückstand, bezogen auf die eingesetzte Klebstoffmenge zeigt an, daß der Klebstoff gut dispergierbar ist. (^{*)}Anmerkung: Unmittelbar vor dem Filtrationsvorgang wird visuell geprüft, ob das Dispergieren der Klebstoffstücke zu einer opaken/translucenten oder klaren Lösung geführt hat. Die visuelle Prüfung findet im Vergleich zu Wasser als Standard statt. Der Standard ist BG1 und BG2 ohne Klebstofffilmstücke. Die erfindungsgemäßen Klebstoffe zeigen visuell keinen Unterschied zum Standard, sind also klar löslich.)

Die Verarbeitung des erfindungsgemäßen wasserlöslichen Schmelzklebstoffs erfolgt in der Regel durch Auftrag des Klebstoffs mittels üblicher Auftragsverfahren in geschmolzenem Zustand. Geeignete Auftragsverfahren sind beispielsweise der Auftrag durch Walzen, Schlitzdüsen oder Sprühdüsen und der Schablonenauftrag. Insbesondere ist es bevorzugt, mindestens einen der zu verklebenden Gegenstände mit dem wasserlöslichen Schmelzklebstoff vorzubehandeln. So werden beispielsweise in den nachfolgend beschriebenen erfindungsgemäßen Verfahren mit besonderem Vorzug wasserlösliche oder wasserdispergierbare Verschlußteile, insbesondere wasserlösliche oder wasserdispergierbare Folien eingesetzt, welche eine vorgefertigte mindestens anteilsweise Beschichtung mit dem wasserlöslichen Schmelzklebstoff aufweisen. Bei Einsatz derartiger Verschlußteile, insbesondere Folien, entfällt in den entsprechenden Verfahren die Dosierung der wasserlöslichen Schmelzklebstoffe. Die haftende Verklebung der Verschlußteile, insbesondere Folien, kann in einfacher Weise durch Erhitzen dieser Verschlußteile, insbesondere Folien, erfolgen.

Der apparative Aufwand für die Durchführung der erfindungsgemäßen Verfahren wird auf diese Weise deutlich reduziert.

Wird mittels einer Walze aufgetragen, so lassen sich in der Regel nur recht hohe Flächengewichte an Klebstoff realisieren. Für den Walzenauftrag sind beispielsweise Schmelzklebstoffe geeignet, die bei etwa 120 bis etwa 150°C eine Schmelzviskosität (Brookfield Thermosell, Spindel 27, ASTM D 3236-88) von etwa 1.000 bis etwa 6.000, insbesondere etwa 2.000 bis etwa 3.000mPas aufweisen.

Wird der Schmelzklebstoff mittels einer Schlitzdüse aufgetragen, so wird dazu in der Regel ein Schmeizklebstoff eingesetzt, der bei etwa 120 bis etwa 150°C eine Schmelzviskosität (Brookfield Thermosel, Spindel 27, ASTM D 3236-88) von etwa 400 bis etwa 20.000 mPas, insbesondere etwa 600 bis etwa 5.000 mPas aufweist.

Der Auftrag des Schmelzklebstoffs kann jedoch auch mittels einer Sprühdüse realisiert werden, wobei kein vollflächiger Auftrag erzeugt wird. Es sind sowohl atomisierende als auch nichtatomisierende Sprühdüsen einsetzbar, im letzteren Fall wird auch von Spinnsprühen gesprochen. Atomisierende Sprühdüsen erfordern in der Regel einen Schmelzklebstoff, der bei etwa 120 bis etwa 150°C eine Schmelzviskosität (Brookfield Thermosell, Spindel 27, ASTM D 3236-88) von etwa 400 bis etwa 10.000, insbesondere etwa 600 bis etwa 5.000 mPas aufweist. Nichtatomisierende Sprühdüsen erfordern Schmelzklebstoffe mit einer geringfügig höheren Viskosität, um die erforderliche Fadenkohäsion zu gewährleisten. Geeignet sind beispielsweise Schmelzklebstoffe mit einer Schmelzviskosität (Brookfield Thermosell, Spindel 27) von etwa 3.000 bis etwa 10.000 mPas bei einer Temperatur von etwa 120 bis etwa 150°C.

In einer weiteren bevorzugten Ausführungsform werden Schmelzklebstoffe eingesetzt, welche eine offene Zeit von etwa 0,1 bis etwa 10 Sekunden, beispielsweise von etwa 0,2 bis etwa 8 Sekunden, besonders bevorzugt von etwa 0,5 bis etwas 6 Sekunden aufweisen.

Mit besonderem Vorzug werden Schmelzklebstoffe eingesetzt, die im wesentlichen unbegrenzt mit Wasser mischbar sind, d.h., die bei einer Konzentration von mindestens etwa 10 Gew.-% oder mehr, beispielsweise etwa 20 Gew.-% oder etwa 50 Gew.-% oder darüber, keine Mischungslücke aufweisen.

Wie eingangs ausgeführt umfaßt die Bezeichnung "Wasch- oder Reinigungsmittelportion" im Rahmen der vorliegenden Anmeldung Zusammensetzungen, beispielsweise in Form vorkonfektionierter Dosiereinheiten wie Tabletten oder Beutel, welche zur Reinigung von Textilien, Geschirr oder harten Oberflächen geeignet sind. Der Begriff "Wasch- oder Reinigungsmittel" umfaßt auch die wasserlöslichen oder wasserdispergierbaren Verpackungen oder Verpackungsbestandteile dieser Wasch- oder Reinigungsmittel. Wasserunlösliche Umverpackungen sind von dem Begriff "Wasch- oder Reinigungsmittel" nicht umfaßt. Der wasserlösliche Schmelzklebstoff dient vorzugsweise der haftenden Verbindung einzelner Bestandteile erfindungsgemäßer Wasch- oder Reinigungsmittel. Zur Gruppe der erfindungsgemäßen Wasch- oder Reinigungsmittelportionen zählen demnach beispielsweise
- haftend miteinander verklebte Wasch- oder Reinigungsmittelformkörper;
- Wasch- oder Reinigungsmittelmuldenformkörper mit einer in der Mulde befindlichen haftend verbundenen Füllung;
- (befüllte) Wasch- oder Reinigungsmittelmuldenformkörper, mit einem die Mulde wenigstens anteilsweise verschließenden, haftend verklebten wasserlöslichen oder wasserdispergierbaren Verschlußteil;
- wenigstens anteilsweise durch haftende Klebung verschlossene wasserlösliche oder wasserdispergierbare Umverpackungen für Wasch- oder Reinigungsmittel, wie tiefgezogene, spritzgegossene oder flaschengeblasene wasserlösliche oder wasserdispergierbar Aufnahmebehälter mit wasserlöslichen oder wasserdispergierbaren Verschlußteilen.

In einer weiteren bevorzugten Ausführungsform der vorliegenden Anmeldung umfaßt das Wasch- oder Reinigungsmittel mindestens einen Formkörper, vorzugsweise mindestens einen Muldenformkörper. Derartige Formkörper bzw. Muldenformkörper sind beispielsweise durch Kompaktierungsverfahren wie die Tablettierung, durch Extrusion oder durch Gießverfahren erhältlich. Besonders bevorzugt werden im Rahmen der vorliegenden Anmeldung Formkörper bzw. Muldenformkörper, welche durch Tablettierung oder durch Gießverfahren hergestellt werden.

Die Herstellung von Wasch- oder Reinigungsmitteltabletten erfolgt in dem Fachmann bekannter Weise durch Verpressung partikulärer Ausgangssubstanzen. Zur Herstellung der Tabletten wird das Vorgemisch in einer sogenannten Matrize zwischen zwei Stempeln zu einem festen Komprimat verdichtet. Dieser Vorgang, der im folgenden kurz als Tablettierung bezeichnet wird, gliedert sich in vier Abschnitte: Dosierung, Verdichtung (elastische Verformung), plastische Verformung und Ausstoßen. Die Tablettierung erfolgt dabei vorzugsweise auf so genannten Rundläuferpressen.

Bei der Tablettierung mit Rundläuferpressen hat es sich als vorteilhaft erwiesen, die Tablettierung mit möglichst geringen Gewichtschwankungen der Tablette durchzuführen. Auf diese Weise lassen sich auch die Härteschwankungen der Tablette reduzieren. Geringe Gewichtschwankungen können auf folgende Weise erzielt werden:
- Verwendung von Kunststoffeinlagen mit geringen Dickentoleranzen
- Geringe Umdrehungszahl des Rotors
- Große Füllschuhe
- Abstimmung des Füllschuhflügeldrehzahl auf die Drehzahl des Rotors
- Füllschuh mit konstanter Pulverhöhe
- Entkopplung von Füllschuh und Pulvervorlage

Zur Verminderung von Stempelanbackungen bieten sich sämtliche aus der Technik bekannte Antihaftbeschichtungen an. Besonders vorteilhaft sind Kunststoffbeschichtungen, Kunststoffeinlagen oder Kunststoffstempel. Auch drehende Stempel haben sich als vorteilhaft erwiesen, wobei nach Möglichkeit Ober- und Unterstempel drehbar ausgeführt sein sollten. Bei drehenden Stempeln kann auf eine Kunststoffeinlage in der Regel verzichtet werden. Hier sollten die Stempeloberflächen elektropoliert sein.

Im Rahmen der vorliegenden Erfindung bevorzugte Verfahren sind dadurch gekennzeichnet, daß die Verpressung bei Preßdrücken von 0,01 bis 50 kNcm⁻², vorzugsweise von 0,1 bis 40 kNcm⁻² und insbesondere von 1 bis 25 kNcm⁻² erfolgt.

Die Herstellung erfindungsgemäßer bevorzugter Gießkörper erfolgt beispielsweise durch Vergießen einer wasch- oder reinigungsaktiven Zubereitung in ein Formwerkzeug und anschließendes Entformen des erstarrten gegossenen Körpers unter Ausbildung eines (Mulden)-Formkörpers. Als "Formwerkzeug" dienen vorzugsweise Werkzeuge, welche Kavitäten aufweisen, die mit gießbaren Substanzen befüllt werden können. Derartige Werkzeuge können beispielsweise in Form einzelner Kavitäten aber auch in Form von Platten mit mehreren Kavitäten ausgebildet sein. Die Einzelkavitäten oder Kavitätenplatten sind in industriellen Verfahren vorzugsweise auf horizontal umlaufenden Förderbändern montiert, welche einen kontinuierlichen oder diskontinuierlichen Transport der Kavitäten beispielsweise entlang einer Reihe unterschiedlicher Arbeitsstationen (z.B.: Gießen, Kühlen, Füllen, Versiegeln, Entformen etc.) ermöglichen.

Die wasch- oder reinigungsaktiven Zubereitungen werden in dem bevorzugten Verfahren vergossen und erstarren nachfolgend zu einem formstabilen Körper. "Erstarren" kennzeichnet dabei im Rahmen der vorliegenden Erfindung jedweden Aushärtungsmechanismus, der aus einer umformbaren, vorzugsweise fließfähigen Mischung bzw. eines solchen Stoffes oder einer solchen Masse einen bei Raumtemperatur festen Körper liefert, ohne daß Preß- oder Kompaktierkräfte notwendig sind. "Erstarren" im Sinne der vorliegenden Erfindung ist daher beispielsweise die Aushärtung von Schmelzen von bei Raumtemperatur festen Substanzen durch Abkühlen. "Erstarrungsvorgänge" im Sinne der vorliegenden Anmeldung sind auch die Aushärtung umformbarer Massen durch zeitlich verzögerte Wasserbindung, durch Verdampfung von Lösungsmitteln, durch chemische Reaktion, Kristallisation usw. sowie die reaktive Härtung von fließfähigen Pulvergemischen zu stabilen Hohlkörpern.

Zur Verarbeitung in dem beschriebenen Verfahren eignen sich generell alle wasch- oder reinigungsaktiven Zubereitungen, die durch Gießtechniken verarbeitet werden können. Mit besonderem Vorzug werden jedoch wasch- oder reinigungsaktive Zubereitungen in Form von Dispersionen eingesetzt. In einer besonders bevorzugten Ausführungsform der vorliegenden Anmeldung handelt es sich bei der in die Aufnahmemulde des Formwerkzeugs gegossene wasch- oder reinigungsaktiven Zubereitung um eine Dispersion von Feststoffteilchen in einem Dispersionsmittel, wobei Dispersionen, welche bezogen auf ihr Gesamtgewicht
i) 10 bis 85 Gew.-% Dispersionsmittel und
ii) 15 bis 90 Gew.-% dispergierte Stoffe
enthalten, besonders bevorzugt werden.

Als Dispersion wird in dieser Anmeldung ein System aus mehreren Phasen bezeichnet von denen eine kontinuierlich (Dispersionsmittel) und mindestens eine weitere fein verteilt ist (dispergierte Stoffe). Besonders bevorzugte wasch- oder reinigungsaktive Zubereitungen sind dadurch gekennzeichnet, daß sie das Dispersionsmittel in Mengen oberhalb 11 Gew.-%, vorzugsweise oberhalb 13 Gew.-%, besonders bevorzugt oberhalb 15 Gew.-%, ganz besonders bevorzugt oberhalb 17 Gew.-% und insbesondere oberhalb 19 Gew.-%, jeweils bezogen auf das Gesamtgewicht der Dispersion, enthalten. Bevorzugt einsetzbar sind weiterhin Dispersionen, welche eine Dispersion mit einem Gewichtsanteil an Dispersionsmittel oberhalb 20 Gew.-%, vorzugsweise oberhalb 21 Gew.-% und insbesondere oberhalb 22 Gew.-%, jeweils bezogen auf das Gesamtgewicht der Dispersion, aufweisen. Der maximale Gehalt bevorzugter Dispersionen an Dispersionsmittel beträgt, bezogen auf das Gesamtgewicht der Dispersion vorzugsweise weniger als 63 Gew.-%, bevorzugt weniger als 57 Gew.-%, besonders bevorzugt weniger als 52 Gew.-%, ganz besonders bevorzugt weniger als 47 Gew.-% und insbesondere weniger als 37 Gew.-%. Im Rahmen der vorliegenden Erfindung werden insbesondere solche wasch- oder reinigungsaktiven Zubereitungen, welche bezogen auf ihr Gesamtgewicht, Dispersionsmittel in Mengen von 12 bis 62 Gew.-%, vorzugsweise von 17 bis 49 Gew.-% und insbesondere von 23 bis 38 Gew.-% enthalten.

Die eingesetzten Dispersionsmittel sind vorzugsweise wasserlöslich oder wasserdispergierbar. Die Löslichkeit dieser Dispersionsmittel beträgt dabei bei 25°C vorzugsweise mehr als 200 g/l, bevorzugt mehr als 300 g/l, besonders bevorzugt mehr als 400 g/l, ganz besonders bevorzugt zwischen 430 und 620 g/l und insbesondere zwischen 470 und 580 g/l.

Als Dispersionsmittel eignen sich im Rahmen der vorliegenden Erfindung vorzugsweise die wasserlöslichen oder wasserdispergierbaren Polymere, insbesondere die wasserlöslichen oder wasserdispergierbaren nichtionischen Polymere. Bei dem Dispersionsmittel kann es sich dabei sowohl um ein einzelnes Polymer als auch um Gemische verschiedener wasserlöslicher oder wasserdispergierbarer Polymere handeln. In einer weiteren bevorzugten Ausführungsform der vorliegenden Erfindung besteht das Dispersionsmittel bzw. mindestens 50 Gew.-% des Polymergemischs aus wasserlöslichen oder wasserdispergierbaren nichtionischen Polymeren aus der Gruppe der Polyvinylpyrrolidone, Vinylpyrrolidon/Vinylester-Copolymere, Celluloseether, Polyvinylalkohole, Polyalkylenglycole, insbesondere Polyethylenglycol und/oder Polypropylenglycol.

Besonders bevorzugt werden Dispersionen eingesetzt, welche als Dispersionsmittel ein nichtionisches Polymer, vorzugsweise ein Poly(alkylen)glykol, bevorzugt ein Poly(ethylen)glykol und/oder ein Poly(propylen)glykol enthalten, wobei der Gewichtsanteil des Poly(ethylen)glykols am Gesamtgewicht aller Dispersionsmittel vorzugsweise zwischen 10 und 90 Gew.-%, besonders bevorzugt zwischen 30 und 80 Gew.-% und insbesondere zwischen 50 und 70 Gew.% beträgt. Besonders bevorzugt sind Dispersionen, bei denen das Dispersionsmittel zu mehr als 92 Gew.-%, vorzugsweise zu mehr als 94 Gew.-%, besonders bevorzugt zu mehr als 96 Gew.-%, ganz besonders bevorzugt zu mehr als 98 Gew.-% und insbesondere zu 100 Gew.-% aus einem Poly(alkylen)glykol, vorzugsweise Poly(ethylen)glykol und/oder Poly(propylen)glykol besteht, insbesondere jedoch Poly(ethylen)glykol besteht. Dispersionsmittel, welche neben Poly(ethylen)glykol auch Poly(propylen)glykol enthalten, weisen vorzugsweise ein Verhältnis der Gewichtsanteile von Poly(ethylen)glykol zu Poly(propylen)glykol zwischen 40:1 und 1:2, vorzugsweise zwischen 20:1 und 1:1, besonders bevorzugt zwischen 10:1 und 1,5:1 und insbesondere zwischen 7:1 und 2:1 auf.

Weitere bevorzugte Dispersionsmittel sind die nichtionischen Tenside, welche sowohl allein, besonders bevorzugt jedoch in Kombination mit einem nichtionischen Polymer eingesetzt werden. Detaillierte Ausführungen zu den einsetzbaren nichtionischen Tensiden finden sich im Rahmen der Beschreibung wasch- oder reinigungsaktiver Substanzen weiter unten.

Als dispergierte Stoffe eignen sich im Rahmen der vorliegenden Anmeldung alle bei Raumtemperatur festen wasch- oder reinigungsaktiven Substanzen, insbesondere jedoch wasch- oder reinigungsaktive Substanzen aus der Gruppe der Gerüststoffe (Builder und Cobuilder), der wasch- oder reinigungsaktiven Polymere, der Bleichmittel, der Bleichaktivatoren, der Glaskorrosionsschutzmittel, der Silberschutzmittel und/oder der Enzyme. Eine genauere Beschreibung dieser Inhaltsstoffe findet sich weiter unten im Text.

Die mit Vorzug als Wasch- oder Reinigungsmittelformkörper eingesetzten Mittel zeichnen sich durch eine hohe Dichte aus. Besonders bevorzugt werden Formkörper mit einer Dichte oberhalb 1,040 g/ cm³ eingesetzt. Erfindungsgemäß bevorzugte Mittel sind dadurch gekennzeichnet, daß diese eine Dichte oberhalb 1,040 g/cm³, vorzugsweise oberhalb 1,15 g/cm³, besonders bevorzugt oberhalb 1,30 g/cm³ und insbesondere oberhalb 1,40 g/cm³ aufweisen. Diese hohe Dichte verringert nicht nur das Gesamtvolumen einer Dosiereinheit örper sondern verbessert gleichzeitig deren mechanische Stabilität. Besonders bevorzugte erfindungsgemäße Kombinationsprodukte sind daher dadurch gekennzeichnet, daß die Wasch- oder Reinigungsmittelformkörper eine Dichte zwischen 1.050 und 1.670 g/cm³, bevorzugt zwischen 1,120 und 1,610 g/cm³, besonders bevorzugt zwischen 1,210 und 1,570 g/cm³, ganz besonders bevorzugt zwischen 1,290 und 1,510 g/cm³, und insbesondere zwischen 1,340 und 1,480 g/cm³ aufweisen Die Angaben zur Dichte beziehen sich jeweils auf die Dichten der Mittel bei 20°C.

Erfindungsgemäß bevorzugt als Wasch- oder Reinigungsmittelformkörper eingesetzte Dispersionen zeichnen sich dadurch aus, daß sie sich in Wasser (40°C) in weniger als 9 Minuten, vorzugsweise weniger als 7 Minuten, bevorzugt in weniger als 6 Minuten, besonders bevorzugt in weniger als 5 Minuten und insbesondere in weniger als 4 Minuten auflösen. Zur Bestimmung der Löslichkeit werden 20 g der Dispersion in den Innenraum einer Geschirrspülmaschine (Miele G 646 PLUS) eingebracht. Es wird der Hauptspülgang eines Standardspülprogramms (45°C) gestartet. Die Bestimmung der Löslichkeit erfolgt dabei durch die Messung der Leitfähigkeit, welche über einen Leitfähigkeitssensor aufgezeichnet wird. Der Lösevorgang ist bei Erreichen des Leitfähigkeitsmaximums beendet. Im Leitfähigkeitsdiagramm entspricht dieses Maximum einem Plateau. Die Leitfähigkeitsmessung beginnt mit dem Einsetzen der Umwälzpumpe im Hauptspülgang. Die eingesetzte Wassermenge beträgt 5 Liter.

Durch Gießverfahren lassen sich sowohl kompakte Körper als auch Hohlformen herstellen. Läßt man eine vergossene wasch- oder reinigungsaktive Zubereitung in der Kavität des Formwerkzeugs erstarren, so werden einfache, kompakte Körper hergestellt. Vorteilhafter und im Rahmen der vorliegenden Anmeldung bevorzugt werden jedoch Wasch- oder Reinigungsmittelformkörper in Form gegossener Hohlkörper.

Die durch Tablettierung oder Gießen hergestellten Formkörper, insbesondere die Muldenformkörper, können jedwede geometrische Form annehmen, wobei insbesondere konkave, konvexe, bikonkave, bikonvexe, kubische, tetragonale, orthorhombische, zylindrische, sphärische, zylindersegmentartige, scheibenförmige, tetrahedrale, dodecahedrale, octahedrale, konische, pyramidale, ellipsoide, fünf-, sieben- und achteckig-prismatische sowie rhombohedrische Formen bevorzugt sind. Auch völlig irreguläre Grundflächen wie Pfeil- oder Tierformen, Bäume, Wolken usw. können realisiert werden. Weisen die erfindungsgemäßen Formkörper Ecken und Kanten auf, so sind diese vorzugsweise abgerundet. Als zusätzliche optische Differenzierung ist eine Ausführungsform mit abgerundeten Ecken und abgeschrägten ("angefassten") Kanten bevorzugt.

Selbstverständlich können die Formkörper bzw. Muldenformkörper auch mehrphasig hergestellt werden. Aus Gründen der Verfahrensökonomie haben sich hier zweischichtige Formkörper besonders bewährt.

Auch die Form der Kavität der Muldenformkörper kann in weiten Grenzen frei gewählt werden. So können die Mulden der erfindungsgemäßen Formkörper jedwede geometrische Form annehmen, wobei insbesondere konkave, konvexe, bikonkave, bikonvexe, kubische, tetragonale, orthorhombische, zylindrische, sphärische, zylindersegmentartige, scheibenförmige, tetrahedrale, dodecahedrale, octahedrale, konische, pyramidale, ellipsoide, fünf-, sieben- und achteckig-prismatische sowie rhombohedrische Formen bevorzugt sind. Auch völlig irreguläre Mulden-Grundflächen wie Pfeil- oder Tierformen, Bäume, Wolken usw. können realisiert werden. Weist der Muldenrand Ecken und Kanten auf, so sind diese vorzugsweise abgerundet. Als zusätzliche optische Differenzierung ist eine Ausführungsform mit abgerundeten Ecken und abgeschrägten ("angefasten") Kanten bevorzugt.

Die Größe der Mulde im Vergleich zum gesamten Formkörper richtet sich nach dem gewünschten Verwendungszweck der Formkörper. Unabhängig vom Verwendungszweck sind Wasch- und Reinigungsmittelformkörper bevorzugt, bei denen das Volumenverhältnis von Formkörper zu Kavität 2:1 bis 100:1, vorzugsweise 3:1 bis 80:1, besonders bevorzugt 4:1 bis 50:1 und insbesondere 5:1 bis 30:1, beträgt. Das Volumenverhältnis errechnet sich dabei aus dem Volumen des erfindungsgemäßen fertigen Formkörpers, d.h. des Formkörpers, der die Kavität aufweist und dem Füll-Volumen der Kavität. Die Differenz beider Volumina ergibt das Volumen des Formkörpers mit Kavität. In anderen Worten: weist der Formkörper beispielsweise eine orthorhombische Form mit den Seitenlängen 2, 3 und 4 cm auf und besitzt eine Mulde mit einem Volumen von 2 cm³, so beträgt das Volumen dieses "Basisformkörpers" 22 cm³. In diesem Beispiel liegt das Verhältnis der Volumina also bei 11:1. Bei Volumenverhältnissen Formkörper:Kavität unterhalb von 2:1, die erfindungsgemäß selbstverständlich auch realisierbar sind, kann die Instabilität der Wandungen ansteigen.

Ähnliche Aussagen lassen sich zu den Oberflächen anteilen machen, die der Formkörper mit der Kavität ("Muldenformkörper") bzw. die Öffnungsfläche der Kavität an der Gesamtoberfläche des Formkörpers ausmachen. Hier sind Wasch- und Reinigungsmittelformkörper bevorzugt, bei denen die Fläche der Öffnung(en) der Kavität(en) 1 bis 25 %, vorzugsweise 2 bis 20 %, besonders bevorzugt 3 bis 15 % und insbesondere 4 bis 10 % der Gesamtoberfläche des Formkörpers ausmacht. Die Gesamtoberfläche des Formkörpers entspricht hierbei wieder der Gesamtoberfläche des Formkörpers mit "hypothetisch verschlossener" Kavität, im obigen Beispiel also ungeachtet der Öffnungsfläche der Mulde 52 cm². Die Öffnung(en) der Kavität weist/weisen bei einem solchen beispielhaften Formkörper in bevorzugten Ausführungsformen der vorliegenden Erfindung also eine Fläche von 0,52 bis 13 cm², vorzugsweise von 1,04 bis 10,4 cm², besonders bevorzugt 1,56 bis 7,8 cm² und insbesondere 2,08 bis 5,2 cm² auf.

Der Boden der Mulde in dem Muldenformkörper kann plan sein. Plane Muldenböden können vollständig parallel zur Auflagefläche der Tablette verlaufen, die können aber auch geneigt sein. Es ist aber auch möglich, einen nicht-planen Muldenboden bereitzustellen, beispielsweise einen konkav gekrümmten Boden. Letzteres ist bevorzugt, da sich entsprechende Muldentabletten besser herstellen lassen. Ein Preßstempel mit herausragendem Dorn, der zur Herstellung von Muldentabletten erforderlich ist, verdrängt das teilchenförmige Vorgemisch beim Verpressen besser, wenn der Dorn nicht völlig planparallel zur Preßfläche steht, sondern ein Weggleiten von Vorgemischpartikeln aus der Druckzone zu den späteren Stegen der Mulde ermöglicht.

Die Mulde der Muldenformkörper kann mit einem Kern befüllt sein. Der Kern als Muldenfüllung kann die Öffnungsfläche der Mulde nahezu vollständig ausfüllen. Es ist aber auch möglich, daß der Kern einen deutlich kleineren Durchmesser hat als der Öffnungsdurchmesser der Mulde. Im Rahmen der vorliegenden Erfindung ist es bevorzugt, daß die horizontale maximale Querschnittsfläche des Kern das 0,2- bis 0,98-fache der Öffnungsfläche der Mulde, vorzugsweise das 0,5- bis 0,95-fache der Öffnungsfläche der Mulde und insbesondere das 0,7- bis 0,9-fache der Öffnungsfläche der Mulde ausmacht. Die auch als "Kern" bezeichnete Füllung der Mulde ist vorzugsweise ein Festkörper, welcher beispielsweise durch Gießen, Sintern, Extrusion, Kalandrieren usw. hergestellt werden kann. Bevorzugt ist jedoch, daß die Muldenfüllung eine Tablette oder ein Gießkörper ist. Besonders bevorzugt werden als Füllung Kerne eingesetzt, die eine Beschichtung (Coating), vorzugsweise eine mehrfache Beschichtung mit zwei, drei, vier, fünf, sechs oder mehr Einzelschichten aufweisen. Weitere als Füllung einsetzbare Feststoffe sind pulverförmige oder granulare Wasch- oder Reinigungsmittel.

Ein weiterer bevorzugter Gegenstand der vorliegenden Anmeldung ist daher eine Wasch- oder Reinigungsmittelportion, umfassend einen Muldenformkörper sowie einen wenigstens anteilsweise in der Mulde des Muldenformkörpers befindlichen Kern, wobei Muldenformkörper und Kern mittels eines wasserlöslichen Schmelzklebstoffs, welcher 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe enthält, haftend miteinander verbunden sind.

Wie zuvor beschrieben lassen sich die eingangs offenbarten Schmelzklebstoffe in vorteilhafter Weise in Verfahren zur Herstellung von Wasch- oder Reinigungsmittelportionen einsetzen. Gegenstand der vorliegenden Anmeldung ist daher weiterhin ein Verfahren zur Herstellung einer Wasch- oder Reinigungsmittelportion, durch Verkleben mindestens eines Bestandteils der Wasch- oder Reinigungsmittelportion mit einem wasserlöslichen Schmelzklebstoffes, welcher 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe enthält.

Bevorzugter Gegenstand der vorliegenden Anmeldung ist damit weiterhin auch ein Verfahren zur Herstellung einer Wasch- oder Reinigungsmittelportion, umfassend die Schritte
a) Herstellung eines (Mulden)-Formkörpers durch Tablettierung oder Gießen;
b) Haftende Verklebung des (Mulden)-Formkörpers mit einem weiteren Formkörper, vorzugsweise einem Kern, mittels eines wasserlöslichen Schmelzklebstoffes, welcher 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe enthält.

In einer weiteren bevorzugten Ausführungsform der vorliegenden Anmeldung umfassen die erfindungsgemäßen Wasch- oder Reinigungsmittelportionen eine wasserlösliche oder wasserdispergierbare Verpackung. Als "wasserlösliche oder wasserdispergierbare Verpackung" werden im Rahmen der vorliegenden Anmeldung insbesondere wasserlösliche oder wasserdispergierbare Folien sowie durch Spritzgießen oder Flaschenblasen hergestellte Körper aus wasserlöslichen oder wasserdispergierbaren Materialien bezeichnet. Derartige wasserlösliche oder wasserdispergierbare Folien sowie durch Spritzguß oder Flaschenblasen hergestellte Körper werden vorzugsweise als Verschlußteile zur Versiegelung der Mulden der zuvor beschriebenen Muldenformkörper eingesetzt.

Ein weiterer bevorzugter Gegenstand der vorliegenden Anmeldung ist daher eine Wasch- oder Reinigungsmittelportion, umfassend einen Muldenformkörper sowie eine die Mulde des Muldenformkörpers wenigstens anteilsweise verschließendes wasserlösliches oder wasserdispergierbares Verschlußteil, wobei Muldenformkörper und Verschlußteil mittels eines wasserlöslichen Schmelzklebstoffs, welcher 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe enthält haftend miteinander verbunden sind.

Bevorzugter Gegenstand der vorliegenden Anmeldung sind weiterhin Verfahren zur Herstellung einer Wasch- oder Reinigungsmittelportionen, umfassend die Schritte
a) Herstellung eines Muldenformkörpers durch Tablettierung oder Gießen;
b) Befüllen der Mulde des Muldenformkörpers;
c) Verschließen der Mulde durch Verkleben des Muldenformkörpers mit einem wasserlöslichen oder wasserdispergierbaren Verschlußteil mittels eines wasserlöslichen Schmelzklebstoffes, welcher 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe enthält.

Bei den zur Versiegelung der Mulden eingesetzten Folien kann es sich um einschichtige Folien, aber auch um Folienlaminate handeln. Insbesondere die Folienlaminate werden im Rahmen der vorliegenden Anmeldung mit besonderem Vorzug eingesetzt. Für die Durchführung der Versiegelung, insbesondere für die Zuführung und das Zuschneiden der als Verschlußteil eingesetzten Folien bieten sich im Rahmen der vorliegenden Anmeldung eine Reihe unterschiedlicher Verfahren an.
In einer bevorzugten Ausführungsform des erfindungsgemäßen Verfahrens wird die Siegelfolie nach dem Verschließen der Mulde zugeschnitten. Das Zuschneiden kann dabei beispielsweise durch Stanzen, Messer oder Laser erfolgen. Besonders bevorzugt ist jedoch eine Verfahrensvariante, bei der die Siegelfolie bereits vor dem Versiegeln in Form vorgefertigter Etiketten vorliegt, welche in ihrer Größe auf die Größe der Mulden der Formkörper abgestimmt sind und mittels eines Etikettenauflegers aus einem Vorrat entnommen und auf die Mulden aufgelegt werden.

In einer weiteren bevorzugten Ausführungsform der vorliegenden Anmeldung ist die Wasch- oder Reinigungsmittelportion vollständig von der wasserlöslichen oder wasserdispergierbaren Verpackung umgeben. Derartige Verpackungen sind beispielsweise durch Tiefziehen, Spritzgießen oder Flaschenblasen herstellbar. Bevorzugt werden jedoch tiefgezogene oder spritzgegossen Verpackungen.

Beim Tiefziehverfahren wird in der Regel ein erstes folienartiges Hüllmaterial nach Verbringen über eine in einer die Tiefziehebene bildenden Matrize befindlichen Aufnahmemulde und Einformen des Hüllmaterials in diese Aufnahmemulde durch Einwirkung von Druck und/oder Vakuum verformt wird. Das Hüllmaterial kann vor dabei vor oder während des Einformens durch die Einwirkung von Wärme und/oder Lösungsmittel und/oder Konditionierung durch gegenüber Umgebungsbedingungen veränderten relativen Luftfeuchten und/oder Temperaturen vorbehandelt werden. Die Druckeinwirkung kann durch zwei Teile eines Werkzeugs erfolgen, welche sich wie Positiv und Negativ zueinander verhalten und einen zwischen diese Werkzeuge verbrachten Film beim Zusammendrücken verformen. Als Druckkräfte eignet sich jedoch auch die Einwirkung von Druckluft und/oder das Eigengewicht der Folie und/oder das Eigengewicht einer auf die Oberseite der Folie verbrachten Aktivsubstanz.

Das tiefgezogenen Hüllmaterialien werden nach dem Tiefziehen vorzugsweise durch Einsatz eines Vakuums innerhalb der Aufnahmemulden und in ihrer durch den Tiefziehvorgang erzielten Raumform fixiert. Das Vakuum wird dabei vorzugsweise kontinuierlich vom Tiefziehen bis zum Befüllen bevorzugt bis zum Versiegeln und insbesondere bis zum Vereinzeln der Aufnahmekammern angelegt.

Wie bereits erwähnt, kann das Hüllmaterial vor oder während des Einformens in die Aufnahmemulden der Matrizen durch die Einwirkung von Wärme vorbehandelt werden. Das Hüllmaterial, vorzugsweise ein wasserlöslicher oder wasserdispergierbarer Polymerfilm, werden dabei für bis zu 5 Sekunden, vorzugsweise für 0.1 bis 4 Sekunden, besonders bevorzugt für 0,2 bis 3 Sekunden und insbesondere für 0,4 bis 2 Sekunden auf Temperaturen oberhalb 60°C, vorzugsweise oberhalb 80°C, besonders bevorzugt zwischen 100 und 120°C und insbesondere auf Temperaturen zwischen 105 und 115°C erwärmt. Zur Abführung dieser Wärme, insbesondere aber auch zur Abführung der durch die in die tiefgezogenen Aufnahmekammern gefüllten Mittel eingebrachten Wärme (z.B. Schmelzen), ist es bevorzugt die eingesetzten Matrizen und die in diesen Matrizen befindlichen Aufnahmemulden zu kühlen. Die Kühlung erfolgt dabei vorzugsweise auf Temperaturen unterhalb 20°C, bevorzugt unterhalb 15°C, besonders bevorzugt auf Temperaturen zwischen 2 und 14°C und insbesondere auf Temperaturen zwischen 4 und 12°C. Vorzugsweise erfolgt die Kühlung kontinuierlich vom Beginn des Tiefziehvorganges bis zur Versiegelung und Vereinzelung der Aufnahmekammern. Zur Kühlung eignen sich insbesondere Kühlflüssigkeiten, vorzugsweise Wasser, welche in speziellen Kühlleitungen innerhalb der Matrize zirkuliert werden.

Bei den Tiefziehverfahren läßt sich zwischen Verfahren, bei denen das Hüllmaterial horizontal in eine Formstation und von dort in horizontaler Weise zum Befüllen und/oder Versiegeln und/oder Vereinzeln geführt wird und Verfahren, bei denen das Hüllmaterial über eine kontinuierlich umlaufende Matrizenformwalze (gegebenenfalls optional mit einer gegenläufig geführten Patrizenformwalze, welche die ausformenden Oberstempel zu den Kavitäten der Matrizenformwalze führen) geführt wird, unterscheiden. Die zuerst genannte Verfahrensvariante des Flachbettprozesses ist dabei sowohl kontinuierlich als auch diskontinuierlich zu betreiben, die Verfahrensvariante unter Einsatz einer Formwalze erfolgt in der Regel kontinuierlich. Alle genannten Tiefziehverfahren sind zur Herstellung der erfindungsgemäß bevorzugten Mittel geeignet. Die in den Matrizen befindlichen Aufnahmemulden können "in Reihe" oder versetzt angeordnet sein.

"Spritzgießen" bezeichnet das Umformen einer Formmasse derart, daß die in einem Massezylinder für mehr als einen Spritzgießvorgang enthaltene Masse unter Wärmeeinwirkung plastisch erweicht und unter Druck durch eine Düse in den Hohlraum eines vorher geschlossenen Werkzeuges einfließt. Das Verfahren wird hauptsächlich bei nicht härtbaren Formmassen angewendet, die im Werkzeug durch Abkühlen erstarren. Der Spritzguß ist ein sehr wirtschaftliches modernes Verfahren zur Herstellung spanlos geformter Gegenstände und eignet sich besonders für die automatisierte Massenfertigung. Im praktischen Betrieb erwärmt man die thermoplastische Formmassen (Pulver, Körner, Würfel, Pasten u. a.) bis zur Verflüssigung (bis 180 °C) und spritzt sie dann unter hohem Druck (bis 140 MPa) in geschlossene, zweiteilige, das heißt aus Gesenk (früher Matrize) und Kern (früher Patrize) bestehende, vorzugsweise wassergekühlte Hohlformen, wo sie abkühlen und erstarren. Einsetzbar sind Kolben- und Schneckenspritzgußmaschinen.

Als Folienmaterial für das Tiefziehen bzw. als Formmassen in Spritzgußverfahren eignen sich wasserlösliche Polymere wie beispielsweise die oben genannten Celluloseether, Pektine, Polyethylenglycole, Polyvinylalkohole, Polyvinylpyrrolidone, Alginate, Gelatine oder Stärke.

Bevorzugt werden im Rahmen der vorliegenden Anmeldung daher weiterhin erfindungsgemäße Wasch- oder Reinigungsmittelportionen, umfassend einen tiefgezogenen oder spritzgegossenen Aufnahmebehälter aus einem wasserlöslichen oder wasserdispergierbaren Material, in diesem Aufnahmebehälter befindliche Wasch- oder Reinigungsmittel, sowie ein diesen Aufnahmebehälter verschließendes wasserlösliches oder wasserdispergierbares Verschlußteil, wobei Aufnahmebehälter und Verschlußteil mittels eines wasserlöslichen Schmelzklebstoffes, der 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe haftend miteinander verbunden sind.

Als wasserlösliche oder wasserdispergierbare Verschlußteile eignen sich dabei, wie bereits im Falle der weiter oben beschriebenen Muldentabletten, insbesondere wasserlösliche oder wasserdispergierbare Folien aber auch tiefgezogene oder spritzgegossene Körper. Mit besonderem Verzug werden die wasserlöslichen oder wasserdispergierbaren Aufnahmebehälter mit einem Verschlußteil in Form eines vorgefertigten, mit Wasch- oder Reinigungsmittelinhaltsstoffen befüllten wasserlöslichen oder wasserdispergierbaren Beutels, verschlossen.

Bevorzugter Gegenstand der vorliegenden Anmeldung ist weiterhin ein Verfahren zur Herstellung einer Wasch- oder Reinigungsmittelportion, umfassend die Schritte
a) Bereitstellung eines wasserlöslichen oder wasserdispergierbaren Aufnahmebehälters;
b) Befüllen des Aufnahmebehälters mit wasch- oder reinigungsaktiven Substanzen
c) Verschließen des Aufnahmebehälters durch haftende Verklebung des Aufnahmebehälters mit einem wasserlöslichen oder wasserdispergierbaren Verschlußteil mittels eines wasserlöslichen Schmelzklebstoffes, welcher 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe enthält.

Wie bereits weiter oben für die Verfahren zur Versiegelung gepresster oder gegossener Muldenformkörper beschrieben, werden auch für die Versiegelung der wasserlöslichen oder wasserdispergierbaren Aufnahmebehälter mit besonderem Vorzug wasserlösliche oder wasserdispergierbare Folien eingesetzt. In einer bevorzugten Ausführungsform des erfindungsgemäßen Verfahrens wird die Siegelfolie nach dem Verschließen der Mulde zugeschnitten. Das Zuschneiden kann dabei beispielsweise durch Stanzen, Messer oder Laser erfolgen. Besonders bevorzugt ist jedoch eine Verfahrensvariante, bei der die Siegelfolie bereits vor dem Versiegeln in Form vorgefertigter Etiketten vorliegt, welche in ihrer Größe auf die Größe der Mulden der Formkörper abgestimmt sind und mittels eines Etikettenauflegers aus einem Vorrat entnommen und auf die Mulden aufgelegt werden.

Die eingangs beschriebenen wasserlöslichen Schmelzklebstoffe können aus zur Verklebung oder Versiegelung von Wasch- oder Reinigungsmitteln auch zur Herstellung der für die Verpackung der Wasch- oder Reinigungsmittel besonders bevorzugten Folienlaminate eingesetzt werden. Zu diesem Zwecke werden zwei oder mehr wasserlösliche oder wasserdispergierbare Folien mittels des wasserlöslichen Schmelzklebstoffs miteinander zu Folienlaminaten verklebt. Die Schmelzklebstoffe dienen in einem solchen Verfahren als Kaschiermittel. Der eigentliche Kaschier-Vorgang kann dabei durch den Einsatz von Kalandern (Walzpressen) durch Einwirkung von Druck unterstützt werden.

Ein bevorzugter Gegenstand der vorliegenden Anmeldung sind daher weiterhin Wasch- oder Reinigungsmittel, welche Laminate aus wasserlöslichen oder wasserdispergierbaren Folien, umfassend einen wasserlöslichen Schmelzklebstoffes, enthaltend 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe aufweisen.

Ein weiterer Gegenstand der vorliegenden Anmeldung ist die Verwendung eines wasserlöslichen Schmelzklebstoffes, enthaltend 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe, bei der Herstellung von Wasch- oder Reinigungsmittelportionen, bevorzugt zur Verklebung von Wasch- oder Reinigungsmitteln.

Besonders bevorzugt ist die Verwendung eines wasserlöslichen Schmelzklebstoffes, enthaltend 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe, bei der Konfektionierung von Wasch- oder Reinigungsmitteln, insbesondere zur Verklebung von festen Wasch- oder Reinigungsmitteln miteinander, zur Verklebung von Wasch- oder Reinigungsmittelformkörpern mit wasserlöslichen oder wasserdispergierbaren Verpackungsmaterialien, insbesondere wasserlöslichen oder wasserdispergierbaren Folien, spritzgegossenen oder flaschengeblasenen Teilen, oder zur Verklebung und Versiegelung von mit Wasch- oder Reinigungsmitteln befüllten wasserlöslichen oder wasserdispergierbaren tiefgezogenen, spritzgegossenen oder flaschengeblasenen Aufnahmebehältern.

Bei den erfindungsgemäßen Wasch- oder Reinigungsmitteln handelt es sich vorzugsweise um Textilreinigungsmittel, Geschirrspülmittel oder Oberflächenreinigungsmittel. Zur Gruppe der Textilreinigungsmittel zählen dabei insbesondere die Universalwaschmittel, Color-Waschmittel, Feinwaschmittel, Textilweichspüler oder Bügelhilfsmittel. Die Gruppe der Geschirrspülmittel umfaßt die maschinellen Geschirrspülmittel und maschinelle Klarspüler ebenso wie manuelle Geschirrreinigungsmittel. Zu den Oberflächenreinigungsmittel zählen u.a. Entkalkter, Mittel zur Desinfektion oder Sterilisation von Oberflächen oder Gegenständen und Mittel zur Reinigung von Metall- oder Glasoberflächen.

Die erfindungsgemäßen Wasch- oder Reinigungsmittel enthalten eine mehrere wasch- oder reinigungsaktive Substanz(en), vorzugsweise einen oder mehrere Bestandteile aus der Gruppe der Gerüststoffe, Tenside, Polymere, Bleichmittel, Bleichaktivatoren, Enzyme, Farbstoffe, Duftstoffe, Elektrolyte, pH-Stellmittel, Parfümträger, Fluoreszenzmittel, Hydrotope, Schauminhibitoren, Silikonöle, Antiredepositionsmittel, optischen Aufheller, Vergrauungsinhibitoren, Einlaufverhinderer, Knitterschutzmittel, Farbübertragungs-inhibitoren, antimikrobiellen Wirkstoffe, Germizide, Fungizide, Antioxidantien, Korrosionsinhibitoren, Antistatika, Bügelhilfsmittel, Phobier- und lmprägniermittel, Quell- und Schiebefestmittel und/oder UV-Absorber enthalten. Diese Substanzen sollen in der Folge genauer beschrieben werden.

### Gerüststoffe

Zu den Gerüststoffe zählen im Rahmen der vorliegenden Anmeldung insbesondere die Zeolithe, Silikate, Carbonate, organische Cobuilder und -wo keine ökologischen Vorurteile gegen ihren Einsatz bestehen- auch die Phosphate.

Geeignete kristalline, schichtförmige Natriumsilikate besitzen die allgemeine Formel NaMSiₓO₂ₓ₊₁ H₂O, wobei M Natrium oder Wasserstoff bedeutet, x eine Zahl von 1,9 bis 4 und y eine Zahl von 0 bis 20 ist und bevorzugte Werte für x 2, 3 oder 4 sind. Bevorzugte kristalline Schichtsilikate der angegebenen Formel sind solche, in denen M für Natrium steht und x die Werte 2 oder 3 annimmt. Insbesondere sind sowohl β- als auch δ-Natriumdisilikate Na₂Si₂O₅ ^{.}yH₂O bevorzugt.

Einsetzbar sind auch amorphe Natriumsilikate mit einem Modul Na₂O : SiO₂ von 1:2 bis 1:3,3, vorzugsweise von 1:2 bis 1:2,8 und insbesondere von 1:2 bis 1:2,6, welche löseverzögert sind und Sekundärwascheigenschaften aufweisen. Die Löseverzögerung gegenüber herkömmlichen amorphen Natriumsilikaten kann dabei auf verschiedene Weise, beispielsweise durch Oberflächenbehandlung, Compoundierung, Kompaktierung/ Verdichtung oder durch Übertrocknung hervorgerufen worden sein. Im Rahmen dieser Erfindung wird unter dem Begriff "amorph" auch "röntgenamorph" verstanden. Dies heißt, daß die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silikatpartikel bei Elektronenbeugungsexperimenten verwaschene oder sogar scharfe Beugungsmaxima liefern. Dies ist so zu interpretieren, daß die Produkte mikrokristalline Bereiche der Größe 10 bis einige Hundert nm aufweisen, wobei Werte bis max. 50 nm und insbesondere bis max. 20 nm bevorzugt sind. Derartige sogenannte röntgenamorphe Silikate, weisen ebenfalls eine Löseverzögerung gegenüber den herkömmlichen Wassergläsern auf. Insbesondere bevorzugt sind verdichtete/kompaktierte amorphe Silikate, compoundierte amorphe Silikate und übertrocknete röntgenamorphe Silikate.

Im Rahmen der vorliegenden Erfindung ist es bevorzugt, daß diese Silikat(e), vorzugsweise Alkalisilikate, besonders bevorzugt kristalline oder amorphe Alkalidisilikate, in Wasch- oder Reinigungsmitteln in Mengen von 10 bis 60 Gew.-%, vorzugsweise von 15 bis 50 Gew.-% und insbesondere von 20 bis 40 Gew.-%, jeweils bezogen auf das Gewicht des Wasch- oder Reinigungsmittels, enthalten sind.

Werden die Silikate als Bestandteil maschineller Geschirrspülmittel eingesetzt, so enthalten diese Mittel vorzugsweise mindestens ein kristallines schichtförmiges Silikat der allgemeinen Formel NaMSiₓO₂ₓ₊₁ · y H₂O, worin M Natrium oder Wasserstoff darstellt, x eine Zahl von 1,9 bis 22, vorzugsweise von 1,9 bis 4, ist und y für eine Zahl von 0 bis 33 steht. Die kristallinen schichtförmigen Silikate der Formel NaMSiₓO₂ₓ₊₁· y H₂O werden beispielsweise von der Fa. Clariant GmbH (Deutschland) unter dem Handelsnamen Na-SKS vertrieben, z.B. Na-SKS-1 (Na₂Si₂₂O₄₅·xH₂O, Kenyait), Na-SKS-2 (Na₂Si₁₄O₂₉·xH₂O, Magadiit), Na-SKS-3 (Na₂Si₈O₁₇·xH₂O) oder Na-SKS-4 (Na₂Si₄O₉·xH₂O, Makatit).

Für die Zwecke der vorliegenden Erfindung besonders geeignet sind kristalline Schichtsilikate der Formel (I), in denen x für 2 steht. Von diesen eignen sich vor allem Na-SKS-5 (α-Na₂Si₂O₅), Na-SKS-7 (β-Na₂Si₂O₅, Natrosilit), Na-SKS-9 (NaHSi₂O₅·H₂O), Na-SKS-10 (NaHSi₂O₅·3H₂O, Kanemit), Na-SKS-11 (t-Na₂Si₂O₅) und Na-SKS-13 (NaHSi₂O₅), insbesondere aber Na-SKS-6 (δ-Na₂Si₂O₅).

Werden die Silikate als Bestandteil maschineller Geschirrspülmittel eingesetzt, so enthalten diese Mittel im Rahmen der vorliegenden Anmeldung einen Gewichtsanteil des kristallinen schichtförmigen Silikats der Formel NaMSiₓO₂ₓ₊₁ y H₂O von 0,1 bis 20 Gew.-%, vorzugsweise von 0,2 bis 15 Gew.-% und insbesondere von 0,4 bis 10 Gew.-%, jeweils bezogen auf das Gesamtgewicht dieser Mittel. Besonders bevorzugt ist es insbesondere, wenn solche maschinellen Geschirrspülmittel einen Gesamtsilikatgehalt unterhalb 7 Gew.-%, vorzugsweise unterhalb 6 Gew.%, bevorzugt unterhalb 5 Gew.-%, besonders bevorzugt unterhalb 4 Gew.-%, ganz besonders bevorzugt unterhalb 3 Gew.-% und insbesondere unterhalb 2,5 Gew.-% aufweisen, wobei es sich bei diesem Silikat, bezogen auf das Gesamtgewicht des enthaltenen Silikats, vorzugsweise zu mindestens 70 Gew.-%, bevorzugt zu mindestens 80 Gew.-% und insbesondere zu mindestens 90 Gew.-% um Silikat der allgemeinen Formel NaMSiₓO₂ₓ₊₁ y H₂O handelt.

Der eingesetzte feinkristalline, synthetische und gebundenes Wasser enthaltende Zeolith ist vorzugsweise Zeolith A und/oder P. Als Zeolith P wird Zeolith MAP^{®} (Handelsprodukt der Firma Crosfield) besonders bevorzugt. Geeignet sind jedoch auch Zeolith X sowie Mischungen aus A, X und/oder P. Kommerziell erhältlich und im Rahmen der vorliegenden Erfindung bevorzugt einsetzbar ist beispielsweise auch ein Co-Kristallisat aus Zeolith X und Zeolith A (ca. 80 Gew.-% Zeolith X), das von der Firma CONDEA Augusta S.p.A. unter dem Markennamen VEGOBOND AX^{®} vertrieben wird und durch die Formel

nNa₂O · (1-n)K₂O · Al₂O₃ · (2 - 2,5)SiO₂ · (3,5 - 5,5) H₂O

beschrieben werden kann. Der Zeolith kann dabei sowohl als Gerüststoff in einem granularen Compound eingesetzt, als auch zu einer Art "Abpuderung" der gesamten zu verpressenden Mischung verwendet werden, wobei üblicherweise beide Wege zur Inkorporation des Zeoliths in das Vorgemisch genutzt werden. Geeignete Zeolithe weisen eine mittlere Teilchengröße von weniger als 10 µm (Volumenverteilung; Meßmethode: Coulter Counter) auf und enthalten vorzugsweise 18 bis 22 Gew.-%, insbesondere 20 bis 22 Gew.-% an gebundenem Wasser.

Selbstverständlich ist auch ein Einsatz der allgemein bekannten Phosphate als Buildersubstanzen möglich, sofern ein derartiger Einsatz nicht aus ökologischen Gründen vermieden werden sollte. Dies gilt insbesondere für den Einsatz erfindungsgemäßer Mittel als maschinelle Geschirrspülmittel, welcher im Rahmen der vorliegenden Anmeldung besonders bevorzugt ist. Unter der Vielzahl der kommerziell erhältlichen Phosphate haben die Alkalimetallphosphate unter besonderer Bevorzugung von Pentanatrium- bzw. Pentakaliumtriphosphat (Natrium- bzw. Kaliumtripolyphosphat) in der Wasch- und Reinigungsmittel-Industrie die größte Bedeutung.

Alkalimetallphosphate ist dabei die summarische Bezeichnung für die Alkalimetall- (insbesondere Natrium- und Kalium-) -Salze der verschiedenen Phosphorsäuren, bei denen man Metaphosphorsäuren (HPO₃)ₙ und Orthophosphorsäure H₃PO₄ neben höhermolekularen Vertretern unterscheiden kann. Die Phosphate vereinen dabei mehrere Vorteile in sich: Sie wirken als Alkaliträger, verhindern Kalkbeläge auf Maschinenteilen bzw. Kalkinkrustationen in Geweben und tragen überdies zur Reinigungsleistung bei.

Geeignete Phosphate sind beispielsweise das Natriumdihydrogenphosphat, NaH₂PO₄, in Form des Dihydrats (Dichte 1,91 gcm⁻³, Schmelzpunkt 60°) oder in Form des Monohydrats (Dichte 2,04 gcm⁻³), das Dinatriumhydrogenphosphat (sekundäres Natriumphosphat), Na₂HPO₄, welches wasserfrei oder mit 2 Mol. (Dichte 2,066 gcm⁻³, Wasserverlust bei 95°), 7 Mol. (Dichte 1,68 gcm⁻³, Schmelzpunkt 48° unter Verlust von 5 H₂O) und 12 Mol. Wasser (Dichte 1,52 gcm⁻³, Schmelzpunkt 35° unter Verlust von 5 H₂O) eingesetzt werden kann, insbesondere jedoch das Trinatriumphosphat (tertiäres Natriumphosphat) Na₃PO₄, welches als Dodecahydrat, als Decahydrat (entsprechend 19-20% P₂O₅) und in wasserfreier Form (entsprechend 39-40% P₂O₅) eingesetzt werden kann.
Ein weiteres bevorzugtes Phosphat ist das Trikaliumphosphat (tertiäres oder dreibasiges Kaliumphosphat), K₃PO₄. Weiterhin bevorzugt werden das Tetranatriumdiphosphat (Natriumpyrophosphat), Na₄P₂O₇, welches in wasserfreier Form (Dichte 2,534 gcm⁻³, Schmelzpunkt 988°, auch 880° angegeben) und als Decahydrat (Dichte 1,815-1,836 gcm⁻³, Schmelzpunkt 94° unter Wasserverlust) existiert, sowie das entsprechende Kaliumsalz Kaliumdiphosphat (Kaliumpyrophosphat), K₄P₂O₇.

Durch Kondensation des NaH₂PO₄ bzw. des KH₂PO₄ entstehen höhermol. Natrium- und Kaliumphosphate, bei denen man cyclische Vertreter, die Natrium- bzw. Kaliummetaphosphate und kettenförmige Typen, die Natrium- bzw. Kaliumpolyphosphate, unterscheiden kann. Insbesondere für letztere sind eine Vielzahl von Bezeichnungen in Gebrauch: Schmelz- oder Glühphosphate, Grahamsches Salz, Kurrolsches und Maddrellsches Salz. Alle höheren Natrium- und Kaliumphosphate werden gemeinsam als kondensierte Phosphate bezeichnet.

Das technisch wichtige Pentanatriumtriphosphat, Na₅P₃O₁₀ (Natriumtripolyphosphat), ist ein wasserfrei oder mit 6 H₂O kristallisierendes, nicht hygroskopisches, weißes, wasserlösliches Salz der allgemeinen Formel NaO-[P(O)(ONa)-O]ₙ-Na mit n=3. Das entsprechende Kaliumsalz Pentakaliumtriphosphat, K₅P₃O₁₀ (Kaliumtripolyphosphat), kommt beispielsweise in Form einer 50 Gew.-%-igen Lösung (> 23% P₂O₅, 25% K₂O) in den Handel. Die Kaliumpolyphosphate finden in der Wasch- und Reinigungsmittel-Industrie breite Verwendung. Weiter existieren auch Natriumkaliumtripolyphosphate, welche ebenfalls im Rahmen der vorliegenden Erfindung einsetzbar sind. Diese entstehen beispielsweise, wenn man Natriumtrimetaphosphat mit KOH hydrolysiert:

(NaPO₃)₃ + 2 KOH → Na₃K₂P₃O₁₀ + H₂O

Diese sind erfindungsgemäß genau wie Natriumtripolyphosphat, Kaliumtripolyphosphat oder Mischungen aus diesen beiden einsetzbar; auch Mischungen aus Natriumtripolyphosphat und Natriumkaliumtripolyphosphat oder Mischungen aus Kaliumtripolyphosphat und Natriumkaliumtripolyphosphat oder Gemische aus Natriumtripolyphosphat und Kaliumtripolyphosphat und Natriumkaliumtripolyphosphat sind erfindungsgemäß einsetzbar.

Werden im Rahmen der vorliegenden Anmeldung Phosphate als wasch- oder reinigungsaktive Substanzen in Wasch- oder Reinigungsmitteln eingesetzt, so enthalten bevorzugte Mittel diese Phosphat(e), vorzugsweise Alkalimetallphosphat(e), besonders bevorzugt Pentanatrium- bzw. Pentakaliumtriphosphat (Natrium- bzw. Kaliumtripolyphosphat), in Mengen von 5 bis 80 Gew.-%, vorzugsweise von 15 bis 75 Gew.-% uns insbesondere von 20 bis 70 Gew.-%, jeweils bezogen auf das Gewicht des Wasch- oder Reinigungsmittels.

Bevorzugt ist es insbesondere Kaliumtripolyphosphat und Natriumtripolyphosphat in einem Gewichtsverhältnis von mehr als 1:1, vorzugsweise mehr als 2:1, bevorzugt mehr als 5:1, besonders bevorzugt mehr als 10:1 und insbesondere mehr als 20:1 einzusezten. Besonders bevorzugt ist es, ausschließlich Kaliumtripolyphosphat ohne Beimischungen anderer Phosphate einzusetzen.

Weitere Gerüststoffe sind die Alkaliträger. Als Alkaliträger gelten beispielsweise Alkalimetallhydroxide, Alkalimetallcarbonate, Alkalimetallhydrogencarbonate, Alkalimetallsesquicarbonate, die genannten Alkalisilikate, Alkalimetasilikate, und Mischungen der vorgenannten Stoffe, wobei im Sinne dieser Erfindung bevorzugt die Alkalicarbonate, insbesondere Natriumcarbonat, Natriumhydrogencarbonat oder Natriumsesquicarbonat eingesetzt werden. Besonders bevorzugt ist ein Buildersystem enthaltend eine Mischung aus Tripolyphosphat und Natriumcarbonat. Ebenfalls besonders bevorzugt ist ein Buildersystem enthaltend eine Mischung aus Tripolyphosphat und Natriumcarbonat und Natriumdisilikat. Aufgrund ihrer im Vergleich mit anderen Buildersubstanzen geringen chemischen Kompatibilität mit den übrigen Inhaltsstoffen von Wasch- oder Reinigungsmitteln, werden die Alkalimetallhydroxide bevorzugt nur in geringen Mengen, vorzugsweise in Mengen unterhalb 10 Gew.-%, bevorzugt unterhalb 6 Gew.-%, besonders bevorzugt unterhalb 4 Gew.-% und insbesondere unterhalb 2 Gew.-%, jeweils bezogen auf das Gesamtgewicht des Wasch- oder Reinigugnsmittels, eingesetzt. Besonders bevorzugt werden Mittel, welche bezogen auf ihr Gesamtgewicht weniger als 0,5 Gew.-% und insbesondere keine Alkalimetallhydroxide enthalten.

Besonders bevorzugt ist der Einsatz von Carbonat(en) und/oder Hydrogencarbonat(en), vorzugsweise Alkalicarbonat(en), besonders bevorzugt Natriumcarbonat, in Mengen von 2 bis 50 Gew.-%, vorzugsweise von 5 bis 40 Gew.-% und insbesondere von 7.5 bis 30 Gew.-%, jeweils bezogen auf das Gewicht des Wasch- oder Reinigungsmittels. Besonders bevorzugt werden Mittel, welche bezogen auf das Gewicht des Wasch- oder Reinigungsmittels (also das Gesamtgewicht des Kombinationsprodukts ohne Verpackung) weniger als 20 Gew.-%, vorzugsweise weniger als 17 Gew.-%, bevorzugt weniger als 13 Gew.-% und insbesondere weniger als 9 Gew.% Carbonat(e) und/oder Hydrogencarbonat(e), vorzugsweise Alkalicarbonate, besonders bevorzugt Natriumcarbonat enthalten.

Als organische Cobuilder sind insbesondere Polycarboxylate / Polycarbonsäuren, polymere Polycarboxylate, Asparaginsäure, Polyacetale, Dextrine, weitere organische Cobuilder (siehe unten) sowie Phosphonate zu nennen. Diese Stoffklassen werden nachfolgend beschrieben.

Brauchbare organische Gerüstsubstanzen sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen.

Auch die Säuren an sich können eingesetzt werden. Die Säuren besitzen neben ihrer Builderwirkung typischerweise auch die Eigenschaft einer Säuerungskomponente und dienen somit auch zur Einstellung eines niedrigeren und milderen pH-Wertes von Wasch- oder Reinigungsmitteln. Insbesondere sind hierbei Citronensäure, Bernsteinsäure, Glutarsäure, Adipinsäure, Gluconsäure und beliebige Mischungen aus diesen zu nennen.

Als Gerüststoffe sind weiter polymere Polycarboxylate geeignet, dies sind beispielsweise die Alkalimetallsalze der Polyacrylsäure oder der Polymethacrylsäure, beispielsweise solche mit einer relativen Molekülmasse von 500 bis 70000 g/mol.

Bei den für polymere Polycarboxylate angegebenen Molmassen handelt es sich im Sinne dieser Schrift um gewichtsmittlere Molmassen M_{w} der jeweiligen Säureform, die grundsätzlich mittels Gelpermeationschromatographie (GPC) bestimmt wurden, wobei ein UV-Detektor eingesetzt wurde. Die Messung erfolgte dabei gegen einen externen Polyacrylsäure-Standard, der aufgrund seiner strukturellen Verwandtschaft mit den untersuchten Polymeren realistische Molgewichtswerte liefert. Diese Angaben weichen deutlich von den Molgewichtsangaben ab, bei denen Polystyrolsulfonsäuren als Standard eingesetzt werden. Die gegen Polystyrolsulfonsäuren gemessenen Molmassen sind in der Regel deutlich höher als die in dieser Schrift angegebenen Molmassen.

Geeignete Polymere sind insbesondere Polyacrylate, die bevorzugt eine Molekülmasse von 2000 bis 20000 g/mol aufweisen. Aufgrund ihrer überlegenen Löslichkeit können aus dieser Gruppe wiederum die kurzkettigen Polyacrylate, die Molmassen von 2000 bis 10000 g/mol, und besonders bevorzugt von 3000 bis 5000 g/mol, aufweisen, bevorzugt sein.

Geeignet sind weiterhin copolymere Polycarboxylate, insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 2000 bis 70000 g/mol, vorzugsweise 20000 bis 50000 g/mol und insbesondere 30000 bis 40000 g/mol.

Die (co-)polymeren Polycarboxylate können entweder als Pulver oder als wäßrige Lösung eingesetzt werden. Der Gehalt von Wasch- oder Reinigungsmitteln an (co-)polymeren Polycarboxylaten beträgt vorzugsweise 0,5 bis 20 Gew.-%, insbesondere 3 bis 10 Gew.-%.

Zur Verbesserung der Wasserlöslichkeit können die Polymere auch Allylsulfonsäuren, wie beispielsweise Allyloxybenzolsulfonsäure und Methallylsulfonsäure, als Monomer enthalten.

Insbesondere bevorzugt sind auch biologisch abbaubare Polymere aus mehr als zwei verschiedenen Monomereinheiten, beispielsweise solche, die als Monomere Salze der Acrylsäure und der Maleinsäure sowie Vinylalkohol bzw. Vinylalkohol-Derivate oder die als Monomere Salze der Acrylsäure und der 2-Alkylallylsulfonsäure sowie Zucker-Derivate enthalten.

Weitere bevorzugte Copolymere sind solche, die als Monomere vorzugsweise Acrolein und Acrylsäure/Acrylsäuresalze bzw. Acrolein und Vinylacetat aufweisen.

Ebenso sind als weitere bevorzugte Buildersubstanzen polymere Aminodicarbonsäuren, deren Salze oder deren Vorläufersubstanzen zu nennen. Besonders bevorzugt sind Polyasparaginsäuren bzw. deren Salze und.

Weitere geeignete Buildersubstanzen sind Polyacetale, welche durch Umsetzung von Dialdehyden mit Polyolcarbonsäuren, welche 5 bis 7 C-Atome und mindestens 3 Hydroxylgruppen aufweisen, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Weitere geeignete organische Buildersubstanzen sind Dextrine, beispielsweise Oligomere bzw. Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500000 g/mol. Dabei ist ein Polysaccharid mit einem Dextrose-Äquivalent (DE) im Bereich von 0,5 bis 40, insbesondere von 2 bis 30 bevorzugt, wobei DE ein gebräuchliches Maß für die reduzierende Wirkung eines Polysaccharids im Vergleich zu Dextrose, welche ein DE von 100 besitzt, ist. Brauchbar sind sowohl Maltodextrine mit einem DE zwischen 3 und 20 und Trockenglucosesirupe mit einem DE zwischen 20 und 37 als auch sogenannte Gelbdextrine und Weißdextrine mit höheren Molmassen im Bereich von 2000 bis 30000 g/mol.

Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren.

Auch Oxydisuccinate und andere Derivate von Disuccinaten, vorzugsweise Ethylendiamindisuccinat, sind weitere geeignete Cobuilder. Dabei wird Ethylendiamin-N,N'-disuccinat (EDDS) bevorzugt in Form seiner Natrium- oder Magnesiumsalze verwendet. Weiterhin bevorzugt sind in diesem Zusammenhang auch Glycerindisuccinate und Glycerintrisuccinate. Geeignete Einsatzmengen liegen in zeolithhaltigen und/oder silicathaltigen Formulierungen bei 3 bis 15 Gew.-%.

Weitere brauchbare organische Cobuilder sind beispielsweise acetylierte Hydroxycarbonsäuren bzw. deren Salze, welche gegebenenfalls auch in Lactonform vorliegen können und welche mindestens 4 Kohlenstoffatome und mindestens eine Hydroxygruppe sowie maximal zwei Säuregruppen enthalten.

Eine weitere Substanzklasse mit Cobuildereigenschaften stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z. B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schwermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Darüber hinaus können alle Verbindungen, die in der Lage sind, Komplexe mit Erdalkaliionen auszubilden, als Gerüststoffe eingesetzt werden.

### Tenside

Zur Gruppe der Tenside werden neben den nichtionischen Tensiden weiterhin die anionischen, kationischen und amphotern Tenside gezählt.

Als nichtionische Tenside werden dabei vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄₋Alkohole mit 3 EO oder 4 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Außerdem können als weitere nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (I), 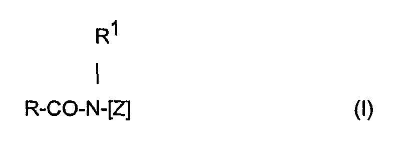 in der RCO für einen aliphatischen Acylrest mit 6 bis 22 Kohlenstoffatomen, R¹ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel 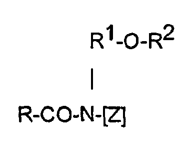 in der R für einen linearen oder verzweigten Alkyl- oder Alkenylrest mit 7 bis 12 Kohlenstoffatomen, R¹ für einen linearen, verzweigten oder cyclischen Alkylrest oder einen Arylrest mit 2 bis 8 Kohlenstoffatomen und R² für einen linearen, verzweigten oder cyclischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder Propxylierte Derivate dieses Restes.

[Z] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können durch Umsetzung mit Fettsäuremethylestern in Gegenwart eines Alkoxids als Katalysator in die gewünschten Polyhydroxyfettsäureamide überführt werden.

Als bevorzugte Tenside werden schwachschäumende nichtionische Tenside eingesetzt. Mit besonderem Vorzug enthalten die erfindungsgemäßen Reinigungsmittel für das maschinellen Geschirrspülen nichtionische Tenside, insbesondere nichtionische Tenside aus der Gruppe der alkoxylierten Alkohole. Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄-Alkohole mit 3 EO oder 4 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Insbesondere bevorzugt sind nichtionische Tenside, die einen Schmelzpunkt oberhalb Raumtemperatur aufweisen, wobei nichtionische Tenside mit einem Schmelzpunkt oberhalb von 20°C, vorzugsweise oberhalb von 25°C, besonders bevorzugt zwischen 25 und 60°C und insbesondere zwischen 26,6 und 43,3°C, besonders bevorzugt sind.

Geeignete nichtionische Tenside, die Schmelz- bzw. Erweichungspunkte im genannten Temperaturbereich aufweisen, sind beispielsweise schwachschäumende nichtionische Tenside, die bei Raumtemperatur fest oder hochviskos sein können. Werden bei Raumtemperaturhochviskose Niotenside eingesetzt, so ist bevorzugt, daß diese eine Viskosität oberhalb von 20 Pas, vorzugsweise oberhalb von 35 Pas und insbesondere oberhalb 40 Pas aufweisen. Auch Niotenside, die bei Raumtemperatur wachsartige Konsistenz besitzen, sind bevorzugt.

Bevorzugt als bei Raumtemperatur feste einzusetzende Niotenside stammen aus den Gruppen der alkoxylierten Niotenside, insbesondere der ethoxylierten primären Alkohole und Mischungen dieser Tenside mit strukturell komplizierter aufgebauten Tensiden wie Polyoxypropylen/Polyoxyethylen/Polyoxypropylen (PO/EO/PO)-Tenside. Solche (PO/EO/PO)-Niotenside zeichnen sich darüberhinaus durch gute Schaumkontrolle aus.

In einer bevorzugten Ausführungsform der vorliegenden Erfindung ist das nichtionische Tensid mit einem Schmelzpunkt oberhalb Raumtemperatur ein ethoxyliertes Niotensid, das aus der Reaktion von einem Monohydroxyalkanol oder Alkylphenol mit 6 bis 20 C-Atomen mit vorzugsweise mindestens 12 Mol, besonders bevorzugt mindestens 15 Mol, insbesondere mindestens 20 Mol Ethylenoxid pro Mol Alkohol bzw. Alkylphenol hervorgegangen ist.

Ein besonders bevorzugtes bei Raumtemperatur festes, einzusetzendes Niotensid wird aus einem geradkettigen Fettalkohol mit 16 bis 20 Kohlenstoffatomen (C₁₆₋₂₀-Alkohol), vorzugsweise einem C₁₈-Alkohol und mindestens 12 Mol, vorzugsweise mindestens 15 Mol und insbesondere mindestens 20 Mol Ethylenoxid gewonnen. Hierunter sind die sogenannten "narrow range ethoxylates" (siehe oben) besonders bevorzugt.

Demnach ethoxylierte Niotenside besonders bevorzugt, die aus C₆₋₂₀-Monohydroxyalkanolen oder C₆₋₂₀-Alkylphenolen oder C₁₆₋₂₀-Fettalkoholen und mehr als 12 Mol, vorzugsweise mehr als 15 Mol und insbesondere mehr als 20 Mol Ethylenoxid pro Mol Alkohol gewonnen wurden.

Das bei Raumtemperatur feste Niotensid besitzt vorzugsweise zusätzlich Propylenoxideinheiten im Molekül. Vorzugsweise machen solche PO-Einheiten bis zu 25 Gew.-%, besonders bevorzugt bis zu 20 Gew.-% und insbesondere bis zu 15 Gew.-% der gesamten Molmasse des nichtionischen Tensids aus. Besonders bevorzugte nichtionische Tenside sind ethoxylierte Monohydroxyalkanole oder Alkylphenole, die zusätzlich Polyoxyethylen-Polyoxypropylen Blockcopolymereinheiten aufweisen. Der Alkohol- bzw. Alkylphenolteil solcher Niotensidmoleküle macht dabei vorzugsweise mehr als 30 Gew.-%, besonders bevorzugt mehr als 50 Gew.-% und insbesondere mehr als 70 Gew.-% der gesamten Molmasse solcher Niotenside aus. Bevorzugte Geschirrspülmittel sind dadurch gekennzeichnet, daß sie ethoxylierte und propoxylierte Niotenside enthalten, bei denen die Propylenoxideinheiten im Molekül bis zu 25 Gew.-%, bevorzugt bis zu 20 Gew.-% und insbesondere bis zu 15 Gew.-% der gesamten Molmasse des nichtionischen Tensids ausmachen, enthalten.

Weitere besonders bevorzugt einzusetzende Niotenside mit Schmelzpunkten oberhalb Raumtemperatur enthalten 40 bis 70% eines Polyoxypropylen/Polyoxyethylen/Polyoxypropylen-Blockpolymerblends, der 75 Gew.-% eines umgekehrten Block-Copolymers von Polyoxyethylen und Polyoxypropylen mit 17 Mol Ethylenoxid und 44 Mol Propylenoxid und 25 Gew.-% eines Block-Copolymers von Polyoxyethylen und Polyoxypropylen, initiiert mit Trimethylolpropan und enthaltend 24 Mol Ethylenoxid und 99 Mol Propylenoxid pro Mol Trimethylolpropan.

Nichtionische Tenside, die mit besonderem Vorzug eingesetzt werden können, sind beispielsweise unter dem Namen Poly Tergent^{®} SLF-18 von der Firma Olin Chemicals erhältlich.

In Wasch- oder Reinigungsmittel, vorzugsweise in Geschirrspülmitteln, wird das nichtionische Tenside der Formel (II)

R¹O[CH₂CH(CH₃)O]ₓ[CH₂CH₂O]_{y}[CH₂CH(OH)R²], (II)

in der R¹ für einen linearen oder verzweigten aliphatischen Kohlenwasserstoffrest mit 4 bis 18 Kohlenstoffatomen oder Mischungen hieraus steht, R² einen linearen oder verzweigten Kohlenwasserstoffrest mit 2 bis 26 Kohlenstoffatomen oder Mischungen hieraus bezeichnet und x für Werte zwischen 0,5 und 1,5 und y für einen Wert von mindestens 15 steht, eingesetzt.

Weitere bevorzugt einsetzbare Niotenside sind die endgruppenverschlossenen Poly(oxyalkylierten) Niotenside der Formel

R¹O[CH₂CH(R³)O]ₓ[CH₂]ₖCH(OH)[CH₂]ⱼOR²

in der R¹ und R² für lineare oder verzweigte, gesättigte oder ungesättigte, aliphatische oder aromatische Kohlenwasserstoffreste mit 1 bis 30 Kohlenstoffatomen stehen, R³ für H oder einen Methyl-, Ethyl-, n-Propyl-, iso-Propyl, n-Butyl-, 2-Butyl- oder 2-Methyl-2-Butylrest steht, x für Werte zwischen 1 und 30, k und j für Werte zwischen 1 und 12, vorzugsweise zwischen 1 und 5 stehen. Wenn der Wert x ≥ 2 ist, kann jedes R³ in der obenstehenden Formel unterschiedlich sein. R¹ und R² sind vorzugsweise lineare oder verzweigte, gesättigte oder ungesättigte, aliphatische oder aromatische Kohlenwasserstoffreste mit 6 bis 22 Kohlenstoffatomen, wobei Reste mit 8 bis 18 C-Atomen besonders bevorzugt sind. Für den Rest R³ sind H, -CH₃ oder - CH₂CH₃ besonders bevorzugt. Besonders bevorzugte Werte für x liegen im Bereich von 1 bis 20, insbesondere von 6 bis 15.

Wie vorstehend beschrieben, kann jedes R³ in der obenstehenden Formel unterschiedlich sein, falls x ≥ 2 ist. Hierdurch kann die Alkylenoxideinheit in der eckigen Klammer variiert werden. Steht x beispielsweise für 3, kann der Rest R³ ausgewählt werden, um Ethylenoxid- (R³ = H) oder Propylenoxid- (R³ = CH₃) Einheiten zu bilden, die in jedweder Reihenfolge aneinandergefügt sein können, beispielsweise (EO)(PO)(EO), (EO)(EO)(PO), (EO)(EO)(EO), (PO)(EO)(PO), (PO)(PO)(EO) und (PO)(PO)(PO). Der Wert 3 für x ist hierbei beispielhaft gewählt worden und kann durchaus größer sein, wobei die Variationsbreite mit steigenden x-Werten zunimmt und beispielsweise eine große Anzahl (EO)-Gruppen, kombiniert mit einer geringen Anzahl (PO)-Gruppen einschließt, oder umgekehrt.

Insbesondere bevorzugte endgruppenverschlossenen Poly(oxyalkylierte) Alkohole der obenstehenden Formel weisen Werte von k = 1 und j = 1 auf, so daß sich die vorstehende Formel zu

R¹O[CH₂CH(R³)O]ₓCH₂CH(OH)CH₂OR²

vereinfacht. In der letztgenannten Formel sind R¹, R² und R³ wie oben definiert und x steht für Zahlen von 1 bis 30, vorzugsweise von 1 bis 20 und insbesonders von 6 bis 18. Besonders bevorzugt sind Tenside, bei denen die Reste R¹ und R² 9 bis 14 C-Atome aufweisen, R³ für H steht und x Werte von 6 bis 15 annimmt.

Faßt man die letztgenannten Aussagen zusammen, werden, die endgruppenverschlossenen Poly(oxyalkylierten) Niotenside der Formel

R¹O[CH₂CH(R³)O]ₓ[CH₂]ₖCH(OH)[CH₂]ⱼOR²

, in der R¹ und R² für lineare oder verzweigte, gesättigte oder ungesättigte, aliphatische oder aromatische Kohlenwasserstoffreste mit 1 bis 30 Kohlenstoffatomen stehen, R³ für H oder einen Methyl-, Ethyl-, n-Propyl-, iso-Propyl, n-Butyl-, 2-Butyl- oder 2-Methyl-2-Butylrest steht, x für Werte zwischen 1 und 30, k und j für Werte zwischen 1 und 12, vorzugsweise zwischen 1 und 5 stehen, bevorzugt, wobei Tenside des Typs

R¹O[CH₂CH(R³)O]ₓCH₂CH(OH)CH₂OR²

in denen x für Zahlen von 1 bis 30, vorzugsweise von 1 bis 20 und insbesondere von 6 bis 18 steht, besonders bevorzugt sind.

Als besonders bevorzugte Niotenside haben sich im Rahmen der vorliegenden Anmeldung schwachschäumende Niotenside erwiesen, welche alternierende Ethylenoxid- und Alkylenoxideinheiten aufweisen. Unter diesen sind wiederum Tenside mit EO-AO-EO-AO-Blöcken bevorzugt, wobei jeweils eine bis zehn EO- bzw. AO-Gruppen aneinander gebunden sind, bevor ein Block aus den jeweils anderen Gruppen folgt. Hier sind erfindungsgemäße maschinelle Geschirrspülmittel bevorzugt, die als nichionische(s) Tensid(e) Tenside der allgemeinen Formel III enthalten 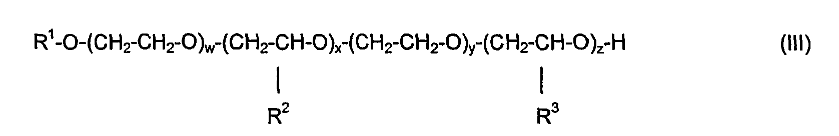 in der R¹ für einen geradkettigen oder verzweigten, gesättigten oder ein- bzw. mehrfach ungesättigten C₆₋₂₄-Alkyl- oder -Alkenylrest steht; jede Gruppe R² bzw. R³ unabhängig voneinander ausgewählt ist aus -CH₃; -CH₂CH₃, -CH₂CH₂-CH₃, CH(CH₃)₂ und die Indizes w, x, y, z unabhängig voneinander für ganze Zahlen von 1 bis 6 stehen.

Die bevorzugten Niotenside der Formel III lassen sich durch bekannte Methoden aus den entsprechenden Alkoholen R¹-OH und Ethylen- bzw. Alkylenoxid herstellen. Der Rest R¹ in der vorstehenden Formel III kann je nach Herkunft des Alkohols variieren. Werden native Quellen genutzt, weist der Rest R¹ eine gerade Anzahl von Kohlenstoffatomen auf und ist in der Regel unverzeigt, wobei die linearen Resten aus Alkoholen nativen Ursprungs mit 12 bis 18 C-Atomen, z.B. aus Kokos-, Palm-, Talgfett- oder Oleylalkohol, bevorzugt sind. Aus synthetischen Quellen zugängliche Alkohole sind beispielsweise die Guerbetalkohole oder in 2-Stellung methylverzweigte bzw. lineare und methylverzweigte Reste im Gemisch, so wie sie üblicherweise in Oxoalkoholresten vorliegen. Unabhängig von der Art des zur Herstellung der erfindungsgemäß in den Mitteln enthaltenen Niotenside eingesetzten Alkohols sind erfindungsgemäße maschinelle Geschirrspülmittel bevorzugt, bei denen R¹ in Formel III für einen Alkylrest mit 6 bis 24, vorzugsweise 8 bis 20, besonders bevorzugt 9 bis 15 und insbesondere 9 bis 11 Kohlenstoffatomen steht.

Als Alkylenoxideinheit, die alternierend zur Ethylenoxideinheit in den bevorzugten Niotensiden enthalten ist, kommt neben Propylenoxid insbesondere Butylenoxid in Betracht. Aber auch weitere Alkylenoxide, bei denen R² bzw. R³ unabhängig voneinander ausgewählt sind aus - CH₂CH₂-CH₃ bzw. CH(CH₃)₂ sind geeignet. Bevorzugte maschinelle Geschirrspülmittel sind dadurch gekennzeichnet, daß R² bzw. R³ für einen Rest -CH₃, w und x unabhängig voneinander für Werte von 3 oder 4 und y und z unabhängig voneinander für Werte von 1 oder 2 stehen.

Zusammenfassend sind insbesondere nichtionische Tenside bevorzugt, die einen C₉₋₁₅-Alkylrest mit 1 bis 4 Ethylenoxideinheiten, gefolgt von 1 bis 4 Propylenoxideinheiten, gefolgt von1 bis 4 Ethylenoxideinheiten, gefolgt von1 bis 4 Propylenoxideinheiten aufweisen. Diese Tenside weisen in wäßriger Lösung die erforderliche niedrige Viskosität auf und sind erfindungsgemäß mit besonderem Vorzug einsetzbar.

Weitere bevorzugt einsetzbare Niotenside sind die endgruppenverschlossenen Poly(oxyalkylierten) Niotenside der Formel (IV)

R¹O[CH₂CH(R³)O]ₓR² (IV)

in der R¹ für lineare oder verzweigte, gesättigte oder ungesättigte, aliphatische oder aromatische Kohlenwasserstoffreste mit 1 bis 30 Kohlenstoffatomen steht, R² für lineare oder verzweigte, gesättigte oder ungesättigte, aliphatische oder aromatische Kohlenwasserstoffreste mit 1 bis 30 Kohlenstoffatomen steht, welche vorzugsweise zwischen 1 und 5 Hydroxygruppen aufweisen und vorzugsweise weiterhin mit einer Ethergruppe funktionalisiert sind , R³ für H oder einen Methyl-, Ethyl-, n-Propyl-, iso-Propyl, n-Butyl-, 2-Butyl- oder 2-Methyl-2-Butylrest steht, x für Werte zwischen 1 und 40.

Bei besonders bevorzugten Niotenside der vorstehenden Formel (IV) steht R³ für H. Bei den resultierenden endgruppenverschlossenen Poly(oxyalkylierten) Niotensiden der Formel (V)

R¹O[CH₂CH₂O]ₓR² (V)

sind insbesondere solche Niotenside bevorzugt, bei denen R¹ für lineare oder verzweigte, gesättigte oder ungesättigte, aliphatische oder aromatische Kohlenwasserstoffreste mit 1 bis 30 Kohlenstoffatomen, vorzugsweise mit 4 bis 20 Kohlenstoffatomen steht, R² für lineare oder verzweigte, gesättigte oder ungesättigte, aliphatische oder aromatische Kohlenwasserstoffreste mit 1 bis 30 Kohlenstoffatomen steht, welche vorzugsweise zwischen 1 und 5 Hydroxygruppen aufweisen und x für Werte zwischen 1 und 40 steht.

Insbesondere werden solche endgruppenverschlossenen Poly(oxyalkylierten) Niotenside bevorzugt, die gemäß der Formel (VI)

R¹O[CH₂CH₂O]ₓCH₂CH(OH)R² (VI)

neben einem Rest R¹, welcher für lineare oder verzweigte, gesättigte oder ungesättigte, aliphatische oder aromatische Kohlenwasserstoffreste mit 1 bis 30 Kohlenstoffatomen, vorzugsweise mit 4 bis 20 Kohlenstoffatomen steht, weiterhin einen linearen oder verzweigten, gesättigten oder ungesättigten, aliphatischen oder aromatischen Kohlenwasserstoffrest mit 1 bis 30 Kohlenstoffatomen R² aufweisen, welcher einer monohydroxylierten Zwischengruppe - CH₂CH(OH)- benachbart ist. x steht in dieser Formel für Werte zwischen 1 und 40. Derartige endgruppenverschlossenen Poly(oxyalkylierten) Niotenside lassen sich beispielsweise durch Umsetzung eines endständigen Epoxids der Formel R²CH(O)CH₂ mit einem ethoxylierten Alkohol der Formel R¹O[CH₂CH₂O]ₓ₋₁CH₂CH₂OH erhalten.

Die angegebenen C-Kettenlängen sowie Ethoxylierungsgrade bzw. Alkoxylierungsgrade der vorgenannten Niotenside stellen statistische Mittelwerte dar, die für ein spezielles Produkt eine ganze oder eine gebrochene Zahl sein können. Aufgrund der Herstellverfahren bestehen Handelsprodukte der genannten Formeln zumeist nicht aus einem individuellen Vertreter, sondern aus Gemischen, wodurch sich sowohl für die C-Kettenlängen als auch für die Ethoxylierungsgrade bzw. Alkoxylierungsgrade Mittelwerte und daraus folgend gebrochene Zahlen ergeben können.

Als anionische Tenside werden beispielsweise solche vom Typ der Sulfonate und Sulfate eingesetzt. Als Tenside vom Sulfonat-Typ kommen dabei vorzugsweise C₉₋₁₃-Alkylbenzolsulfonate, Olefinsulfonate, d.h. Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), z.B. die α-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der basis von fettchemischen Rohstoffen. Aus waschtechnischem Interesse sind die C₁₂-C₁₆-Alkylsulfate und C₁₂-C₁₅₋Alkylsulfate sowie C₁₄-C₁₅-Alkylsulfate bevorzugt. Auch 2,3-Alkylsulfate, welche als Handelsprodukte der Shell Oil Company unter dem Namen DAN^{®} erhalten werden können, sind geeignete Aniontenside.

Auch die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁-Alkohole mit im Durchschnitt 3,5 Mol Ethylenoxid (EO) oder C₁₂₋₁₈-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈₋₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Als weitere anionische Tenside kommen insbesondere Seifen in Betracht. Geeignet sind gesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, z.B. Kokos-, Palmkern- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Sind die Aniontenside Bestandteil maschineller Geschirrspülmittel, so beträgt ihr Gehalt, bezogen auf das Gesamtgewicht der Mittel vorzugsweise weniger als 4 Gew.-%, bevorzugt weniger als 2 Gew.-% und ganz besonders bevorzugt weniger als 1 Gew.-%. Maschinelle Geschirrspülmittel, welche keine Aniontenside enthalten, werden insbesondere bevorzugt.

An Stelle der genannten Tenside oder in Verbindung mit ihnen können auch kationische und/oder amphotere Tenside eingesetzt werden.

Als kationische Aktivsubstanzen können beispielsweise kationische Verbindungen der Formeln VII, VIII oder IX eingesetzt werden: 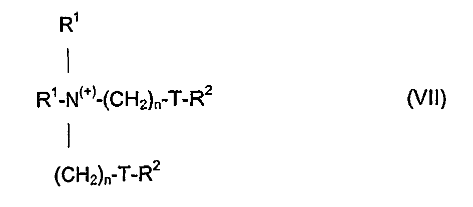 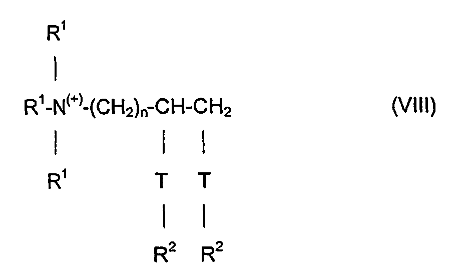 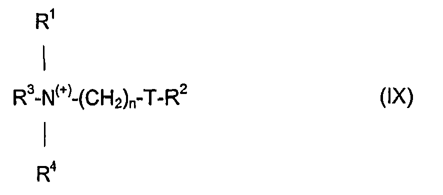 worin jede Gruppe R¹ unabhängig voneinander ausgewählt ist aus C₁₋₆-Alkyl-, -Alkenyl- oder -Hydroxyalkylgruppen; jede Gruppe R² unabhängig voneinander ausgewählt ist aus C₈₋₂₈-Alkyl- oder -Alkenylgruppen; R³ = R¹ oder (CH₂)ₙ-T-R²; R⁴ = R¹ oder R² oder (CH₂)ₙ-T-R²; T = -CH₂-, -O-CO- oder -CO-O- und n eine ganze Zahl von 0 bis 5 ist.

In maschinellen Geschirrspülmittel, beträgt der Gehalt an kationischen und/oder amphoteren Tensiden vorzugsweise weniger als 6 Gew.-%, bevorzugt weniger als 4 Gew.-%, ganz besonders bevorzugt weniger als 2 Gew.-% und insbesondere weniger als 1 Gew.-%. Maschinelle Geschirrspülmittel, welche keine kationischen oder amphoteren Tenside enthalten, werden besonders bevorzugt.

### Polymere

Zur Gruppe der Polymere zählen insbesondere die wasch- oder reinigungsaktive Poylmere, beispielsweise die Klarspülpolymere und/oder als Enthärter wirksame Polymere. Generell sind in Wasch- oder Reinigungsmitteln neben nichtionischen Polymeren auch kationische, anionische und amphoter Polymere einsetzbar.

Als Enthärter wirksame Polymere sind beispielsweise die Sulfonsäuregruppen-haltigen Polymere, welche mit besonderem Vorzug eingesetzt werden.

Besonders bevorzugt als Suldonsäuregruppen-haltige Polymere einsetzbar sind Copolymere aus ungesättigten Carbonsäuren, Sulfonsäuregruppen-haltigen Monomeren und gegebenenfalls weiteren ionischen oder nichtionogenen Monomeren.

Im Rahmen der vorliegenden Erfindung sind ungesättigte Carbonsäuren der Formel X als Monomer bevorzugt,

R¹(R²)C=C(R³)COOH (X),

in der R¹ bis R³ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder - COOH substituierte Alkyl- oder Alkenylreste wie vorstehend definiert oder für -COOH oder - COOR⁴ steht, wobei R⁴ ein gesättigter oder ungesättigter, geradkettigter oder verzweigter Kohlenwasserstoffrest mit 1 bis 12 Kohlenstoffatomen ist.

Unter den ungesättigten Carbonsäuren, die sich durch die Formel X beschreiben lassen, sind insbesondere Acrylsäure (R¹ = R² = R³ = H), Methacrylsäure (R¹ = R² = H; R³ = CH₃) und/oder Maleinsäure (R¹ = COOH; R² = R³ = H) bevorzugt.

Bei den Sulfonsäuregruppen-haltigen Monomeren sind solche der Formel XI bevorzugt,

R⁵(R⁶)C=C(R⁷)-X-SO₃H (XI),

in der R⁵ bis R⁷ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder - COOH substituierte Alkyl- oder Alkenylreste wie vorstehend definiert oder für -COOH oder - COOR⁴ steht, wobei R⁴ ein gesättigter oder ungesättigter, geradkettigter oder verzweigter Kohlenwasserstoffrest mit 1 bis 12 Kohlenstoffatomen ist, und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-.

Unter diesen Monomeren bevorzugt sind solche der Formeln XIa, XIb und/oder Xlc,

H₂C=CH-X-SO₃H (Xla),

H₂C=C(CH₃)-X-SO₃H (Xlb),

HO₃S-X-(R⁶)C=C(R⁷)-X-SO₃H (XIc),

in denen R⁶ und R⁷ unabhängig voneinander ausgewählt sind aus -H, -CH₃, -CH₂CH₃, -CH₂CH₂CH₃, -CH(CH₃)₂ und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-.

Besonders bevorzugte Sulfonsäuregruppen-haltige Monomere sind dabei 1-Acrylamido-1-propansulfonsäure (X = -C(O)NH-CH(CH₂CH₃) in Formel XIa), 2-Acrylamido-2-propansulfonsäure (X = -C(O)NH-C(CH₃)₂ in Formel Xla), 2-Acrylamido-2-methyl-1-propansulfonsäure (X = -C(O)NH-CH(CH₃)CH₂- in Formel XIa), 2-Methacrylamido-2-methyt-1-propansulfonsäure (X = -C(O)NH-CH(CH₃)CH₂- in Formel XIb), 3-Methacrylamido-2-hydroxy-propansulfonsäure (X = -C(O)NH-CH₂CH(OH)CH₂- in Formel Xlb), Allylsulfonsäure (X = CH₂ in Formel Xlla), Methallylsulfonsäure (X = CH₂ in Formel Xlb), Allyloxybenzolsulfonsäure (X = -CH₂-O-C₆H₄- in Formel Xla), Methallyloxybenzolsulfonsäure (X = -CH₂-O-C₆H₄- in Formel XIb), 2-Hydroxy-3-(2-propenyloxy)propansulfonsäure, 2-Methyl-2-propen1-sulfonsäure (X = CH₂ in Formel XIb), Styrolsulfonsäure (X = C₆H₄ in Formel Xla), Vinylsulfonsäure (X nicht vorhanden in Formel XIa), 3-Sulfopropylacrylat (X = -C(O)NH-CH₂CH₂CH₂- in Formel XIa), 3-Sulfopropylmethacrylat (X = - C(O)NH-CH₂CH₂CH₂- in Formel XIb), Sulfomethacrylamid (X = -C(O)NH- in Formel XIb), Sulfomethylmethacrylamid (X = -C(O)NH-CH₂- in Formel Xlb) sowie wasserlösliche Salze der genannten Säuren.

Als weitere ionische oder nichtionogene Monomere kommen insbesondere ethylenisch ungesättigte Verbindungen in Betracht. Vorzugsweise beträgt der Gehalt der erfindungsgemäß eingesetzten Polymere an Monomeren der Gruppe iii) weniger als 20 Gew.-%, bezogen auf das Polymer. Besonders bevorzugt zu verwendende Polymere bestehen lediglich aus Monomeren der Gruppen i) und ii).

Zusammenfassend sind Copolymere aus
i) ungesättigten Carbonsäuren der Formel X.

   R¹(R²)C=C(R³)COOH (X),

   in der R¹ bis R³ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder- COOH substituierte Alkyl- oder Alkenylreste wie vorstehend definiert oder für -COOH oder - COOR⁴ steht, wobei R⁴ ein gesättigter oder ungesättigter, geradkettigter oder verzweigter Kohlenwasserstoffrest mit 1 bis 12 Kohlenstoffatomen ist,
ii) Sulfonsäuregruppen-haltigen Monomeren der Formel XI

   R⁵(R⁶)C=C(R⁷)-X-SO₃H (XI),

   in der R⁵ bis R⁷ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder - COOH substituierte Alkyl- oder Alkenylreste wie vorstehend definiert oder für -COOH oder - COOR⁴ steht, wobei R⁴ ein gesättigter oder ungesättigter, geradkettigter oder verzweigter Kohlenwasserstoffrest mit 1 bis 12 Kohlenstoffatomen ist, und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-
iii) gegebenenfalls weiteren ionischen oder nichtionogenen Monomeren
   besonders bevorzugt.

Weitere besonders bevorzugte Copolymere bestehen aus
i) einer oder mehrerer ungesättigter Carbonsäuren aus der Gruppe Acrylsäure, Methacrylsäure und/oder Maleinsäure
ii) einem oder mehreren Sulfonsäuregruppen-haltigen Monomeren der Formeln Xla, Xlb und/oder Xlc:

   H₂C=CH-X-SO₃H (Xla),

   H₂C=C(CH₃)-X-SO₃H (Xlb),

   HO₃S-X-(R⁶)C=C(R⁷)-X-SO₃H (Xlc),

   in der R⁶ und R⁷ unabhängig voneinander ausgewählt sind aus -H, -CH₃, -CH₂CH₃, -CH₂CH₂CH₃, -CH(CH₃)₂ und X für eine optional vorhandene Spacergruppe steht, die ausgewählt ist aus - (CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-
iii) gegebenenfalls weiteren ionischen oder nichtionogenen Monomeren.

Die Copolymere können die Monomere aus den Gruppen i) und ii) sowie gegebenenfalls iii) in variierenden Mengen enthalten, wobei sämtliche Vertreter aus der Gruppe i) mit sämtlichen Vertretern aus der Gruppe ii) und sämtlichen Vertretern aus der Gruppe iii) kombiniert werden können. Besonders bevorzugte Polymere weisen bestimmte Struktureinheiten auf, die nachfolgend beschrieben werden.

So sind beispielsweise Copolymere bevorzugt, die Struktureinheiten der Formel XII

-[CH₂-CHCOOH]ₘ-[CH₂-CHC(O)-Y-SO₃H]ₚ- (XII),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind.

Diese Polymere werden durch Copolymerisation von Acrylsäure mit einem Sulfonsäuregruppenhaltigen Acrylsäurederivat hergestellt. Copolymerisiert man das Sulfonsäuregruppen-haltige Acrylsäurederivat mit Methacrylsäure, gelangt man zu einem anderen Polymer, dessen Einsatz ebenfalls bevorzugt ist. Die entsprechenden Copolymere enthalten die Struktureinheiten der Formel XIII

-[CH₂-C(CH₃)COOH]ₘ-[CH₂-CHC(O)-Y-SO₃H]ₚ- (XIII),

in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂₋oder -NH-CH(CH₂CH₃)- steht, bevorzugt sind.

Völlig analog lassen sich Acrylsäure und/oder Methacrylsäure auch mit Sulfonsäuregruppenhaltigen Methacrylsäurederivaten copolymerisieren, wodurch die Struktureinheiten im Molekül verändert werden. So sind Copolymere, welche Struktureinheiten der Formel XIV

-[CH₂-CHCOOH]ₘ-[CH₂-C(CH₃)C(O)-Y-SO₃H]ₚ- (XIV),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, ebenso bevorzugt wie Copolymere, der Struktureinheiten der Formel XV

-[CH₂-C(CH₃)COOH]ₘ-[CH₂-C(CH₃)C(O)-Y-SO₃H]ₚ- (XV),

in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂₋oder -NH-CH(CH₂CH₃)- steht.

Anstelle von Acrylsäure und/oder Methacrylsäure bzw. in Ergänzung hierzu kann auch Maleinsäure als besonders bevorzugtes Monomer aus der Gruppe i) eingesetzt werden. Man gelangt auf diese Weise zu erfindungsgemäß bevorzugten Copolymeren, die Struktureinheiten der Formel XVI

-[HOOCCH-CHCOOH]ₘ-[CH₂-CHC(O)-Y-SO₃H]ₚ- (XVI),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind und zu erfindungsgemäß bevorzugten Copolymeren, die Struktureinheiten der Formel XVII

-[HOOCCH-CHCOOH]ₘ [CH₂-C(CH₃)C(O)O-Y-SO₃H]ₚ- (XVII),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht.

Zusammenfassend sind erfindungsgemäß solche Copolymere bevorzugt, die Struktureinheiten der Formeln XII und/oder XI und/oder XIVund/oder XV und/oder XVI und/oder XVII

-[CH₂-CHCOOH]ₘ-[CH₂-CHC(O)-Y-SO₃H]ₚ- (XII),

-[CH₂-C(CH₃)COOH]ₘ-[CH₂-CHC(O)-Y-SO₃H]ₚ- (XIII),

-[CH₂-CHCOOH]ₘ-[CH₂-C(CH₃)C(O)-Y-SO₃H]ₚ- (XIV),

-[CH₂-C(CH₃)COOH]ₘ-[CH₂-C(CH₃)C(O)-Y-SO₃H]ₚ- (XV),

-[HOOCCH-CHCOOH]ₘ-[CH₂-CHC(O)-Y-SO₃H]ₚ- (XVI),

-[HOOCCH-CHCOOH]ₘ-[CH₂-C(CH₃)C(O)O-Y-SO₃H]ₚ- (XVII),

enthalten, in denen m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht.

In den Polymeren können die Sulfonsäuregruppen ganz oder teilweise in neutralisierter Form vorliegen, d.h. daß das acide Wasserstoffatom der Sulfonsäuregruppe in einigen oder allen Sulfonsäuregruppen gegen Metallionen, vorzugsweise Alkalimetallionen und insbesondere gegen Natriumionen, ausgetauscht sein kann. Der Einsatz von teil- oder vollneutralisierten sulfonsäuregruppenhaltigen Copolymeren ist erfindungsgemäß bevorzugt.

Die Monomerenverteilung der erfindungsgemäß bevorzugt eingesetzten Copolymeren beträgt bei Copolymeren, die nur Monomere aus den Gruppen i) und ii) enthalten, vorzugsweise jeweils 5 bis 95 Gew.-% i) bzw. ii), besonders bevorzugt 50 bis 90 Gew.-% Monomer aus der Gruppe i) und 10 bis 50 Gew.-% Monomer aus der Gruppe ii), jeweils bezogen auf das Polymer.

Bei Terpolymeren sind solche besonders bevorzugt, die 20 bis 85 Gew.-% Monomer aus der Gruppe i), 10 bis 60 Gew.-% Monomer aus der Gruppe ii) sowie 5 bis 30 Gew.-% Monomer aus der Gruppe iii) enthalten.

Die Molmasse der erfindungsgemäß bevorzugt eingesetzten Sulfo-Copolymere kann variiert werden, um die Eigenschaften der Polymere dem gewünschten Verwendungszweck anzupassen. Bevorzugte Wasch- oder Reinigungsmittelzusammensetzungen sind dadurch gekennzeichnet, daß die Copolymere Molmassen von 2000 bis 200.000 gmol⁻¹, vorzugsweise von 4000 bis 25.000 gmol⁻¹ und insbesondere von 5000 bis 15.000 gmol⁻¹ aufweisen.

Mit besonderem Vorzug werden weiterhin amphotere oder kationische Polymere eingesetzt. Diese besonders bevorzugten Polymere sind dadurch gekennzeichnet, daß sie mindestens eine positive Ladung aufweisen. Derartige Polymere sind vorzugsweise wasserlöslich oder wasserdispergierbar, das heißt, sie weisen in Wasser bei 25°C eine Löslichkeit oberhalb 10 mg/ml auf.

Besonders bevorzugt kationische oder amphotere Polymere enthalten mindestens eine ethylenisch ungesättigte Monomereinheit der allgemeinen Formel

R¹(R²)C=C(R³)R⁴

in der R¹ bis R⁴ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder - COOH substituierte Alkyl- oder Alkenylreste wie vorstehend definiert, eine heteroatomare Gruppe mit mindestens einer positiv gelandenen Gruppe, einem quaternisierten Stickstoffatom oder zumindest einer Amingruppe mit einer postiven Ladung im pH-Bereich zwischen 2 und 11 oder für -COOH oder -COOR⁵ steht, wobei R⁵ ein gesättigter oder ungesättigter, geradkettigter oder verzweigter Kohlenwasserstoffrest mit 1 bis 12 Kohlenstoffatomen ist.

Beispiele für die vorgenannten (unpolmyerisierten) Monomereinheiten sind Diallylamin, Methyldiallylamin, Dimethyldimethylammoniumsalze, Acrylamidopropyl(trimethyl)ammoniumsalze (R¹, R², und R³, = H, R⁴ = C(O)NH(CH₂)₂N⁺(CH₃)₃ X⁻), Methacrylamidopropyl(trimethyl)ammoniumsalze (R¹ und R² = H, R³ = CH₃ H, R⁴ = C(O)NH(CH₂)₂N⁺(CH₃)₃ X⁻).

Besonders bevorzugt als Bestandteil der amphoteren Polymere werden ungesättigte Carbonsäuren der allgemeinen Formel

R¹(R²)C=C(R³)COOH

eingesetzt, in der R¹ bis R³ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit - NH₂, -OH oder -COOH substituierte Alkyl- oder Alkenylreste wie vorstehend definiert oder für - COOH oder -COOR⁴ steht, wobei R⁴ ein gesättigter oder ungesättigter, geradkettigter oder verzweigter Kohlenwasserstoffrest mit 1 bis 12 Kohlenstoffatomen ist.

Besonders bevorzugte amphotere Polymere enthalten als Monomereinheiten Derivate des Diallylamins, insbesondere Dimethyldiallylammoniumsalz und/oder Methacrylamidopropyl(trimethyl)-ammoniumsalz, vorzugsweise in Form des Chlorids, Bromids, lodids, Hydroxids, Phosphats, Sulfats, Hydrosulfats, Ethylsulfasts, Methylsulfats, Mesylats, Tosylats, Formiats oder Acetats in Kombination mit Monomereinheiten aus der Gruppe der ethylenisch ungesättigten Carbonsäuren.

### Bleichmittel

Unter den als Bleichmittel dienenden, in Wasser H₂O₂ liefernden Verbindungen hat das Natriumpercarbonat besondere Bedeutung. Weitere brauchbare Bleichmittel sind beispielsweise das Natriumperborattetrahydrat und das Natriumperboratmonohydrat, Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure. Erfindungsgemäß können auch Bleichmittel aus der Gruppe der organischen Bleichmittel eingesetzt werden. Typische organische Bleichmittel sind die Diacylperoxide, wie z.B. Dibenzoylperoxid. Weitere typische organische Bleichmittel sind die Peroxysäuren, wobei als Beispiele besonders die Alkylperoxysäuren und die Arylperoxysäuren genannt werden. Bevorzugte Vertreter sind (a) die Peroxybenzoesäure und ihre ringsubstituierten Derivate, wie Alkylperoxybenzoesäuren, aber auch Peroxy-α-Naphtoesäure und Magnesiummonoperphthalat, (b) die aliphatischen oder substituiert aliphatischen Peroxysäuren, wie Peroxylaurinsäure, Peroxystearinsäure, ε-Phthalimidoperoxycapronsäure [Phthaloiminoperoxyhexansäure (PAP)], o-Carboxybenzamidoperoxycapronsäure, N-nonenylamidoperadipinsäure und N-nonenylamidopersuccinate, und (c) aliphatische und araliphatische Peroxydicarbonsäuren, wie 1,12-Diperoxycarbonsäure, 1,9-Diperoxyazelainsäure, Diperocysebacinsäure, Diperoxybrassylsäure, die Diperoxyphthalsäuren, 2-Decyldiperoxybutan-1,4-disäure, N,N-Terephthaloyl-di(6-aminopercapronsäue) können eingesetzt werden.

Als Bleichmittel können auch Chlor oder Brom freisetzende Substanzen eingesetzt werden. Unter den geeigneten Chlor oder Brom freisetzenden Materialien kommen beispielsweise heterocyclische N-Brom- und N-Chloramide, beispielsweise Trichlorisocyanursäure, Tribromisocyanursäure, Dibromisocyanursäure und/oder Dichlorisocyanursäure (DICA) und/oder deren Salze mit Kationen wie Kalium und Natrium in Betracht. Hydantoinverbindungen, wie 1,3-Dichlor-5,5-dimethylhydanthoin sind ebenfalls geeignet.

### Bleichaktivatoren

Bleichaktivatoren werden beispielsweise in Wasch- oder Reinigungsmitteln eingesetzt, um beim Reinigen bei Temperaturen von 60 °C und darunter eine verbesserte Bleichwirkung zu erreichen. Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- bzw. iso-NOBS), Carbonsäureanhydride, insbesondere Phthalsäureanhydrid, acylierte mehrwertige Alkohole, insbesondere Triacetin, Ethylenglykoldiacetat und 2,5-Diacetoxy-2,5-dihydrofuran.

Weitere im Rahmen der vorliegenden Anmeldung bevorzugt eingesetzte Bleichaktivatoren sind Verbindungen aus der Gruppe der kationischen Nitrile, insbesondere kationische Nitrile der Formel 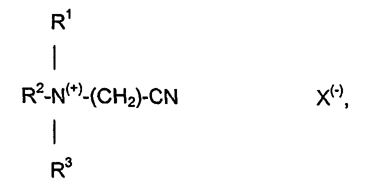 in der R¹ für -H, -CH₃, einen C₂₋₂₄-Alkyl- oder -Alkenylrest, einen substituierten C₂₋₂₄-Alkyl- oder -Alkenylrest mit mindestens einem Substituenten aus der Gruppe -Cl, -Br, -OH, -NH₂, -CN, einen Alkyl- oder Alkenylarylrest mit einer C₁₋₂₄-Alkylgruppe, oder für einen substituierten Alkyl- oder Alkenylarylrest mit einer C₁₋₂₄-Alkylgruppe und mindestens einem weiteren Substituenten am aromatischen Ring steht, R² und R³ unabhängig voneinander ausgewählt sind aus -CH₂-CN, -CH₃, -CH₂-CH₃, -CH₂-CH₂-CH₃, -CH(CH₃)-CH₃, -CH₂-OH, -CH₂-CH₂-OH, -CH(OH)-CH₃, -CH₂₋CH₂-CH₂-OH, -CH₂-CH(OH)-CH₃, -CH(OH)-CH₂-CH₃, -(CH₂CH₂-O)ₙH mit n = 1, 2, 3, 4, 5 oder 6 und X ein Anion ist.

Besonders bevorzugt ist ein kationisches Nitril der Formel 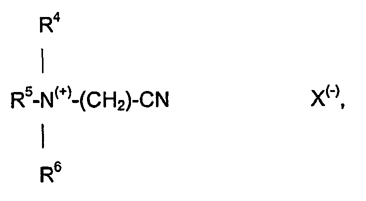 in der R⁴, R⁵ und R⁶ unabhängig voneinander ausgewählt sind aus -CH₃, -CH₂-CH₃, -CH₂-CH₂₋CH₃, -CH(CH₃)-CH₃, wobei R⁴ zusätzlich auch -H sein kann und X ein Anion ist, wobei vorzugsweise R⁵ = R⁶ = -CH₃ und insbesondere R⁴ = R⁵ = R⁶ = -CH₃ gilt und Verbindungen der Formeln (CH₃)₃N⁽⁺⁾CH₂-CN X⁻, (CH₃CH₂)₃N⁽⁺⁾CH₂-CN X⁻, (CH₃CH₂CH₂)₃N⁽⁺⁾CH₂-CN X⁻, (CH₃CH(CH₃))₃N⁽⁺⁾CH₂-CN X⁻, oder (HO-CH₂-CH₂)₃N⁽⁺⁾CH₂-CN X⁻ besonders bevorzugt sind, wobei aus der Gruppe dieser Substanzen wiederum das kationische Nitril der Formel (CH₃)₃N⁽⁺⁾CH₂-CN X⁻, in welcher X⁻ für ein Anion steht, das aus der Gruppe Chlorid, Bromid, lodid, Hydrogensulfat, Methosulfat, p-Toluolsulfonat (Tosylat) oder Xylolsulfonat ausgewählt ist, besonders bevorzugt wird.

Als Bleichaktivatoren können weiterhin Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- bzw. iso-NOBS), Carbonsäureanhydride, insbesondere Phthalsäureanhydrid, acylierte mehrwertige Alkohole, insbesondere Triacetin, Ethylenglykoldiacetat, 2,5-Diacetoxy-2,5-dihydrofuran, n-Methyl-Morpholinium-Acetonitril-Methylsulfat (MMA) sowie acetyliertes Sorbitol und Mannitol beziehungsweise deren Mischungen (SORMAN), acylierte Zuckerderivate, insbesondere Pentaacetylglukose (PAG), Pentaacetylfruktose, Tetraacetylxylose und Octaacetyllactose sowie acetyliertes, gegebenenfalls N-alkyliertes Glucamin und Gluconolacton, und/oder N-acylierte Lactame, beispielsweise N-Benzoylcaprolactam. Hydrophil substituierte Acylacetale und 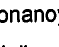 Acyllactame werden ebenfalls bevorzugt eingesetzt. Auch Kombinationen konventioneller Bleichaktivatoren können eingesetzt werden.

Zusätzlich zu den konventionellen Bleichaktivatoren oder an deren Stelle können auch sogenannte Bleichkatalysatoren eingesetzt werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder -carbonylkomplexe. Auch Mn-, Fe-, Co-, Ru-, Mo-, Ti-, V- und Cu-Komplexe mit N-haltigen Tripod-Liganden sowie Co-, Fe-, Cu- und Ru-Amminkomplexe sind als Bleichkatalysatoren verwendbar.

Sofern neben den Nitrilquats weitere Bleichaktivatoren eingesetzt werden sollen, werden bevorzugt Bleichaktivatoren aus der Gruppe der mehrfach acylierte Alkylendiamine, insbesondere Tetraacetylethylendiamin (TAED), N-Acylimide, insbesondere N-Nonanoylsuccinimid (NOSI), acylierte Phenolsulfonate, insbesondere n-Nonanoyl- oder Isononanoyloxybenzolsulfonat (n- bzw. iso-NOBS), n-Methyl-Morpholinium-Acetonitril-Methylsulfat (MMA), vorzugsweise in Mengen bis 10 Gew.-%, insbesondere 0,1 Gew.-% bis 8 Gew.-%, besonders 2 bis 8 Gew.-% und besonders bevorzugt 2 bis 6 Gew.-%, jeweils bezogen auf das Gesamtgewicht der bleichaktivatorhaltigen Mittel, eingesetzt.

Bleichverstärkende Übergangsmetallkomplexe, insbesondere mit den Zentralatomen Mn, Fe, Co, Cu, Mo, V, Ti und/oder Ru, bevorzugt ausgewählt aus der Gruppe der Mangan und/oder Cobaltsalze und/oder -komplexe, besonders bevorzugt der Cobalt(ammin)-Komplexe, der Cobalt(acetat)-Komplexe, der Cobalt(Carbonyl)-Komplexe, der Chloride des Cobalts oder Mangans, des Mangansulfats werden in üblichen Mengen, vorzugsweise in einer Menge bis zu 5 Gew.-%, insbesondere von 0,0025 Gew.-% bis 1 Gew.-% und besonders bevorzugt von 0,01 Gew.-% bis 0,25 Gew.-%, jeweils bezogen auf das Gesamtgewicht der bleichaktivatorhaltigen Mittel, eingesetzt. Aber in spezielle Fällen kann auch mehr Bleichaktivator eingesetzt werden.

### Glaskorrosionsinhibitoren

Glaskorrosionsinhibitoren verhindern das Auftreten von Trübungen, Schlieren und Kratzern aber auch das Irisieren der Glasoberfläche von maschinell gereinigten Gläsern. Bevorzugte Glaskorrosionsinhibitoren stammen aus der Gruppe der Magnesium- und/oder Zinksalze und/oder Magnesium- und/oder Zinkkomplexe.

Eine bevorzugte Klasse von Verbindungen, die zur Verhinderung der Glaskorrosion eingesetzt werden können, sind unlösliche Zinksalze.

Unlösliche Zinksalze im Sinne dieser bevorzugten Ausführungsform sind Zinksalze, die eine Löslichkeit von maximal 10 Gramm Zinksalz pro Liter Wasser bei 20°C besitzen. Beispiele für erfindungsgemäß besonders bevorzugte unlösliche Zinksalze sind Zinksilikat, Zinkcarbonat, Zinkoxid, basisches Zinkcarbonat (Zn₂(OH)₂CO₃), Zinkhydroxid, Zinkoxalat, Zinkmonophosphat (Zn₃(PO₄)₂), und Zinkpyrophosphat (Zn₂(P₂O₇)).

Die genannten Zinkverbindungen werden vorzugsweise in Mengen eingesetzt, die einen Gehalt der Mittel an Zinkionen zwischen 0,02 und 10 Gew.-%, vorzugsweise zwischen 0,1 und 5,0 Gew.-% und insbesondere zwischen 0,2 und 1,0 Gew.-%, jeweils bezogen auf das gesamte glaskorrosionsinhibitorhaltige Mittel, bewirken. Der exakte Gehalt der Mittel am Zinksalz bzw. den Zinksalzen ist naturgemäß abhängig von der Art der Zinksalze - je weniger löslich das eingesetzte Zinksalz ist, umso höher sollte dessen Konzentration in den Mitteln sein.

Da die unlöslichen Zinksalze während des Geschirreinigungsvorgangs größtenteils unverändert bleiben, ist die Partikelgröße der Salze ein zu beachtendes Kriterium, damit die Salze nicht auf Glaswaren oder Maschinenteilen anhaften. Hier sind Mittel bevorzugt, bei denen die unlöslichen Zinksalze eine Partikelgröße unterhalb 1,7 Millimeter aufweisen.

Wenn die maximale Partikelgröße der unlöslichen Zinksalze unterhalb 1,7 mm liegt, sind unlösliche Rückstände in der Geschirrspülmaschine nicht zu befürchten. Vorzugsweise hat das unlösliche Zinksalz eine mittlere Partikelgröße, die deutlich unterhalb dieses Wertes liegt, um die Gefahr unlöslicher Rückstände weiter zu minimieren, beispielsweise eine mittlere Partikelgröße kleiner 250 µm. Dies gilt wiederum umso mehr, je weniger das Zinksalz löslich ist. Zudem steigt die glaskorrosionsinhibierende Effektivität mit sinkender Partikelgröße. Bei sehr schlecht löslichen Zinksalzen liegt die mittlere Partikelgröße vorzugsweise unterhalb von 100 µm. Für noch schlechter lösliche Salze kann sie noch niedriger liegen; beispielsweise sind für das sehr schlecht lösliche Zinkoxid mittlere Partikelgrößen unterhalb von 100 µm bevorzugt.

Eine weitere bevorzugte Klasse von Verbindungen sind Magnesium- und/oder Zinksalz(e) mindestens einer monomeren und/oder polymeren organischen Säure. Diese bewirken, daß auch bei wiederholter Benutzung die Oberflächen gläsernen Spülguts nicht korrosiv verändert, insbesondere keine Trübungen, Schlieren oder Kratzer aber auch kein Irisieren der Glasoberflächen verursacht werden.

Obwohl alle Magnesium- und/oder Zinksalz(e) monomerer und/oder polymerer organischer Säuren eingesetzt werden können, werden doch, wie vorstehend beschrieben, die Magnesium- und/oder Zinksalze monomerer und/oder polymerer organischer Säuren aus den Gruppen der unverzweigten gesättigten oder ungesättigten Monocarbonsäuren, der verzweigten gesättigten oder ungesättigten Monocarbonsäuren, der gesättigten und ungesättigten Dicarbonsäuren, der aromatischen Mono-, Di- und Tricarbonsäuren, der Zuckersäuren, der Hydroxysäuren, der Oxosäuren, der Aminosäuren und/oder der polymeren Carbonsäuren bevorzugt.

Das Spektrum der erfindungsgemäß bevorzugten Zinksalze organischer Säuren, vorzugsweise organischer Carbonsäuren, reicht von Salzen, die in Wasser schwer oder nicht löslich sind, also eine Löslichkeit unterhalb 100 mg/L, vorzugsweise unterhalb 10 mg/L, insbesondere keine Löslichkeit aufweisen, bis zu solchen Salzen, die in Wasser eine Löslichkeit oberhalb 100 mg/L, vorzugsweise oberhalb 500 mg/L, besonders bevorzugt oberhalb 1 g/L und insbesondere oberhalb 5 g/L aufweisen (alle Löslichkeiten bei 20°C Wassertemperatur). Zu der ersten Gruppe von Zinksalzen gehören beispielsweise das Zinkcitrat, das Zinkoleat und das Zinkstearat, zu der Gruppe der löslichen Zinksalze gehören beispielsweise das Zinkformiat, das Zinkacetat, das Zinklactat und das Zinkgluconat.

Mit besonderem Vorzug wird als Glaskorrosionsinhibitor mindestens ein Zinksalz einer organischen Carbonsäure, besonders bevorzugt um ein Zinksalz aus der Gruppe Zinkstearat, Zinkoleat, Zinkgluconat, Zinkacetat, Zinklactat und/oder Zinkcitrat eingesetzt. Auch Zinkricinoleat, Zinkabietat und Zinkoxalat sind bevorzugt.

Im Rahmen der vorliegenden Erfindung beträgt der Gehalt von Reinigungsmitteln an Zinksalz vorzugsweise zwischen 0,1 bis 5 Gew.-%, bevorzugt zwischen 0,2 bis 4 Gew.-% und insbesondere zwischen 0,4 bis 3 Gew.-%, bzw. der Gehalt an Zink in oxidierter Form (berechnet als Zn²⁺) zwischen 0,01 bis 1 Gew.-%, vorzugsweise zwischen 0,02 bis 0,5 Gew.-% und insbesondere zwischen 0,04 bis 0,2 Gew.-%, jeweils bezogen auf das Gesamtgewicht des glaskorrosionsinhibitorhaltigen Mittels.

### Korrosionsinhibitoren

Korrosionsinhibitoren dienen dem Schutze des Spülgutes oder der Maschine, wobei im Bereich des maschinellen Geschirrspülens besonders Silberschutzmittel eine besondere Bedeutung haben. Einsetzbar sind die bekannten Substanzen des Standes der Technik. Allgemein können vor allem Silberschutzmittel ausgewählt aus der Gruppe der Triazole, der Benzotriazole, der Bisbenzotriazole, der Aminotriazole, der Alkylaminotriazole und der Übergangsmetallsalze oder - komplexe eingesetzt werden. Besonders bevorzugt zu verwenden sind Benzotriazol und/oder Alkylaminotriazol. Als Beispiele der erfindungsgemäß bevorzugt einzusetzenden 3-Amino-5-alkyl-1,2,4-triazole können genannt werden: 5,- -Propyl-, -Butyl-, -Pentyl-, -Heptyl-, -Octyl-, -Nonyl-, - Decyl-, -Undecyl-, -Dodecyl-, -Isononyl-, -Versatic-10-säurealkyl-, -Phenyl-, -p-Tolyl-, -(4-tert. Butylphenyl)-, -(4-Methoxyphenyl)-, -(2-, -3-, -4-Pyridyl)-, -(2-Thienyl)-, -(5-Methyl-2-furyl)-, -(5-Oxo-2-pyrrolidinyl)-, -3-amino-1,2,4-triazol. In Geschirrspülmitteln werden die Alkyl-amino-1,2,4-triazole bzw. ihre physiologisch verträglichen Salze in einer Konzentration von 0,001 bis 10 Gew.-%, vorzugsweise 0,0025 bis 2 Gew.-%, besonders bevorzugt 0,01 bis 0,04 Gew.-% eingesetzt. Bevorzugte Säuren für die Salzbildung sind Salzsäure, Schwefelsäure, Phosphorsäure, Kohlensäure, schweflige Säure, organische Carbonsäuren wie Essig-, Glykol-, Citronen-, Bernsteinsäure. Ganz besonders wirksam sind 5-Pentyl-, 5-Heptyl-, 5-Nonyl-, 5-Undecyl-, 5-Isononyl-, 5-Versatic-10-säurealkyl-3-amino-1,2,4-triazole sowie Mischungen dieser Substanzen.

Man findet in Reinigerformulierungen darüber hinaus häufig aktivchlorhaltige Mittel, die das Korrodieren der Silberoberfläche deutlich vermindern können. In chlorfreien Reinigern werden besonders Sauerstoff- und stickstoffhaltige organische redoxaktive Verbindungen, wie zwei- und dreiwertige Phenole, z. B. Hydrochinon, Brenzkatechin, Hydroxyhydrochinon, Gallussäure, Phloroglucin, Pyrogallol bzw. Derivate dieser Verbindungsklassen. Auch salz- und komplexartige anorganische Verbindungen, wie Salze der Metalle Mn, Ti, Zr, Hf, V, Co und Ce finden häufig Verwendung. Bevorzugt sind hierbei die Übergangsmetallsalze, die ausgewählt sind aus der Gruppe der Mangan und/oder Cobaltsalze und/oder -komplexe, besonders bevorzugt der Cobalt(ammin)-Komplexe, der Cobalt(acetat)-Komplexe, der Cobalt-(Carbonyl)-Komplexe, der Chloride des Cobalts oder Mangans und des Mangansulfats. Ebenfalls können Zinkverbindungen zur Verhinderung der Korrosion am Spülgut eingesetzt werden.

Anstelle von oder zusätzlich zu den vorstehend beschriebenen Silberschutzmitteln, beispielsweise den Benzotriazolen, können redoxaktive Substanzen eingesetzt werden. Diese Substanzen sind vorzugsweise anorganische redoxaktive Substanzen aus der Gruppe der Mangan-, Titian-, Zirkonium-, Hafnium-, Vanadium-, Cobalt- und Cer-Salze und/oder -Komplexe enthält, wobei die Metalle vorzugsweise in einer der Oxidationsstufen II, III, IV, V oder VI vorliegen.

Die verwendeten Metallsalze bzw. Metallkomplexe sollen zumindest teilweise in Wasser löslich sein. Die zur Salzbildung geeigneten Gegenionen umfassen alle üblichen ein-, zwei-, oder dreifach negativ geladenen anorganischen Anionen, z. B. Oxid, Sulfat, Nitrat, Fluorid, aber auch organische Anionen wie z. B. Stearat.

Metallkomplexe im Sinne der Erfindung sind Verbindungen, die aus einem Zentralatom und einem oder mehreren Liganden sowie gegebenenfalls zusätzlich einem oder mehreren der o.g. Anionen bestehen. Das Zentralatom ist eines der o.g. Metalle in einer der o.g. Oxidationsstufen. Die Liganden sind neutrale Moleküle oder Anionen, die ein- oder mehrzähnig sind; der Begriff "Liganden" im Sinne der Erfindung ist z.B. in "Römpp Chemie Lexikon, Georg Thieme Verlag Stuttgart/New York, 9. Auflage, 1990, Seite 2507" näher erläutert. Ergänzen sich in einem Metallkomplex die Ladung des Zentralatoms und die Ladung des/der Liganden nicht auf Null, so sorgt, je nachdem, ob ein kationischer oder ein anionischer Ladungsüberschuß vorliegt, entweder eines oder mehrere der o.g. Anionen oder ein oder mehrere Kationen, z. B. Natrium-, Kalium-, Ammoniumionen, für den Ladungsausgleich. Geeignete Komplexbildner sind z.B. Citrat, Acetylacetonat oder 1-Hydroxyethan-1,1-diphosphonat.

Die in der Chemie geläufige Definition für "Oxidationsstufe" ist z.B. in "Römpp Chemie Lexikon, Georg Thieme Verlag Stuttgart/New York, 9. Auflage, 1991, Seite 3168" wiedergegeben.

Besonders bevorzugte Metallsalze und/oder Metallkomplexe sind ausgewählt aus der Gruppe MnSO₄, Mn(II)-citrat, Mn(II)-stearat, Mn(II)-acetylacetonat, Mn(II)-[1-Hydroxyethan-1,1-diphosphonat], V₂O₅, V₂O₄, VO₂, TiOSO₄, K₂TiF₆, K₂ZrF₆, CoSO₄, Co(NO₃)₂, Ce(NO₃)₃ sowie deren Gemische., so daß bevorzugte erfindungsgemäße maschinelle Geschirrspülmittel dadurch gekennzeichnet sind, daß die Metallsalze und/oder Metallkomplexe ausgewählt sind aus der Gruppe MnSO₄, Mn(II)-citrat, Mn(II)-stearat, Mn(II)-acetylacetonat, Mn(II)-[1-Hydroxyethan-1,1-diphosphonat], V₂O₅, V₂O₄, VO₂, TiOSO₄, K₂TiF₆, K₂ZrF₆, CoSO₄, Co(NO₃)₂, Ce(NO₃)₃.

Bei diesen Metallsalzen bzw. Metallkomplexen handelt es sich im allgemeinen um handelsübliche Substanzen, die zum Zwecke des Silberkorrosions-Schutzes ohne vorherige Reinigung in den erfindungsgemäßen Mitteln eingesetzt werden können. So ist z.B. das aus der SO₃-Herstellung (Kontaktverfahren) bekannte Gemisch aus fünf- und vierwertigem Vanadium (V₂O₅, VO₂, V₂O₄) geeignet, ebenso wie das durch Verdünnen einer Ti(SO₄)₂-Lösung entstehende Titanylsulfat, TiOSO₄.

Die anorganischen redoxaktiven Substanzen, insbesondere Metallsalze bzw. Metallkomplexe sind vorzugsweise gecoatet, d.h. vollständig mit einem wasserdichten, bei den Reinigungstemperaturen aber leichtlöslichen Material überzogen, um ihre vorzeitige Zersetzung oder Oxidation bei der Lagerung zu verhindern. Bevorzugte Coatingmaterialien, die nach bekannten Verfahren, etwa Schmelzcoatingverfahren nach Sandwik aus der Lebensmittelindustrie, aufgebracht werden, sind Paraffine, Mikrowachse, Wachse natürlichen Ursprungs wie Camaubawachs, Candellilawachs, Bienenwachs, höherschmelzende Alkohole wie beispielsweise Hexadecanol, Seifen oder Fettsäuren. Dabei wird das bei Raumtemperatur feste Coatingmaterial in geschmolzenem Zustand auf das zu coatende Material aufgebracht, z.B. indem feinteiliges zu coatendes Material in kontinuierlichem Strom durch eine ebenfalls kontinuierlich erzeugte Sprühnebelzone des geschmolzenen Coatingmaterials geschleudert wird. Der Schmelzpunkt muß so gewählt sein, daß sich das Coatingmaterial während der Silberbehandlung leicht löst bzw. schnell aufschmilzt. Der Schmelzpunkt sollte idealerweise im Bereich zwischen 45°C und 65°C und bevorzugt im Bereich 50°C bis 60°C liegen.

Die genannten Metallsalze und/oder Metallkomplexe sind in Reinigungsmitteln, vorzugsweise in einer Menge von 0,05 bis 6 Gew.-%, vorzugsweise 0,2 bis 2,5 Gew.-%, jeweils bezogen auf das gesamte korrosionsinhibitorhaltige Mittel enthalten.

### Enzyme

Zur Steigerung der Wasch-, beziehungsweise Reinigungsleistung von Wasch- oder Reinigungsmitteln sind Enzyme einsetzbar. Hierzu gehören insbesondere Proteasen, Amylasen, Lipasen, Hemicellulasen, Cellulasen oder Oxidoreduktasen, sowie vorzugsweise deren Gemische. Diese Enzyme sind im Prinzip natürlichen Ursprungs; ausgehend von den natürlichen Molekülen stehen für den Einsatz in Wasch- und Reinigungsmitteln verbesserte Varianten zur Verfügung, die entsprechend bevorzugt eingesetzt werden. Erfindungsgemäße Mittel enthalten Enzyme vorzugsweise in Gesamtmengen von 1 x 10⁻⁶ bis 5 Gewichts-Prozent bezogen auf aktives Protein. Die Proteinkonzentration kann mit Hilfe bekannter Methoden, zum Beispiel dem BCA-Verfahren oder dem Biuret-Verfahren bestimmt werden.

Unter den Proteasen sind solche vom Subtilisin-Typ bevorzugt. Beispiele hierfür sind die Subtilisine BPN' und Carlsberg, die Protease PB92, die Subtilisine 147 und 309, die Alkalische Protease aus *Bacillus lentus,* Subtilisin DY und die den Subtilasen, nicht mehr jedoch den Subtilisinen im engeren Sinne zuzuordnenden Enzyme Thermitase, Proteinase K und die Proteasen TW3 und TW7. Subtilisin Carlsberg ist in weiterentwickelter Form unter dem Handelsnamen Alcalase^{®} von der Firma Novozymes A/S, Bagsværd, Dänemark, erhältlich. Die Subtilisine 147 und 309 werden unter den Handelsnamen Esperase^{®}, beziehungsweise Savinase^{®} von der Firma Novozymes vertrieben. Von der Protease aus *Bacillus lentus* DSM 5483 leiten sich die unter der Bezeichnung BLAP^{®} geführten Varianten ab.

Weitere brauchbare Proteasen sind beispielsweise die unter den Handelsnamen Durazym^{®}, Relase^{®}, Everlase^{®}, Nafizym, Natalase^{®}, Kannase^{®} und Ovozymes^{®} von der Firma Novozymes, die unter den Handelsnamen, Purafect^{®}, Purafect^{®} OxP und Properase^{®} von der Firma Genencor, das unter dem Handelsnamen Protosol^{®} von der Firma Advanced Biochemicals Ltd., Thane, Indien, das unter dem Handelsnamen Wuxi^{®} von der Firma Wuxi Snyder Bioproducts Ltd., China, die unter den Handelsnamen Proleather^{®} und Protease P^{®} von der Firma Amano Pharmaceuticals Ltd., Nagoya, Japan, und das unter der Bezeichnung Proteinase K-16 von der Firma Kao Corp., Tokyo, Japan, erhältlichen Enzyme.

Beispiele für erfindungsgemäß einsetzbare Amylasen sind die α-Amylasen aus *Bacillus licheniformis,* aus *B. amyloliquefaciens* oder aus *B. stearothermophilus* sowie deren für den Einsatz in Wasch- und Reinigungsmitteln verbesserte Weiterentwicklungen. Das Enzym aus *B. licheniformis* ist von der Firma Novozymes unter dem Namen Termamyl^{®} und von der Firma Genencor unter dem Namen Purastar^{®}ST erhältlich. Weiterentwicklungsprodukte dieser α-Amylase sind von der Firma Novozymes unter den Handelsnamen Duramyl^{®} und Termamyl^{®}ultra, von der Firma Genencor unter dem Namen Purastar^{®}OxAm und von der Firma Daiwa Seiko Inc., Tokyo, Japan, als Keistase^{®} erhältlich. Die α-Amylase von *B. amyloliquefaciens* wird von der Firma Novozymes unter dem Namen BAN^{®} vertrieben, und abgeleitete Varianten von der α-Amylase aus *B. stearothermophilus* unter den Namen BSG^{®} und Novamyl^{®}, ebenfalls von der Firma Novozymes.

Desweiteren sind für diesen Zweck die α-Amylase aus *Bacillus sp.* A 7-7 (DSM 12368) und die Cyclodextrin-Glucanotransferase (CGTase) aus *B. agaradherens* (DSM 9948) hervorzuheben.

Darüber hinaus sind die unter den Handelsnamen Fungamyl^{®} von der Firma Novozymes erhältlichen Weiterentwicklungen der α-Amylase aus *Aspergillus niger* und *A*. *oryzae* geeignet. Ein weiteres Handelsprodukt ist beispielsweise die Amylase-LT^{®}.

Erfindungsgemäß einsetzbar sind weiterhin Lipasen oder Cutinasen, insbesondere wegen ihrer Triglycerid-spaltenden Aktivitäten, aber auch, um aus geeigneten Vorstufen *in situ* Persäuren zu erzeugen. Hierzu gehören beispielsweise die ursprünglich aus *Humicola lanuginosa* (*Thermomyces lanuginosus*) erhältlichen, beziehungsweise weiterentwickelten Lipasen, insbesondere solche mit dem Aminosäureaustausch D96L. Sie werden beispielsweise von der Firma Novozymes unter den Handelsnamen Lipolase^{®}, Lipolase^{®}Ultra, LipoPrime^{®}, Lipozyme^{®} und Lipex^{®} vertrieben. Desweiteren sind beispielsweise die Cutinasen einsetzbar, die ursprünglich aus *Fusarium solani pisi und Humicola insolens* isoliert worden sind. Ebenso brauchbare Lipasen sind von der Firma Amano unter den Bezeichnungen Lipase CE^{®}, Lipase P^{®}, Lipase B^{®}, beziehungsweise Lipase CES^{®}, Lipase AKG^{®}, Bacillis sp. Lipase^{®}, Lipase AP^{®}, Lipase M-AP^{®} und Lipase AML^{®} erhältlich. Von der Firma Genencor sind beispielsweise die Lipasen, beziehungsweise Cutinasen einsetzbar, deren Ausgangsenzyme ursprünglich aus *Pseudomonas mendocina* und *Fusarium solanii* isoliert worden sind. Als weitere wichtige Handelsprodukte sind die ursprünglich von der Firma Gist-Brocades vertriebenen Präparationen M1 Lipase^{®} und Lipomax^{®} und die von der Firma Meito Sangyo KK, Japan, unter den Namen Lipase MY-30^{®}, Lipase OF^{®} und Lipase PL^{®} vertriebenen Enzyme zu erwähnen, ferner das Produkt Lumafast^{®} von der Firma Genencor.

Weiterhin können Enzyme eingesetzt werden, die unter dem Begriff Hemicellulasen zusammengefaßt werden. Hierzu gehören beispielsweise Mannanasen, Xanthanlyasen, Pektinlyasen (=Pektinasen), Pektinesterasen, Pektatlyasen, Xyloglucanasen (=Xylanasen), Pullulanasen und β-Glucanasen. Geeignete Mannanasen sind beispielsweise unter den Namen Gamanase^{®} und Pektinex AR^{®} von der Firma Novozymes, unter dem Namen Rohapec^{®} B1L von der Firma AB Enzymes und unter dem Namen Pyrolase^{®} von der Firma Diversa Corp., San Diego, CA, USA erhältlich. Die aus *B. subtilis* gewonnene β-Glucanase ist unter dem Namen Cereflo^{®} von der Firma Novozymes erhältlich.

Zur Erhöhung der bleichenden Wirkung können erfindungsgemäß Oxidoreduktasen, beispielsweise Oxidasen, Oxygenasen, Katalasen, Peroxidasen, wie Halo-, Chloro-, Bromo-, Lignin-, Glucose- oder Mangan-peroxidasen, Dioxygenasen oder Laccasen (Phenoloxidasen, Polyphenoloxidasen) eingesetzt werden. Als geeignete Handelsprodukte sind Denilite^{®} 1 und 2 der Firma Novozymes zu nennen. Vorteilhafterweise werden zusätzlich vorzugsweise organische, besonders bevorzugt aromatische, mit den Enzymen wechselwirkende Verbindungen zugegeben, um die Aktivität der betreffenden Oxidoreduktasen zu verstärken (Enhancer) oder um bei stark unterschiedlichen Redoxpotentialen zwischen den oxidierenden Enzymen und den Anschmutzungen den Elektronenfluß zu gewährleisten (Mediatoren).

Die Enzyme stammen beispielsweise entweder ursprünglich aus Mikroorganismen, etwa der Gattungen *Bacillus, Streptomyces, Humicola,* oder *Pseudomonas,* und/oder werden nach an sich bekannten biotechnologischen Verfahren durch geeignete Mikroorganismen produziert, etwa durch transgene Expressionswirte der Gattungen *Bacillus* oder filamentöse Fungi.

Die Aufreinigung der betreffenden Enzyme erfolgt vorzugsweise über an sich etablierte Verfahren, beispielsweise über Ausfällung, Sedimentation, Konzentrierung, Filtration der flüssigen Phasen, Mikrofiltration, Ultrafiltration, Einwirken von Chemikalien, Desodorierung oder geeignete Kombinationen dieser Schritte.

Die Enzyme können in jeder nach dem Stand der Technik etablierten Form eingesetzt werden. Hierzu gehören beispielsweise die durch Granulation, Extrusion oder Lyophilisierung erhaltenen festen Präparationen oder, insbesondere bei flüssigen oder gelförmigen Mitteln, Lösungen der Enzyme, vorteilhafterweise möglichst konzentriert, wasserarm und/oder mit Stabilisatoren versetzt.

Alternativ können die Enzyme sowohl für die feste als auch für die flüssige Darreichungsform verkapselt werden, beispielsweise durch Sprühtrocknung oder Extrusion der Enzymlösung zusammen mit einem, vorzugsweise natürlichen Polymer oder in Form von Kapseln, beispielsweise solchen, bei denen die Enzyme wie in einem erstarrten Gel eingeschlossen sind oder in solchen vom Kern-Schale-Typ, bei dem ein enzymhaltiger Kern mit einer Wasser-, Luft-und/oder Chemikalien-undurchlässigen Schutzschicht überzogen ist. In aufgelagerten Schichten können zusätzlich weitere Wirkstoffe, beispielsweise Stabilisatoren, Emulgatoren, Pigmente, Bleich- oder Farbstoffe aufgebracht werden. Derartige Kapseln werden nach an sich bekannten Methoden, beispielsweise durch Schüttel- oder Rollgranulation oder in Fluid-bed-Prozessen aufgebracht. Vorteilhafterweise sind derartige Granulate, beispielsweise durch Aufbringen polymerer Filmbildner, staubarm und aufgrund der Beschichtung lagerstabil.

Weiterhin ist es möglich, zwei oder mehrere Enzyme zusammen zu konfektionieren, so daß ein einzelnes Granulat mehrere Enzymaktivitäten aufweist.

Ein Protein und/oder Enzym kann besonders während der Lagerung gegen Schädigungen wie beispielsweise Inaktivierung, Denaturierung oder Zerfall etwa durch physikalische Einflüsse, Oxidation oder proteolytische Spaltung geschützt werden. Bei mikrobieller Gewinnung der Proteine und/oder Enzyme ist eine Inhibierung der Proteolyse besonders bevorzugt, insbesondere wenn auch die Mittel Proteasen enthalten. Erfindungsgemäße Mittel können zu diesem Zweck Stabilisatoren enthalten; die Bereitstellung derartiger Mittel stellt eine bevorzugte Ausführungsform der vorliegenden Erfindung dar.

Eine Gruppe von Stabilisatoren sind reversible Proteaseinhibitoren. Häufig werden Benzamidin-Hydrochlorid, Borax, Borsäuren, Boronsäuren oder deren Salze oder Ester verwendet, darunter vor allem Derivate mit aromatischen Gruppen, etwa ortho-substituierte, meta-substituierte und para-substituierte Phenylboronsäuren, beziehungsweise deren Salze oder Ester. Als peptidische Proteaseinhibitoren sind unter anderem Ovomucoid und Leupeptin zu erwähnen; eine zusätzliche Option ist die Bildung von Fusionsproteinen aus Proteasen und Peptid-Inhibitoren.

Weitere Enzymstabilisatoren sind Aminoalkohole wie Mono-, Di-, Triethanol- und -Propanolamin und deren Mischungen, aliphatische Carbonsäuren bis zu C₁₂, wie Bernsteinsäure, andere Dicarbonsäuren oder Salze der genannten Säuren. Auch endgruppenverschlossene Fettsäureamidalkoxylate sind geeignet. Bestimmte als Builder eingesetzte organische Säuren vermögen zusätzlich ein enthaltenes Enzym zu stabilisieren.

Niedere aliphatische Alkohole, vor allem aber Polyole, wie beispielsweise Glycerin, Ethylenglykol, Propylenglykol oder Sorbit sind weitere häufig eingesetzte Enzymstabilisatoren. Ebenso werden Calciumsalze verwendet, wie beispielsweise Calciumacetat oder Calcium-Formiat, und Magnesiumsalze.

Polyamid-Oligomere oder polymere Verbindungen wie Lignin, wasserlösliche Vinyl-Copolymere oder Cellulose-Ether, Acryl-Polymere und/oder Polyamide stabilisieren die Enzym-Präparation unter anderem gegenüber physikalischen Einflüssen oder pH-Wert-Schwankungen. Polyamin-N-Oxid-enthaltende Polymere wirken als Enzymstabilisatoren. Andere polymere Stabilisatoren sind die linearen C₈-C₁₈ Polyoxyalkylene. Alkylpolyglycoside können die enzymatischen Komponenten des erfindungsgemäßen Mittels stabilisieren und sogar in ihrer Leistung steigern. Vernetzte N-haltige Verbindungen wirken ebenfalls als Enzym-Stabilisatoren.

Reduktionsmittel und Antioxidantien erhöhen die Stabilität der Enzyme gegenüber oxidativem Zerfall. Ein schwefelhaltiges Reduktionsmittel ist beispielsweise Natrium-Sulfit.

Bevorzugt werden Kombinatonen von Stabilisatoren verwendet, beispielsweise aus Polyolen, Borsäure und/oder Borax, die Kombination von Borsäure oder Borat, reduzierenden Salzen und Bernsteinsäure oder anderen Dicarbonsäuren oder die Kombination von Borsäure oder Borat mit Polyolen oder Polyaminoverbindungen und mit reduzierenden Salzen. Die Wirkung von Peptid-Aldehyd-Stabilisatoren wird durch die Kombination mit Borsäure und/oder Borsäurederivaten und Polyolen gesteigert und durch die zusätzliche Verwendung von zweiwertigen Kationen, wie zum Beispiel Calcium-lonen weiter verstärkt.

Bevorzugt werden ein oder mehrere Enzyme und/oder Enzymzubereitungen, vorzugsweise feste Protease-Zubereitungen und/oder Amylase-Zubereitungen, in Mengen von 0,1 bis 5 Gew.-%, vorzugsweise von 0,2 bis 4,5 und insbesondere von 0,4 bis 4 Gew.-%, jeweils bezogen auf das gesamte enzymhaltige Mittel, eingesetzt.

### Desintegrationshilfsmittel

Um den Zerfall vorgefertigter Formkörper zu erleichtern, ist es möglich, Desintegrationshilfsmittel, sogenannte Tablettensprengmittel, in diese Mittel einzuarbeiten, um die Zerfallszeiten zu verkürzen. Unter Tablettensprengmitteln bzw. Zerfallsbeschleunigern werden gemäß Römpp (9. Auflage, Bd. 6, S. 4440) und Voigt *"Lehrbuch der pharmazeutischen Technologie"* (6. Auflage, 1987, S. 182-184) Hilfsstoffe verstanden, die für den raschen Zerfall von Tabletten in Wasser oder Magensaft und für die Freisetzung der Pharmaka in resorbierbarer Form sorgen.

Diese Stoffe, die auch aufgrund ihrer Wirkung als "Spreng"mittel bezeichnet werden, vergrößern bei Wasserzutritt ihr Volumen, wobei einerseits das Eigenvolumen vergrößert (Quellung), andererseits auch über die Freisetzung von Gasen ein Druck erzeugt werden kann, der die Tablette in kleinere Partikel zerfallen läßt. Altbekannte Desintegrationshilfsmittel sind beispielsweise Carbonat/Citronensäure-Systeme, wobei auch andere organische Säuren eingesetzt werden können. Quellende Desintegrationshilfsmittel sind beispielsweise synthetische Polymere wie Polyvinylpyrrolidon (PVP) oder natürliche Polymere bzw. modifizierte Naturstoffe wie Cellulose und Stärke und ihre Derivate, Alginate oder Casein-Derivate.

Bevorzugt werden Desintegrationshilfsmittel in Mengen von 0,5 bis 10 Gew.-%, vorzugsweise 3 bis 7 Gew.-% und insbesondere 4 bis 6 Gew.-%, jeweils bezogen auf das Gesamtgewicht des desintegrationshilfsmittelhaltigen Mittels, eingesetzt.

Als bevorzugte Desintegrationsmittel werden im Rahmen der vorliegenden Erfindung Desintegrationsmittel auf Cellulosebasis eingesetzt, so daß bevorzugte Wasch- und Reinigungsmittelzusammensetzungen ein solches Desintegrationsmittel auf Cellulosebasis in Mengen von 0,5 bis 10 Gew.-%, vorzugsweise 3 bis 7 Gew.-% und insbesondere 4 bis 6 Gew.-% enthalten. Reine Cellulose weist die formale Bruttozusammensetzung (C₆H₁₀O₅)ₙ auf und stellt formal betrachtet ein β-1,4-Polyacetal von Cellobiose dar, die ihrerseits aus zwei Molekülen Glucose aufgebaut ist. Geeignete Cellulosen bestehen dabei aus ca. 500 bis 5000 Glucose-Einheiten und haben demzufolge durchschnittliche Molmassen von 50.000 bis 500.000. Als Desintegrationsmittel auf Cellulosebasis verwendbar sind im Rahmen der vorliegenden Erfindung auch Cellulose-Derivate, die durch polymeranaloge Reaktionen aus Cellulose erhältlich sind. Solche chemisch modifizierten Cellulosen umfassen dabei beispielsweise Produkte aus Veresterungen bzw. Veretherungen, in denen Hydroxy-Wasserstoffatome substituiert wurden. Aber auch Cellulosen, in denen die Hydroxy-Gruppen gegen funktionelle Gruppen, die nicht über ein Sauerstoffatom gebunden sind, ersetzt wurden, lassen sich als Cellulose-Derivate einsetzen. In die Gruppe der Cellulose-Derivate fallen beispielsweise Alkalicellulosen, Carboxymethylcellulose (CMC), Celluloseester und -ether sowie Aminocellulosen. Die genannten Cellulosederivate werden vorzugsweise nicht allein als Desintegrationsmittel auf Cellulosebasis eingesetzt, sondern in Mischung mit Cellulose verwendet. Der Gehalt dieser Mischungen an Cellulosederivaten beträgt vorzugsweise unterhalb 50 Gew.-%, besonders bevorzugt unterhalb 20 Gew.-%, bezogen auf das Desintegrationsmittel auf Cellulosebasis. Besonders bevorzugt wird als Desintegrationsmittel auf Cellulosebasis reine Cellulose eingesetzt, die frei von Cellulosederivaten ist.

Die als Desintegrationshilfsmittel eingesetzte Cellulose wird vorzugsweise nicht in feinteiliger Form eingesetzt, sondern vor dem Zumischen zu den zu verpressenden Vorgemischen in eine gröbere Form überführt, beispielsweise granuliert oder kompaktiert. Die Teilchengrößen solcher Desintegrationsmittel liegen zumeist oberhalb 200 µm, vorzugsweise zu mindestens 90 Gew.-% zwischen 300 und 1600 µm und insbesondere zu mindestens 90 Gew.-% zwischen 400 und 1200 µm. Die vorstehend genannten und in den zitierten Schriften näher beschriebenen gröberen Desintegrationshilfsmittel auf Cellulosebasis sind im Rahmen der vorliegenden Erfindung bevorzugt als Desintegrationshilfsmittel einzusetzen und im Handel beispielsweise unter der Bezeichnung Arbocel^{®} TF-30-HG von der Firma Rettenmaier erhältlich.

Als weiteres Desintegrationsmittel auf Cellulosebasis oder als Bestandteil dieser Komponente kann mikrokristalline Cellulose eingesetzt werden. Diese mikrokristalline Cellulose wird durch partielle Hydrolyse von Cellulosen unter solchen Bedingungen erhalten, die nur die amorphen Bereiche (ca. 30% der Gesamt-Cellulosemasse) der Cellulosen angreifen und vollständig auflösen, die kristallinen Bereiche (ca. 70%) aber unbeschadet lassen. Eine nachfolgende Desaggregation der durch die Hydrolyse entstehenden mikrofeinen Cellulosen liefert die mikrokristallinen Cellulosen, die Primärteilchengrößen von ca. 5 µm aufweisen und beispielsweise zu Granulaten mit einer mittleren Teilchengröße von 200 µm kompaktierbar sind.

Im Rahmen der vorliegenden Erfindung bevorzugte Desintegrationshilfsmittel, vorzugsweise ein Desintegrationshilfsmittel auf Cellulosebasis, vorzugsweise in granularer, cogranulierter oder kompaktierter Form, sind in den desintegrationsmittelhaltigen Mitteln in Mengen von 0,5 bis 10 Gew.-%, vorzugsweise von 3 bis 7 Gew.-% und insbesondere von 4 bis 6 Gew.-%, jeweils bezogen auf das Gesamtgewicht des desintegrationsmittelhaltigen Mittels, enthalten.

Erfindungsgemäß bevorzugt können darüber hinaus weiterhin gasentwickelnde Brausesysteme als Tablettendesintegrationshilfsmittel eingesetzt werden. Das gasentwickelnde Brausesystem kann aus einer einzigen Substanz bestehen, die bei Kontakt mit Wasser ein Gas freisetzt. Unter diesen Verbindungen ist insbesondere das Magnesiumperoxid zu nennen, das bei Kontakt mit Wasser Sauerstoff freisetzt. Üblicherweise besteht das gasfreisetzende Sprudelsystem jedoch seinerseits aus mindestens zwei Bestandteilen, die miteinander unter Gasbildung reagieren. Während hier eine Vielzahl von Systemen denk- und ausführbar ist, die beispielsweise Stickstoff, Sauerstoff oder Wasserstoff freisetzen, wird sich das in den erfindungsgemäßen Wasch- und Reinigungsmittelzusammensetzungen eingesetzte Sprudelsystem sowohl anhand ökonomischer als auch anhand ökologischer Gesichtspunkte auswählen lassen. Bevorzugte Brausesysteme bestehen aus Alkalimetallcarbonat und/oder -hydrogencarbonat sowie einem Acidifizierungsmittel, das geeignet ist, aus den Alkalimetallsalzen in wäßrige Lösung Kohlendioxid freizusetzen.

Bei den Alkalimetallcarbonaten bzw. -hydrogencarbonaten sind die Natrium- und Kaliumsalze aus Kostengründen gegenüber den anderen Salzen deutlich bevorzugt. Selbstverständlich müssen nicht die betreffenden reinen Alkalimetallcarbonate bzw. -hydrogencarbonate eingesetzt werden; vielmehr können Gemische unterschiedlicher Carbonate und Hydrogencarbonate bevorzugt sein.

Bevorzugt werden als Brausesystem 2 bis 20 Gew.-%, vorzugsweise 3 bis 15 Gew.-% und insbesondere 5 bis 10 Gew.-% eines Alkalimetallcarbonats oder -hydrogencarbonats sowie 1 bis 15, vorzugsweise 2 bis 12 und insbesondere 3 bis 10 Gew.-% eines Acidifizierungsmittels, jeweils bezogen das Gesamtgewicht des Mittels, eingesetzt.

Als Acidifizierungsmittel, die aus den Alkalisalzen in wäßriger Lösung Kohlendioxid freisetzen, sind beispielsweise Borsäure sowie Alkalimetallhydrogensulfate, Alkalimetalldihydrogenphosphate und andere anorganische Salze einsetzbar. Bevorzugt werden allerdings organische Acidifizierungsmittel verwendet, wobei die Citronensäure ein besonders bevorzugtes Acidifizierungsmittel ist. Einsetzbar sind aber auch insbesondere die anderen festen Mono-, Oligo- und Polycarbonsäuren. Aus dieser Gruppe wiederum bevorzugt sind Weinsäure, Bernsteinsäure, Malonsäure, Adipinsäure, Maleinsäure, Fumarsäure, Oxalsäure sowie Polyacrylsäure. Organische Sulfonsäuren wie Amidosulfonsäure sind ebenfalls einsetzbar. Kommerziell erhältlich und als Acidifizierungsmittel im Rahmen der vorliegenden Erfindung ebenfalls bevorzugt einsetzbar ist Sokalan^{®} DCS (Warenzeichen der BASF), ein Gemisch aus Bernsteinsäure (max. 31 Gew.-%), Glutarsäure (max. 50 Gew.-%) und Adipinsäure (max. 33 Gew.-%).

Bevorzugt sind im Rahmen der vorliegenden Erfindung Acidifizierungsmittel im Brausesystem aus der Gruppe der organischen Di-, Tri- und Oligocarbonsäuren bzw. Gemische.

### Duftstoffe

Als Parfümöle bzw. Duftstoffe können einzelne Riechstoffverbindungen, z.B. die synthetischen Produkte vom Typ der Ester, Ether, Aldehyde, Ketone, Alkohole und Kohlenwasserstoffe eingesetzt werden. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether, zu den Aldehyden z.B. die linearen Alkanale mit 8-18 C-Atomen, Citral, Citronellal, Citronellyloxyacetaldehyd, Cyclamenaldehyd, Hydroxycitronellal, Lilial und Bourgeonal, zu den Ketonen z.B. die Jonone, α-Isomethylionon und Methylcedrylketon, zu den Alkoholen Anethol, Citronellol, Eugenol, Geraniol, Linalool, Phenylethylalkohol und Terpineol, zu den Kohlenwasserstoffen gehören hauptsächlich die Terpene wie Limonen und Pinen. Bevorzugt werden jedoch Mischungen verschiedener Riechstoffe verwendet, die gemeinsam eine ansprechende Duftnote erzeugen. Solche Parfümöle können auch natürliche Riechstoffgemische enthalten, wie sie aus pflanzlichen Quellen zugänglich sind, z.B. Pine-, Citrus-, Jasmin-, Patchouly-, Rosen- oder Ylang-Ylang-Öl. Ebenfalls geeignet sind Muskateller, Salbeiöl, Kamillenöl, Nelkenöl, Melissenöl, Minzöl, Zimtblätteröl, Lindenblütenöl, Wacholderbeeröl, Vetiveröl, Olibanumöl, Galbanumöl und Labdanumöl sowie Orangenblütenöl, Neroliol, Orangenschalenöl und Sandelholzöl.

Die Duftstoffe können direkt verarbeitet werden, es kann aber auch vorteilhaft sein, die Duftstoffe auf Träger aufzubringen, die durch eine langsamere Duftfreisetzung für langanhaltenden Duft sorgen. Als solche Trägermaterialien haben sich beispielsweise Cyclodextrine bewährt, wobei die Cyclodextrin-Parfüm-Komplexe zusätzlich noch mit weiteren Hilfsstoffen beschichtet werden können.

### Farbstoffe

Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber den mit den farbstoffhaltigen Mitteln zu behandelnden Substraten wie beispielsweise Glas, Keramik, Kunststoffgeschirr oder Textilien, um diese nicht anzufärben.

### Lösungsmittel

Zu den Lösungsmitteln zählen insbesondere die nichtwässrigen organischen Lösungsmittel, wobei mit besonderem Vorzug nichtwäßrige Lösungsmittel aus der Gruppe der ein- oder mehrwertigen Alkohole, Alkanolamine oder Glykolether, sofern sie im angegebenen Konzentrationsbereich mit Wasser mischbar sind, eingesetzt werden. Vorzugsweise werden die Lösungsmittel ausgewählt aus Ethanol, n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Etheylenglykolmono-n-butylether, Diethylenglykolmethylether, Di-ethylenglykolethylether, Propylenglykolmethyl-, -ethyl- oder - propylether, Dipropylenglykolmethyl-, oder -ethylether, Methoxy-, Ethoxy- oder Butoxytriglykol, 1-Butoxyethoxy-2-propanol, 3-Methyl-3-methoxybutanol, Propylen-glykol-t-butylether sowie Mischungen dieser Lösungsmittel.

### Schauminhibitoren

Als Schauminhibitoren kommen beispielsweise Seifen, Paraffine oder Silikonöle in Betracht, die gegebenenfalls auf Trägermaterialien aufgebracht sein können. Geeignete Antiredepositionsmittel, die auch als soil repellents bezeichnet werden, sind beispielsweise nichtionische Celluloseether wie Methylcellulose und Methylhydroxypropylcellulose mit einem Anteil an Methoxygruppen von 15 bis 30 Gew.-% und an Hydroxypropylgruppen von 1 bis 15 Gew.-%, jeweils bezogen auf den nichtionischen Celluloseether sowie die aus dem Stand der Technik bekannten Polymere der Phthalsäure und/oder Terephthalsäure bzw. von deren Derivaten, insbesondere Polymere aus Ethylenterephthalaten und/oder Polyethylenglycolterephthalaten oder anionisch und/oder nichtionisch modifizierten Derivaten von diesen. Insbesondere bevorzugt von diesen sind die sulfonierten Derivate der Phthalsäure- und Terephthalsäure-Polymere.

### Optische Aufheller

Optische Aufheller (sogenannte "Weißtöner") können Wasch- oder Reinigungsmittel zugesetzt werden, um Vergrauungen und Vergilbungen von mit diesen Mitteln behandelten Textilien zu beseitigen. Diese Stoffe ziehen auf die Faser auf und bewirken eine Aufhellung und vorgetäuschte Bleichwirkung, indem sie unsichtbare Ultraviolettstrahlung in sichtbares längerwelliges Licht umwandeln, wobei das aus dem Sonnenlicht absorbierte ultraviolette Licht als schwach bläuliche Fluoreszenz abgestrahlt wird und mit dem Gelbton der vergrauten bzw. vergilbten Wäsche reines Weiß ergibt. Geeignete Verbindungen stammen beispielsweise aus den Substanzklassen der 4,4'-Diamino-2,2'-stilbendisulfonsäuren (Flavonsäuren), 4,4'-Distyrylbiphenylen, Methylumbelliferone, Cumarine, Dihydrochinolinone, 1,3-Diarylpyrazoline, Naphthalsäureimide, Benzoxazol-, Benzisoxazol- und Benzimidazol-Systeme sowie der durch Heterocyclen substituierten Pyrenderivate.

### Vergrauungsinhibitoren

Vergrauungsinhibitoren in Textilreinigungsmitteln haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise die wasserlöslichen Salze polymerer Carbonsäuren, Leim, Gelatine, Salze von Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, z.B. abgebaute Stärke, Aldehydstärken usw. Auch Polyvinylpyrrolidon ist brauchbar. Als Vergrauungsinhibitoren in den partikulären Mitteln einsetzbar sind weiterhin Celluloseether wie Carboxymethylcellulose (Na-Salz), Methylcellulose, Hydroxyalkylcellulose und Mischether wie Methylhydroxyethylcellulose, Methylhydroxypropylcellulose, Methylcarboxy-methylcellulose und deren Gemische.

### Antimikrobielle Wirkstoffe

Antimikrobielle Wirkstoffe dienen der Bekämpfung von Mikroorganismen. Hierbei unterscheidet man je nach antimikrobiellem Spektrum und Wirkungsmechanismus zwischen Bakteriostatika und Bakteriziden, Fungistatika und Fungiziden usw. Wichtige Stoffe aus diesen Gruppen sind beispielsweise Benzalkoniumchloride, Alkylarlylsulfonate, Halogenphenole und Phenolmercuriacetat, wobei auf den Einsatz dieser Mittel auch gänzlich verzichtet werden kann.

## Patentansprüche

1. Wasch- oder Reinigungsmittelportion, umfassend einen wasserlöslichen Schmelzklebstoff, enthaltend
40 bis 70 Gew.-% mindestens eines Homo- oder Copolymeren mit freien Carbonsäuregruppen auf Basis ethylenisch ungesättigter Monomere (Komponente A),
15 bis 45 Gew.-% mindestens eines wasserlöslichen oder wasserdispergierbaren Polyurethans (Komponente B) und
10 bis 45 Gew.-% mindestens einer anorganischen oder organischen Base (Komponente C), sowie 0 bis 20 Gew.-% weiterer Zusatzstoffe.

2. Wasch- oder Reinigungsmittelportion nach Anspruch 1, **dadurch gekennzeichnet, daß** der wasserlösliche Schmelzklebstoff als Komponente A ein Vinylacetat-Crotonsäure-Copolymer mit einer Säurezahl von 10 bis 200 mg KOH/g (ASTM D 974) enthält.

3. Wasch- oder Reinigungsmittelportion nach Anspruch 1 oder 2, **dadurch gekennzeichnet, daß** der wasserlösliche Schmelzklebstoff als Komponente B ein nichtionisches Polyurethan mit einer Viskosität von 500 bis 80 000 mPas bei 150°C (gemessen nach Brookfield, Thermosell, Spindel 27, ASTM D 3236-88) enthält.

4. Wasch- oder Reinigungsmittelportion nach mindestens einem der Ansprüche 1 bis 3, **dadurch gekennzeichnet, daß** der wasserlösliche Schmelzklebstoff als Komponente C ein Alkanolamin, bevorzugt ein Trialkanolamin, insbesondere bevorzugt Triethanolamin, mit 2 bis 6 C-Atomen im Alkanolrest, wobei die Länge der C-Kette in den Alkanolresten eines Moleküls gleich oder unterschiedlich sein kann, enthält.

5. Wasch- oder Reinigungsmittelportion nach mindestens einem der Ansprüche 1 bis 4, **dadurch gekennzeichnet, daß** der wasserlösliche Schmelzklebstoff bei 120 °C eine Viskosität von 1000 bis 20000 mPas (gemessen nach Brookfield, Thermosell, Spindel 27, ASTM D 3236-88) besitzt.

6. Wasch- oder Reinigungsmittelportion nach einem der Ansprüche 1 bis 5, **dadurch gekennzeichnet, daß** das Wasch- oder Reinigungsmittel einen Muldenformkörper umfaßt.

7. Wasch- oder Reinigungsmittelportion nach einem der Ansprüche 1 bis 6, **dadurch gekennzeichnet, daß** das Wasch- oder Reinigungsmittel eine wasserlösliche oder wasserdispergierbare Verpackung umfaßt.

8. Verfahren zur Herstellung einer Wasch- oder Reinigungsmittelportion, durch Verkleben mindestens eines Bestandteils der Wasch- oder Reinigungsmittelportion mit einem wasserlöslichen Schmelzklebstoffes, welcher 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe enthält.

9. Verfahren nach Anspruch 8, umfassend die Schritte
a) Herstellung eines (Mulden)-Formkörpers durch Tablettierung oder Gießen;
b) Haftende Verklebung des (Mulden)-Formkörpers mit einem weiteren Formkörper, vorzugsweise einem Kern, mittels eines wasserlöslichen Schmelzklebstoffes, welcher 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe enthält.

10. Verfahren nach Anspruch 8, umfassend die Schritte
a) Herstellung eines Muldenformkörpers durch Tablettierung oder Gießen;
b) Befüllen der Mulde des Muldenformkörpers;
c) Verschließen der Mulde durch Verkleben des Muldenformkörpers mit einem wasserlöslichen oder wasserdispergierbaren Verschlußteil mittels eines wasserlöslichen Schmelzklebstoffes, welcher 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe enthält.

11. Verfahren nach Anspruch 8, umfassend die Schritte
a) Bereitstellung eines wasserlöslichen oder wasserdispergierbaren Aufnahmebehälters;
b) Befüllen des Aufnahmebehälters mit wasch- oder reinigungsaktiven Substanzen;
c) Verschließen des Aufnahmebehälters durch haftende Verklebung des Aufnahmebehälters mit einem wasserlöslichen oder wasserdispergierbaren Verschlußteil mittels eines wasserlöslichen Schmelzklebstoffes, welcher 40 bis 70 Gew.-% mindestens eines Homo- oder Copolymeren mit freien Carbonsäuregruppen auf Basis ethylenisch ungesättigter Monomere (Komponente A), 15 bis 45 Gew.-% mindestens eines wasserlöslichen oder wasserdispergierbaren Polyurethans (Komponente B) und 10 bis 45 Gew.-% mindestens einer anorganischen oder organischen Base (Komponente C), sowie 0 bis 20 Gew.-% weiterer Zusatzstoffe enthält.

12. Verwendung eines wasserlöslichen Schmelzklebstoffes, enthaltend
40 bis 70 Gew.-% mindestens eines Homo- oder Copolymeren mit freien Carbonsäuregruppen auf Basis ethylenisch ungesättigter Monomere (Komponente A),
15 bis 45 Gew.-% mindestens eines wasserlöslichen oder wasserdispergierbaren Polyurethans (Komponente B) und
10 bis 45 Gew.-% mindestens einer anorganischen oder organischen Base (Komponente C), sowie 0 bis 20 Gew.-% weiterer Zusatzstoffe, bei der Herstellung von Wasch- oder Reinigungsmittelportionen.

13. Verwendung eines wasserlöslichen Schmelzklebstoffes, enthaltend
40 bis 70 Gew.-% mindestens eines Homo- oder Copolymeren mit freien Carbonsäuregruppen auf Basis ethylenisch ungesättigter Monomere (Komponente A),
15 bis 45 Gew.-% mindestens eines wasserlöslichen oder wasserdispergierbaren Polyurethans (Komponente B) und
10 bis 45 Gew.-% mindestens einer anorganischen oder organischen Base (Komponente C), sowie 0 bis 20 Gew.-% weiterer Zusatzstoffe, zum Verkleben von Wasch- oder Reinigungsmitteln, insbesondere zur Verklebung von festen Wasch- oder Reinigungsmitteln miteinander, zur Verklebung von Wasch- oder Reinigungsmittelformkörpern mit wasserlöslichen oder wasserdispergierbaren Verpackungsmaterialien, insbesondere wasserlöslichen oder wasserdispergierbaren Folien, spritzgegossenen oder flaschengeblasenen Teilen oder zur Verklebung und Versiegelung von mit Wasch- oder Reinigungsmitteln befüllten wasserlöslichen oder wasserdispergierbaren tiefgezogenen, spritzgegossenen oder flaschengeblasenen Aufnahmebehältern.

## Claims

1. Laundry detergent or cleaning composition portion comprising a water-soluble melt adhesive comprising
from 40 to 70% by weight of at least one homo- or copolymer having free carboxylic acid groups based on ethylenically unsaturated monomers (component A),
from 15 to 45% by weight of at least one water-soluble or water-dispersible polyurethane (component B) and
from 10 to 45% by weight of at least one inorganic or organic base (component C),
and also from 0 to 20% by weight of further additives.

2. Laundry detergent or cleaning composition portion according to Claim 1, **characterized in that** the water-soluble melt adhesive comprises, as component A, a vinyl acetate-crotonic acid copolymer having an acid number of from 10 to 200 mg KOH/g (ASTM D 974).

3. Laundry detergent or cleaning composition portion according to Claim 1 or 2, **characterized in that** the water-soluble melt adhesive comprises, as component B, a nonionic polyurethane having a viscosity of from 500 to 80 000 mPas at 150°C (measured to Brookfield, Thermosell, spindle 27,

4. Laundry detergent or cleaning composition portion according to at least one of Claims 1 to 3, **characterized in that** the water-soluble melt adhesive comprises, as component C, an alkanolamine, preferably a trialkanolamine, especially preferably triethanolamine, having from 2 to 6 carbon atoms in the alkanol radical, where the length of the carbon chain in the alkanol radicals of one molecule may be the same or different.

5. Laundry detergent or cleaning composition portion according to at least one of Claims 1 to 4, **characterized in that** the water-soluble melt adhesive has a viscosity of from 1000 to 20 000 mPas (measured to Brookfield, Thermosell, spindle 27, ASTM D 3236-88) at 120°C.

6. Laundry detergent or cleaning composition portion according to one of Claims 1 to 5, **characterized in that** the laundry detergent or cleaning composition comprises a depression tablet.

7. Laundry detergent or cleaning composition portion according to one of Claims 1 to 6, **characterized in that** the laundry detergent or cleaning composition comprises a water-soluble or water-dispersible packaging.

8. Process for producing a laundry detergent or cleaning composition portion by adhesive-bonding at least one constituent of the laundry detergent or cleaning composition portion with a water-soluble melt adhesive which comprises from 40 to 70% by weight of at least one homo- or copolymer having free carboxylic acid groups based on ethylenically unsaturated monomers (component A), from 15 to 45% by weight of at least one water-soluble or water-dispersible polyurethane (component B) and from 10 to 45% by weight of at least one inorganic or organic base (component C), and also from 0 to 20% by weight of further additives.

9. Process according to Claim 8, comprising the steps of
a) production of a (depression) tablet by tableting or casting;
b) adhesive-bonding of the (depression) tablet with a further tablet, preferably a core, by means of a water-soluble melt adhesive which comprises from 40 to 70% by weight of at least one homo- or copolymer having free carboxylic acid groups based on ethylenically unsaturated monomers (component A), from 15 to 45% by weight of at least one water-soluble or water-dispersible polyurethane (component B) and from 10 to 45% by weight of at least one inorganic or organic base (component C), and also from 0 to 20% by weight of further additives.

10. Process according to Claim 8, comprising the steps of
a) production of a depression tablet by tableting or casting;
b) filling the depression of the depression tablet;
c) closing the depression by adhesive-bonding the depression tablet with a water-soluble or water-dispersible closure part by means of a water-soluble melt adhesive which comprises from 40 to 70% by weight of at least one homo- or copolymer having free carboxylic acid groups based on ethylenically unsaturated monomers (component A), from 15 to 45% by weight of at least one water-soluble or water-dispersible polyurethane (component B) and from 10 to 45% by weight of at least one inorganic or organic base (component C), and also from 0 to 20% by weight of further additives.

11. Process according to Claim 8, comprising the steps of
a) providing a water-soluble or water-dispersible receiving vessel;
b) filling the receiving vessel with washing- or cleaning-active substances;
c) closing the receiving vessel by adhesive-bonding the receiving vessel with a water-soluble or water-dispersible closure part by means of a water-soluble melt adhesive which comprises from 40 to 70% by weight of at least one homo- or copolymer having free carboxylic acid groups based on ethylenically unsaturated monomers (component A), from 15 to 45% by weight of at least one water-soluble or water-dispersible polyurethane (component B) and from 10 to 45% by weight of at least one inorganic or organic base (component C), and also from 0 to 20% by weight of further additives.

12. Use of a water-soluble melt adhesive comprising from 40 to 70% by weight of at least one homo- or copolymer having free carboxylic acid groups based on ethylenically unsaturated monomers (component A),
from 15 to 45% by weight of at least one water-soluble or water-dispersible polyurethane (component B) and
from 10 to 45% by weight of at least one inorganic or organic base (component C),
and also from 0 to 20% by weight of further additives in the production of laundry detergents or cleaning composition portions.

13. Use of a water-soluble melt adhesive comprising from 40 to 70% by weight of at least one homo- or copolymer having free carboxylic acid groups based on ethylenically unsaturated monomers (component A),
from 15 to 45% by weight of at least one water-soluble or water-dispersible polyurethane (component B) and
from 10 to 45% by weight of at least one inorganic or organic base (component C),
and also from 0 to 20% by weight of further additives for adhesive-bonding laundry detergents or cleaning compositions, especially for adhesive-bonding solid laundry detergents or cleaning compositions with one another, for adhesive-bonding laundry detergent or cleaning composition tablets with water-soluble or water-dispersible packaging materials, especially water-soluble or water-dispersible films, injection-molded or bottle-blown parts or for adhesive-bonding and sealing water-soluble or water-dispersible thermoformed, injection-molded or bottle-blown receiving vessels filled with laundry detergents or cleaning compositions.

## Revendications

1. Portion d'agent de lavage ou de nettoyage, comprenant un adhésif fusible soluble dans l'eau, contenant
à concurrence de 40 à 70 % en poids, au moins un homopolymère ou un copolymère contenant des groupes d'acides carboxyliques libres, à base de monomères à insaturation éthylénique (composant A) ;
à concurrence de 15 à 45 % en poids, au moins un polyuréthane soluble dans l'eau ou apte à être dispersé dans l'eau (composant B) et
à concurrence de 10 à 45 % en poids, au moins une base inorganique ou organique (composant C) ;
et à concurrence de 0 à 20 % en poids, d'autres additifs.

2. Portion d'agent de lavage ou de nettoyage selon la revendication 1, **caractérisée en ce que** l'adhésif fusible soluble dans l'eau contient, à titre de composant A, un copolymère d'acétate de vinyle-acide crotonique possédant un indice d'acide de 10 à 200 mg KOH/g (norme ASTM D 974).

3. Portion d'agent de lavage ou de nettoyage selon la revendication 1 ou 2, **caractérisée en ce que** l'adhésif fusible soluble dans l'eau contient, à titre de composant B, un polyuréthane non ionique possédant une viscosité de 500 à 80.000 mPas à 150 °C (mesurée conformément à Brookfield, Thermosell, broche 27, norme ASTM D 3236-88).

4. Portion d'agent de lavage ou de nettoyage selon au moins une des revendications 1 à 3, **caractérisée en ce que** l'adhésif fusible soluble dans l'eau contient, à titre de composant C, une alcanolamine, de préférence une trialcanolamine, de manière particulièrement préférée de la triéthanolamine, contenant de 2 à 6 atomes de carbone dans le radical alcanol, la longueur de la chaîne carbonée dans les radicaux alcanol d'une molécule pouvant être identique ou différente.

5. Portion d'agent de lavage ou de nettoyage selon au moins une des revendications 1 à 4, **caractérisée en ce que** l'adhésif fusible soluble dans l'eau possède, à 120 °C une viscosité de 1.000 à 20.000 mPas (mesurée conformément à Brookfield, Thermosell, broche 27, norme ASTM D 3236-88).

6. Portion d'agent de lavage ou de nettoyage selon l'une quelconque des revendications 1 à 5, **caractérisée en ce que** l'agent de lavage ou de nettoyage comprend un corps moulé comportant une cavité.

7. Portion d'agent de lavage ou de nettoyage selon l'une quelconque des revendications 1 à 6, **caractérisée en ce que** l'agent de lavage ou de nettoyage comprend un conditionnement soluble dans l'eau ou apte à être dispersé dans l'eau.

8. Procédé pour la fabrication d'une portion d'agent de lavage ou de nettoyage, par collage d'au moins un constituant de la portion de lavage ou de nettoyage avec un adhésif fusible soluble dans l'eau qui contient à concurrence de 40 à 70 % en poids, au moins un homopolymère ou un copolymère contenant des groupes d'acides carboxyliques libres, à base de monomères à insaturation éthylénique (composant A), à concurrence de 15 à 45 % en poids, au moins un polyuréthane soluble dans l'eau ou apte à être dispersé dans l'eau (composant B) et à concurrence de 10 à 45 % en poids, au moins une base inorganique ou organique (composant C), et à concurrence de 0 à 20 % en poids, d'autres additifs.

9. Procédé selon la revendication 8, comprenant les étapes :
a) fabriquer un corps moulé (muni d'une cavité) par transformation en comprimés ou par versage ;
b) coller par adhérence le corps moulé (muni d'une cavité) à un autre corps moulé, de préférence un noyau, à l'aide d'un adhésif fusible soluble dans l'eau qui contient à concurrence de 40 à 70 % en poids, au moins un homopolymère ou un copolymère contenant des groupes d'acides carboxyliques libres, à base de monomères à insaturation éthylénique (composant A), à concurrence de 15 à 45 % en poids, au moins un polyuréthane soluble dans l'eau ou apte à être dispersé dans l'eau (composant B) et à concurrence de 10 à 45 % en poids, au moins une base inorganique ou organique (composant C), et à concurrence de 0 à 20 % en poids, d'autres additifs.

10. Procédé selon la revendication 8, comprenant les étapes :
a) fabriquer un corps moulé muni d'une cavité par transformation en comprimés ou par versage ;
b) remplir la cavité du corps moulé muni d'une cavité ;
c) fermer la cavité par collage du corps moulé muni d'une cavité avec un élément de fermeture soluble dans l'eau ou apte à être dispersé dans l'eau en utilisant un adhésif fusible soluble dans l'eau qui contient à concurrence de 40 à 70 % en poids, au moins un homopolymère ou un copolymère contenant des groupes d'acides carboxyliques libres, à base de monomères à insaturation éthylénique (composant A), à concurrence de 15 à 45 % en poids, au moins un polyuréthane soluble dans l'eau ou apte à être dispersé dans l'eau (composant B) et à concurrence de 10 à 45 % en poids, au moins une base inorganique ou organique (composant C), et à concurrence de 0 à 20 % en poids, d'autres additifs.

11. Procédé selon la revendication 8, comprenant les étapes :
a) préparer un récipient de réception soluble dans l'eau ou apte à être dispersé dans l'eau ;
b) remplir le récipient de réception avec des substances actives de lavage ou de nettoyage ;
c) fermer le récipient de réception par collage adhésif du récipient de réception avec un élément de fermeture soluble dans l'eau ou apte à être dispersé dans l'eau en utilisant un adhésif fusible soluble dans l'eau qui contient à concurrence de 40 à 70 % en poids, au moins un homopolymère ou un copolymère contenant des groupes d'acides carboxyliques libres, à base de monomères à insaturation éthylénique (composant A), à concurrence de 15 à 45 % en poids, au moins un polyuréthane soluble dans l'eau ou apte à être dispersé dans l'eau (composant B) et à concurrence de 10 à 45 % en poids, au moins une base inorganique ou organique (composant C), et à concurrence de 0 à 20 % en poids, d'autres additifs.

12. Utilisation d'un adhésif fusible soluble dans l'eau, contenant :
à concurrence de 40 à 70 % en poids, au moins un homopolymère ou un copolymère contenant des groupes d'acides carboxyliques libres, à base de monomères à insaturation éthylénique (composant A) ;
à concurrence de 15 à 45 % en poids, au moins un polyuréthane soluble dans l'eau ou apte à être dispersé dans l'eau (composant B) et
à concurrence de 10 à 45 % en poids, au moins une base inorganique ou organique (composant C) ;
et à concurrence de 0 à 20 % en poids, d'autres additifs ; lors de la fabrication de portions d'agents de lavage ou de nettoyage:

13. Utilisation d'un adhésif fusible soluble dans l'eau, contenant
à concurrence de 40 à 70 % en poids, au moins un homopolymère ou un copolymère contenant des groupes d'acides carboxyliques libres, à base de monomères à insaturation éthylénique (composant A);
à concurrence de 15 à 45 % en poids, au moins un polyuréthane soluble dans l'eau ou apte à être dispersé dans l'eau (composant B) et
à concurrence de 10 à 45 % en poids, au moins une base inorganique ou organique (composant C) ;
et à concurrence de 0 à 20 % en poids, d'autres additifs ; pour le collage d'agents de lavage ou de nettoyage, en particulier pour le collage réciproque d'agents solides de lavage ou de nettoyage, pour le collage de corps moulés d'agents de lavage ou de nettoyage avec des matières de conditionnement solubles dans l'eau ou aptes à être dispersées dans l'eau, en particulier des feuilles solubles dans l'eau ou aptes à être dispersées dans l'eau, des éléments obtenus par moulage par injection ou par soufflage-extrusion ou encore pour le collage et le scellage de récipients de réception solubles dans l'eau ou aptes à être dispersés dans l'eau que l'on obtient par emboutissage, par moulage par injection ou par extrusion-soufflage, remplis avec des agents de lavage ou de nettoyage.
